# EUROPEAN PATENT SPECIFICATION

(11) **EP 2 077 524 B1**
(45) Date of publication and mention of the grant of the patent: **17.08.2016**
(21) Application number: 08000162.1
(22) Date of filing: 07.01.2008
(51) Int. Cl.: G06Q 30/00, H04L 29/08, H04L 7/00

(54) **Push-pull based content delivery system**
Gegentaktbasiertes Inhaltsbereitstellungssystem
Système de fourniture de contenu à base de push-pull

(43) Date of publication of application: 08.07.2009
(73) Proprietor: Voddler Group AB, 115 41 Stockholm (SE)
(72) Inventor: Bergstrom, Mattias, 11735 Stockholm (SE); Davidsson, Hans, 12343 Farsta (SE); Zhou, Yidan, Chaoyang District Beijing 100022 (CN)
(74) Representative: Awapatent AB

(56) References cited:
- EP-A- 1 633 112
- WO-A-2006/131909
- WO-A-2007/021725
- WO-A-2008/002295
- US-A1- 2002 120 925
- US-A1- 2004 114 605
- US-A1- 2005 005 308
- US-A1- 2005 262 246
- US-A1- 2007 174 471
- LEI ZHANG ED - ZHANG KUN ET AL: "Study of the location awareness in bitTorrent-like networks" COMPUTER-AIDED INDUSTRIAL DESIGN AND CONCEPTUAL DESIGN, 2006. CAIDCD & APOS;06. 7TH INTERNATIONAL CONFERENCE ON, IEEE, PI, 1 November 2006 (2006-11-01), pages 1-7, XP031057957 ISBN: 978-1-4244-0683-8

## Description

### Field of the Invention

The present invention relates generally to distributed networks for delivery of digital content. More specifically, dynamic content packaging and load balancing systems and methods are disclosed for optimizing quality of service for various content-delivery applications including "video on demand."

### Background of the Invention

As computer networks have evolved, so too have the applications running on these networks, generating an ever-increasing demand for network resources (including processing power, data storage and network bandwidth). In addition to enabling the sharing of these network resources, larger and more diverse networks such as the Internet have spawned a variety of applications that require differing architectural approaches to handle the differing demands these applications place on available network resources. Virtually all Internet applications employ some form of client-server architecture, ranging from a purely centralized approach - in which servers provide the bulk of the network resources and relatively "dumb" clients require fairly minimal resources - to a purely distributed "peer-to-peer" (P2P) approach - in which all nodes are "smart" clients and servers, equally sharing network resources. Most applications, of course, employ architectures that fall somewhere in between these two extremes.

Yet, the Internet itself has evolved into a heavily distributed network in which vast arrays of interconnected routers enable information to be transferred fairly quickly among virtually all network nodes. As a result, many applications (even those that appear well-suited to a centralized architecture) simply leverage the Internet's inherently distributed architecture to alleviate an otherwise heavy demand on network resources.

For example, an application such as web browsing appears, in the first instance, to require a centralized approach. Web servers supply all of the content, and must distribute any portion of that content upon demand to any web client that makes a request. Yet, by dividing the content into smaller packets and leveraging IP-based protocols, large numbers of relatively small files can be transferred across many different routes to multiple clients rather quickly. Web servers still must provide sufficient "centralized" bandwidth to handle large numbers of requests; but the distributed nature of the Internet itself provides much of the solution. Moreover, other distributed mechanisms can be employed to "balance the load," such as replicating content across multiple strategically located web servers, and caching frequently requested content at "edge servers" that are "nearer" requesting clients.

Other popular applications, such as "instant messaging" (IM) and music file sharing, are more distributed by their nature, and have generated large P2P communities. Unlike centralized architectures, in which the bulk of network resources are provided by central servers "far" from their end user clients, P2P architectures distribute network resources among the very clients that consume them - whether such resources involve processing (e.g., the SETI project), data storage (e.g., music file sharing) or network bandwidth (e.g., IM).

Certain applications, however, such as real-time delivery of audio and video, and "video on demand" (VOD) in particular, have thus far not been susceptible to purely distributed P2P architectural solutions, in large part due to their centralized nature and enormous network resource requirements. For example, VOD is, by its nature, a centralized application more akin to web browsing than to instant messaging or music file sharing. Large amounts of content (e.g., movies and television broadcasts) must be delivered upon demand to any client that makes a request.

VOD places heavy demands on network resources not only on a cumulative basis (as large numbers of clients simultaneously request different content), but for individual requests as well. For example, delivery of a single movie to an arbitrary client "on demand" requires a fair amount of network bandwidth. Moreover, such delivery must be both stable and reliable. It must start promptly and continue without degradation of audio and/or video quality over time. In short, it must maintain a sufficiently high "quality of service" (QoS).

Due to the extensive demands VOD places on network storage and bandwidth, in particular, existing solutions have relied upon costly enterprise-level dedicated servers having extensive storage capacity and network bandwidth sufficient to enable delivery of media content to large numbers of users. Such solutions also have employed relatively complex streaming and multicast protocols in an effort to alleviate heavy network bandwidth demands. These solutions have thus been relatively centralized in nature - i.e., attempting to enable large amounts of content to be delivered from one point (a central server) to multiple points (clients). Although multiple servers can be "distributed" (i.e., replicated) in an effort to balance the load, they each need to maintain large amounts of content, wasting significant additional network bandwidth in order to synchronize this content among these servers. These existing solutions simply do not scale well, as they tend to exacerbate, rather than alleviate, the Internet's inherent network bandwidth limitations.

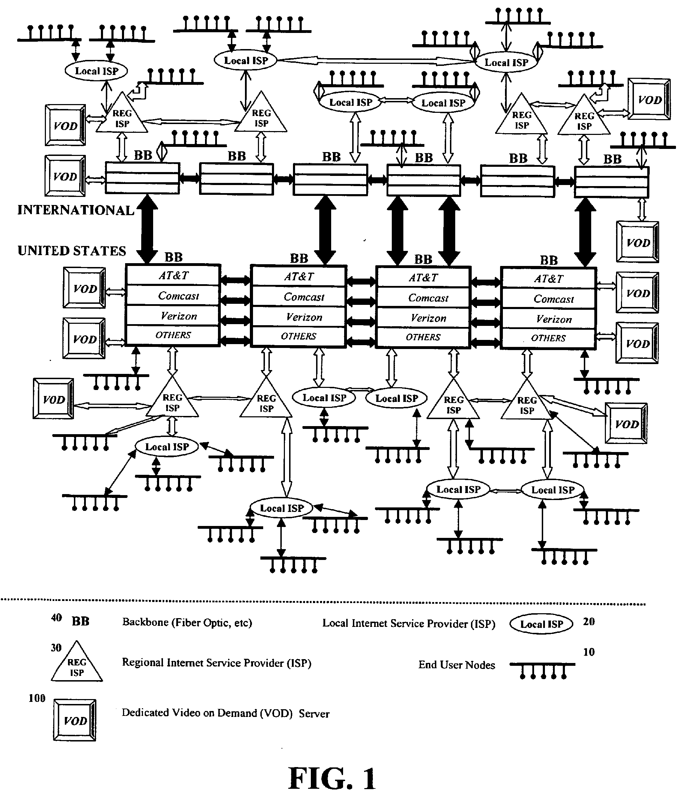

**FIG. 1** illustrates certain aspects of the Internet's existing global physical infrastructure (i.e., interconnected routers and client/server computers), such as typical end-user client nodes **10,** often interconnected via Local Internet Service Providers (LOCAL ISPs) **20** having relatively higher-speed connections to one another and to Regional Internet Service Providers (REG ISPs) **30,** which have still higher-speed (and more stable/reliable) connections to one another and to large Backbone (BB) routers **40** that are typically interconnected via fiber optic and other extremely high-speed connections to form the Internet's relatively stable and reliable core. As is also illustrated in **FIG. 1****,** nodes can obtain higher-speed and more stable/reliable connectivity (albeit at a significant cost) by connecting "nearer" or more directly to BB routers **40** or those of larger REG ISPs **30.**

Existing dedicated VOD Servers **100** are thus shown connected to these relatively higher-speed REG ISPs **30** and BB routers **40.** This provides greater and more stable/reliable network bandwidth capacity to service requests from large numbers of end-user client nodes **10.** As alluded to above, however, even with hundreds of such dedicated VOD Servers **100,** complex streaming and multicast protocols are still necessary to endeavor to handle the extensive network bandwidth demands required to service large numbers of simultaneous requests for different content.

For example, although many clients in a given geographic area might request the same popular movie during "prime time," each such request will likely occur at a slightly different time, making it extremely difficult to exploit these "common" requests to reduce overall network bandwidth. Not only does this on-demand nature of VOD applications exacerbate the network bandwidth problem exponentially; but maintaining a consistently high level of QoS becomes extremely difficult.

While some clients may be located nearer REG ISPs **30** and BB routers **40,** many others will have relatively lower-speed and less stable/reliable connections, and will thus experience a lower effective QoS. This results from the fact that existing VOD architectures endeavor to provide a higher QoS not by monitoring and managing actual traffic, but by employing complex streaming and multicast protocols which do not account for the significant network bandwidth differences inherent in the Internet's physical infrastructure.

Moreover, as also noted above, adding more dedicated VOD Servers **100** is often ineffective, due to the significant additional network bandwidth generated to synchronize content among these additional servers. Continuing to add dedicated VOD Servers **100** might not only be prohibitively expensive, but might also eventually flood the Internet with database synchronization traffic.

VOD thus provides a prime example of the problem of providing access to large amounts of digital content over the Internet while maintaining a high QoS. To put this problem into perspective in the context of a VOD application, consider the roughly 50,000 "popular" movies that VOD clients might desire to access on demand at any given time (in addition to the myriad assortment of less popular movies, television broadcasts and reruns/archives, and non-commercial and other potentially desirable content). Assuming a two-hour movie requires approximately 4GB of storage (e.g., at 480p standard-definition resolution with MPEG2 compression, or at 720p high-definition resolution using newer MPEG4 compression techniques), a single copy of just these 50,000 movies would require approximately 200TB of storage capacity (an expensive proposition even at today's falling rates for data storage). Estimates of the number of current broadband users are already in the hundreds of millions (measured against a world population of over 6 billion), with rapid growth projected in the near term. Even with hundreds of dedicated servers strategically located near the largest fiber optic backbones (roughly four or five dozen in the US alone), each server would have to support on-demand requests from tens if not hundreds of thousands of users. During peak times, significant percentages of such users (say thousands of users) might request different content (or the same content at slightly different times), which would require thousands of audio/video streams, each of which must maintain a consistent and reliable throughput of approximately 20 MB/minute (or twice the speed of a T1 line).

In short, VOD applications present daunting technical challenges, which might explain why existing VOD "solutions" have yet to achieve any significant level of commercial success. In fact, many commercial efforts seem to have focused less on solving the technical problems than on redefining the nature of VOD applications to make these problems appear more manageable. While some solutions simply ignore QoS, others significantly reduce the domain of available content, and still others provide "time slots" instead of true on-demand functionality.

Yet, providing access to large amounts of digital content over the Internet while maintaining a high QoS is not an intractable problem. It does, however, require a recognition that centralized solutions to applications such as VOD simply do not scale well, and that IP-based protocols such as IP4 do not inherently provide QoS. What is needed is an intelligent method of monitoring and managing network traffic so as to provide "network-based" QoS for an application such as VOD by leveraging the Internet's inherently distributed architecture. To do so, enormous storage and network bandwidth resources must be distributed "closer" to the end-user clients that consume them if true on-demand functionality is to be realized within the Internet's existing infrastructure.

It should also be noted that many of the same issues with respect to IP-based networks such as the Internet apply equally to cable television networks, though instead of using the IP protocol in both directions, content would be delivered to clients by modulating a digital signal over a carrier frequency (e.g., using QAM64 modulation), with the return path (e.g., for requests) employing a protocol such as the "Real Time Streaming Protocol" (RTSP). CATV networks inherently face the same limited network bandwidth and scalability problems as does the Internet. If anything, they are even less susceptible to distributed solutions absent extensive modifications of existing network infrastructure.

### Summary of the Invention

The present invention involves a number of dynamic content packaging and load balancing systems and methods designed to enable the delivery of large amounts of linear digital content over the Internet while still maintaining a high QoS. Various embodiments of this invention are disclosed in the context of VOD applications; but the underlying concepts are applicable to a host of other content-delivery systems and applications, particularly those which benefit from digital content being "closer" to the ultimate users of such content.

In one embodiment, portions of digital content are distributed to selected network peers to enhance QoS when such content is subsequently retrieved. In a further embodiment, indexes of the locations of such portions of digital content are generated and maintained, and then utilized to further enhance QoS during the retrieval of such content. In yet another embodiment, communications among network peers are monitored to facilitate these processes of distributing and retrieving such digital content while still maintaining a high QoS.

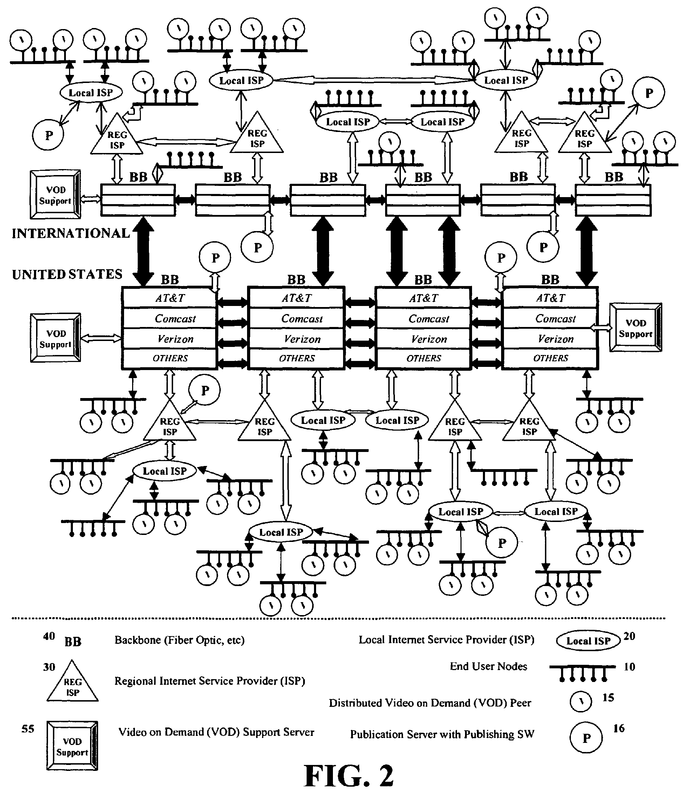

**FIG. 2** illustrates a conceptual VOD system embodiment of the present invention utilizing the Internet as the network platform. As noted above with reference to **FIG. 1****,** the Internet's existing global physical infrastructure includes a core of interconnected BB routers **40,** as well as REG ISPs **30,** LOCAL ISPs **20,** and end-user client nodes **10.** Instead of deploying dedicated VOD servers, this embodiment of the present invention deploys "VOD peers" **15** (e.g., set-top boxes, PCs, game machines, mobile phones and various other client devices) at end-user client locations (e.g., homes, as well as other destinations). In this manner, the network resources required to implement VOD functionality (including storage, network bandwidth, and processing) are truly distributed among the VOD peers **15** that will be consuming them in order to access and view the content on demand.

It should be noted that a relatively small number of dedicated "VOD Support Servers" **55,** also shown in **FIG. 2****,** are provided for ancillary purposes (such as initialization and crash recovery, software updates, fallback communications and optional registration), and not necessarily for the primary functions of distributing and delivering content to end-user VOD peers **15.** In one embodiment (discussed in greater detail below), four or five VOD Support Servers **55** suffice to provide "most trusted" functions for VOD peers **15** throughout the entire global Internet.

VOD Support Servers **55** also could be used as "seed" servers to simulate groups of VOD peers **15** in a particular area until sufficient numbers of such VOD peers **15** are deployed. As such VOD peers **15** are deployed, these "seed" servers would gradually become superfluous and could be redeployed elsewhere or utilized for other purposes.

Publication Servers **16** are also provided by any entity desiring to publish (i.e., supply) content to be made available on demand to VOD peers **15.** In one embodiment, these servers comprise personal computers executing VOD Publishing Software (not shown) designed to prepare content for distribution within the VOD system.

VOD peers **15** include functionality to display on demand a wide variety of digital media "Content Objects," including movies, television program episodes, rebroadcast sporting events, such as NFL football games, and even individuals' home movie clips. As will be discussed below, the publication of one or more Content Objects onto the network constitutes an "Event."

In one embodiment of the VOD system of the present invention, VOD peers **15** are provided with virtually instant access to Content Objects. Although no system can guarantee instant access to every potential Content Object, various QoS levels can be established. In one embodiment, most Content Objects (e.g., including the roughly 50,000 most popular movies) can be accessed almost instantaneously (T0) - e.g., starting within a few seconds on average (say a range of ½ second to 12 seconds) from the user's request. Some Content Objects may not be as readily available to particular VOD peers **15** (e.g., due to their "proximity" to such Content Objects), and may not start for a minute or longer (T1) - e.g., within a range of 30 seconds to 5 minutes). Still other Content Objects may not even be available on the system when requested (T2), though such request may trigger a "pre-order" resulting in as much as a 24-hour delay before being delivered to and stored on the requesting user's VOD peer **15.**

In one embodiment, VOD peers **15** are client devices having 10 GB of storage, one portion of which (typically about 4GB) is allocated for playback of requested Content Objects, with the remaining 6 GB available for "sharing" of Content Objects among other "nearby" VOD peers **15.** As noted above, VOD applications require extensive storage capacity, a network resource constraint that can be alleviated by distributing storage of Content Objects among various VOD peers **15.**

Content Objects are thus formatted into component "Packages" that are optimized for instant delivery. As will be discussed below, one goal is to locate the "supply" of Content Objects as "close" as possible to the VOD peers **15** that are most likely to "demand" access to such Content Objects. Package size and location are adjusted dynamically to minimize access time. For example, in one embodiment, average Package size is about 30 seconds of video, with smaller Packages (say 10 seconds) reserved for earlier portions of a Content Object (i.e., to enable users to start a movie while subsequent packages are being retrieved), and larger Packages (say 2 minutes) utilized for remaining portions. Package sizes, locations and even number of copies, may also be adjusted dynamically, e.g., depending upon actual measured delivery times, patterns of requests, and other factors.

Instead of deploying hundreds of terabytes of storage at centralized dedicated servers, such storage is effectively distributed among tens or hundreds of thousands (perhaps even millions) of VOD peers **15.** By intelligently distributing Packages among VOD peers **15,** requests for Content Objects can be fulfilled relatively quickly by accessing Packages simultaneously from many different nearby VOD peers **15.**

Instead of "streaming" Content Objects from one node to another (e.g., utilizing standard streaming and multicast protocols), individual Packages are accessed simultaneously from many different VOD peers **15** via standard IP-based transfer protocols. Thus, rather than endeavor to implement QoS within a streaming protocol, QoS may effectively be built into the network itself by utilizing distributed software on VOD peers **15** to monitor various network traffic statistics (e.g., access times) that can be used both for distributing Packages of Content Objects prior to VOD peer **15** requests, and for accessing these Packages in response to such requests.

As will be discussed in greater detail below, QoS is effectively built into the network itself, and becomes an inherent and integral component of this network of VOD peers. This "Network-based QoS" or "NQoS" becomes the foundation upon which VOD and other applications can be constructed.

By "pushing" Packages of a Content Object (i.e., distributing them among VOD peers **15**) upon the Content Object's "publication" to the network, such Packages may subsequently be "pulled" (i.e., retrieved from such VOD peers **15**) upon request of any VOD peer **15.** A number of methods are employed in implementing this "push-pull" concept to enable Packages to be Pushed within "proximity" of VOD peers **15** most likely to subsequently Pull them on demand.

Unlike prior art VOD systems, in which content is stored on "edge servers" awaiting requests, Content Objects of the present invention are Pushed among VOD peers **15** by attempting to predict which content (and how many copies) should be made available to which VOD peers **15.** VOD peers **15** can then make requests to Pull such content based upon information as to which Content Objects are available and where they are located. For example, the user interface would have sufficient information to indicate to a particular user whether a desired movie is available "immediately" or might require some delay.

One such concept which facilitates this Push-Pull mechanism is that of network "Clusters" or groups of relatively "close" VOD peers **15** that share a relatively high QoS with one another. For example, although it is constantly changing, much of the Internet's physical infrastructure can be obtained from publicly available information. Such information, along with IP addresses and geographic information obtained from standard IP location services, can be utilized initially to establish such Clusters of VOD peers **15.** Transferring information among VOD peers **15** within these Clusters provides for less-restricting bottlenecks with a lower probability of packet loss (as compared, for example, to longer paths). VOD peers **15** within a particular Cluster can be considered "closer," or within a smaller "Internet distance" from one another, as compared to VOD peers **15** across Clusters.

By providing distributed "Cluster Controller" software on each VOD peer **15,** various network traffic statistics can be monitored dynamically over time. For example, in addition to known bandwidth and other aspects of connectivity (e.g., number of hops between nodes), ping times can be measured periodically, as can reliability of connections over longer periods of time. By maintaining such information in a distributed manner (e.g., with VOD peers **15** knowing only about a small number of their neighbors), this information can be propagated among virtually all VOD peers **15.** Cluster Controllers are, in essence, content-balancing distributed servers.

Moreover, levels of "trust" can also be established, such that VOD peers **15** whose connectivity exhibits greater reliability over time can be designated as "more trusted." VOD peers **15** might then communicate not only with neighboring nodes of equal or lower "Trust Levels," but also with a smaller number of more trusted VOD peers **15.**

These Trust Levels may be utilized to designate relatively more trusted VOD peers **15** within a Cluster that are responsible for higher-level management functions, such as maintaining Cluster membership and managing "inter-Cluster" and "Super-Cluster" (i.e., a larger superset Cluster) communication. More trusted VOD peers **15** might be relied upon, for example, when other nodes are unavailable. The Cluster Controllers within such more trusted VOD peers **15** can be considered virtual "Super-Cluster Controllers" in that they handle issues beyond their own Cluster.

A VOD peer **15** might by default (or upon a crash) know only to contact a highly trusted node (e.g., a VOD Support Server **55**), and then be directed to a slightly less trusted VOD peer **15** in order to join a particular Cluster (perhaps after testing access times to determine the most appropriate Cluster). Having established and maintained various Clusters of VOD peers **15,** these Clusters may be utilized both in the Pushing of Packages among VOD peers **15,** and the Pulling of Packages from such VOD peers **15.**

For example, a Publication Server **16** might be directed (e.g., by a known VOD Support Server **55**) to contact a relatively trusted VOD peer **15** within a particular Cluster. Information about the Content Object being published may include its genre or category (e.g., comedy, sports, etc), the name of the publisher (e.g., indicating likely popularity for a major publisher such as Disney), time zones, time cycles (e.g., when it might most likely be requested) and other information indicating not only overall popularity, but also popularity within certain geographic regions.

In the first instance, a Publication Server **16** might utilize this information to prepare a Content Object for publication. It may be formatted into Packages of a particular size, and may be available for a particular period of time based upon predefined rules, or to enable it to be propagated among a large number of Clusters, or Clusters in particular geographic regions.

Relatively trusted Cluster Controllers within particular Clusters may direct a Publication Server **16** to Push or propagate some number of copies of the Packages of this Content Object to particular VOD peers **15** within a Cluster, again based upon this information. For example, a Cluster Controller might know that Content Objects of a particular genre are less popular within its Cluster or geographic region (either generically, or from measured requests over time), and thus cause fewer copies of the Packages of that Content Object to be propagated among VOD peers **15** within its Cluster. This distribution may change over time as dynamic information is collected and Packages are replicated more times (or fewer times) based upon changes in the frequency of requests for particular Content Objects (e.g., as more comedies are requested).

By utilizing predetermined information as well as dynamically monitored information to "predict" the appropriate location, size and number of copies of the Packages of a particular Content Object, Content Objects can be pushed to VOD peers **15** that are more likely to request them, and are more likely to be able to access them relatively quickly. Publication Server **16** and Cluster Controllers utilize this information to cause Packages to be distributed within their Cluster so as to optimize access times should VOD peers **15** within that Cluster request such Packages. In this manner, Content Objects are distributed among various network Clusters so as to optimize their delivery time and overall QoS when subsequently requested.

Moreover, while a Content Object is being published, Cluster Controllers also generate and propagate a "Tracking Index" and associated "Tracking Files" indicating the locations of the Packages of Content Objects within and among Clusters. Over time, this Tracking Index and associated Tracking Files may be updated as Packages increase or decrease in popularity (e.g., based upon request patterns within particular Clusters). A less popular Content Object might even disappear from the network over time, and need to be republished if subsequently requested. In one embodiment, only Content Objects from "private" publishers are permitted to disappear entirely from the network, whereas Content Objects from commercial publishers are monitored to ensure that at least a minimum number of replicated copies remain stored somewhere on the network.

Having published Content Objects by Pushing their Packages among VOD peers **15** across various network Clusters (and generating and distributing Tracking Indexes and associated Tracking Files identifying the locations of such Packages), monitored dynamic network traffic and modified Trust Levels, Package sizes and locations (and other attributes) accordingly, these Content Objects may now be Pulled or requested by VOD peers **15** for display on their own systems. Upon making an initial request to a neighbor VOD peer **15,** such request will be propagated until it reaches a sufficiently trusted VOD peer **15** that has access to the relevant Tracking Index or Tracking File for that requested Content Object.

As was the case with the Publication and Push processes, the distributed Cluster Controller is also heavily involved with the Pull process. Upon locating the Tracking Index, Cluster Controllers are responsible for identifying the most appropriate (i.e., the "closest") Tracking File that contains the locations of the groups of Packages of that Content Object, and then monitoring and managing "sub requests" for those groups of Packages. In one embodiment, the requesting VOD peer **15** utilizes that Tracking File to request in order the groups of Packages of the Content Object directly from the nearby VOD peers **15** that are storing such Packages in their "shared" storage space.

During both the Push and Pull processes, the Tracking Index and associated Tracking Files are updated dynamically and propagated among relevant VOD peers **15** to reduce the access time required to obtain each Package or group of Packages. Priority is given to earlier Packages in the Content Object as they are required sooner. For example, special algorithms are employed to maximize the probability of a successful transfer. Should problems occur with later Packages, more recovery time is available before such Packages will be "late," providing a greater opportunity, for example, to contact a more trusted VOD peer **15** (or even a VOD Support Server **55,** e.g., in the event of an emergency).

Other algorithms balance the cost of utilizing more "expensive" network resources against the probability and consequences of failure. For example, the more expensive VOD Support Servers **55** might be used only for early Packages and/or emergencies.

Because multiple sub-requests can be made in parallel, and the various network paths have been monitored and pre-tested, VOD peers **15** can be confident of a high QoS even when requesting arbitrary Content Objects on demand. Moreover, as more VOD clients request additional Content Objects, the Packages of such Content Objects have already been pre-distributed (i.e., Pushed) to appropriate VOD peers **15** across various Clusters so as to maximize QoS for subsequent requests. Should network conditions, request patterns or other measurable factors change over time, adjustments will be made in the size, location and number of Packages in advance of on-demand requests, resulting in a highly scalable VOD system providing high QoS.

### Brief Description of the Drawings

**FIG. 1** illustrates a prior art IP-based VOD topology that relies upon dedicated edge servers that store and deliver content in a centralized fashion relative to their end-user clients.
**FIG. 2** illustrates an embodiment of an IP-based VOD topology of the present invention in which Content Objects are stored and delivered on a distributed P2P basis among end-user clients, utilizing dynamic load balancing techniques to monitor network traffic and, in response, modify and track the size, number and location of Content Object Packages (among other attributes) accordingly, so as to optimize QoS.
**FIG. 3** illustrates an embodiment of Clusters or groups of VOD peers sharing similar Trust Levels and a relatively high QoS among one another, with access to VOD peers of higher Trust Levels should problems occur, e.g., requiring faster and/or more reliable content-delivery.
**FIG. 4** illustrates an embodiment of a typical Cluster of VOD peers in which groups of Packages of a Content Object are Pushed dynamically to selected VOD peers such that they can later be Pulled for viewing on demand by any VOD peer in the Cluster while maintaining a high QoS.
**FIG. 5** illustrates an embodiment of a Node ID data structure used to track both static and dynamic information pertaining to a VOD peer, including a unique identifier, net proximity information, and various dynamic descriptors such as a current trust level.
**FIG. 6** illustrates an embodiment of a Content Reference ID (CRID) data structure used to uniquely identify an Event published on the network.
**FIG. 7** illustrates an embodiment of a Tracking File data structure used to track the locations of groups of Content Object Packages published within a particular Cluster(s).
**FIG. 8** illustrates an embodiment of a Tracking Index data structure used to locate VOD peers having copies of relevant Tracking Files.
**FIG. 9** illustrates an embodiment of an initial symmetric handshaking protocol for establishing communication between VOD peers.
**FIGs. 10a** **and** **10b** illustrate embodiments of respective dynamic communication processes for announcing and then publishing (i.e., PUSHing) new Content Objects onto the network.
**FIG. 11** illustrates an embodiment of slicing Content Objects into variable-length Packages and distributing them among differing numbers of VOD peers to facilitate the "instant play" feature of a VOD system of the present invention.
**FIG. 12** illustrates an embodiment of Trust Levels among VOD peers both within and across Clusters of VOD peers in the network.
**FIGs. 13a** **and** **13b** illustrate embodiments of respective dynamic communication processes for locating relevant Tracking Indexes and Tracking Files, which are then used for downloading (i.e., PULLing) selected Content Objects for viewing on a VOD peer.
**FIG. 14** illustrates an embodiment of multiple VOD peers feeding Content Object Packages to a VOD peer that has requested viewing of that Content Object.
**FIG. 15** illustrates an embodiment of dynamic communication processes for monitoring network traffic and behavior among VOD peers, and modifying certain VOD peer and network characteristics as a result (such as Trust Levels and Content Object Package distribution), in order to provide network-based QoS (NQoS).
**FIGs. 16a****-d** illustrate embodiments of patterns of Clusters of VOD peers the configuration of which changes over time as a result of dynamically monitoring changes in network usage, Content Object consumption and other characteristics of the system state.
FIG. 17 illustrates a block diagram embodiment of a system for inserting Advertising Content within and among other Content Objects.

### Detailed Description

### I. KEY CONCEPTS

### A. Clusters and Trust Levels

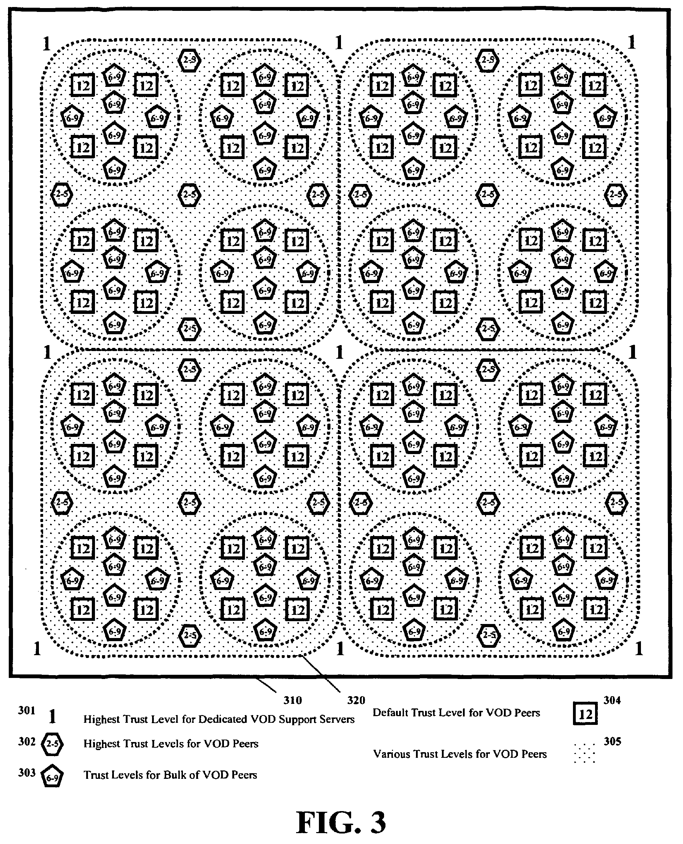

As noted above, certain aspects of the Internet's existing physical infrastructure can be obtained from publicly available information. Such information can be utilized in one embodiment, illustrated in **FIG. 3****,** to create groups of VOD peers known as Clusters. Standard IP address location services may be utilized, in combination with IP ranges and other known physical infrastructure information, to effectively translate a VOD peer's IP address into a "Cluster Identifier" or Cluster ID that serves to identify hierarchies of Clusters, as also illustrated in **FIG. 3****.** In this embodiment, these Clusters are created and modified dynamically.

Because these Clusters are created initially from known physical infrastructure information, and updated dynamically based upon network traffic statistics derived from monitoring generic and actual data transfers and performing related tests, they represent more than just a group of VOD peers. In particular, a Cluster serves to identify a group of VOD peers which generally share a particular QoS among one another.

As will be discussed in greater detail below, VOD peers can be deemed to be within a particular Internet Distance from one another if they can consistently and reliably (over time) transfer certain quantities of data among one another within particular periods of time. These VOD peers that are relatively "close" to one another form a Cluster.

By identifying and utilizing these Clusters of VOD peers for data transfer, the network can enable information to be distributed to a requesting VOD peer from a "relatively low bandwidth" VOD peer within the same Cluster much more quickly and reliably than from a "relatively high bandwidth" VOD peer within another Cluster. In other words, "local" intra-Cluster performance and reliability becomes an excellent predictor of QoS for subsequent on-demand requests - because Cluster information is utilized during the Publication of Content Objects to identify appropriate VOD peers on which to store (Push) Content Object Packages.

As a practical matter, only relatively few VOD peers can be "close" to high-performance and high-reliability backbone routers that exhibit the "global" ability to transfer large amounts of data quickly and reliably over long distances. Yet, to achieve VOD functionality while maintaining a relatively high QoS among a large number of VOD peers, it becomes important to identify and leverage a "local" QoS shared by Clusters of relatively "close" VOD peers that can quickly and reliably exchange data among one another.

As a VOD peer demonstrates over time its ability to transfer greater amounts of data more quickly and reliably to certain other VOD peers, the Trust Level of that VOD peer can be raised, reflecting its ability to maintain a relatively higher QoS among the VOD peers in its Cluster. In addition to maintaining this "local" QoS, higher Trust Levels eventually represent a more "global" QoS, indicating a VOD peer's ability to manage inter-Cluster (e.g., non-intersecting Clusters) and Super-Cluster (e.g., superset Clusters) communication.

Such communication might involve not only transferring data to remote parts of the Internet, but also managing and monitoring the performance and reliability of VOD peers across Clusters, as well as modifying Cluster membership and adjusting Trust Levels across "local" Cluster boundaries. Moreover, as will be discussed in greater detail below, these "highly trusted" VOD peers are also involved in managing certain high-level functional aspects of the Publication of Content Objects and the Pushing of their Packages throughout the network, as well as the retrieval or Pulling of such Packages to fulfill the on-demand requests of VOD peers for display of Content Objects.

VOD peers within a Cluster, such as Cluster **320,** are made aware of certain neighboring VOD peers of similar Trust Levels, as well as some VOD peers of higher (and perhaps lower) Trust Levels. This enables information to propagate in a distributed fashion "up" to relatively highly trusted VOD peers within a Cluster (and sometimes beyond), and then back "down" to VOD peers of lower Trust Levels throughout the Cluster.

No individual VOD peer or other computer (e.g., a VOD Support Server) need know of the particular VOD peers making up any particular Cluster (though such information could be generated by propagating queries in a distributed fashion). Instead, Clusters are generated in a distributed manner in which certain relatively highly trusted VOD peers are made aware of other similarly highly trusted VOD peers. Over time, as less trusted VOD peers join the network, they are assigned to a particular Cluster and made aware of a few more highly trusted VOD peers, as well as VOD peers of their own Trust Level, all within that same Cluster.

With reference to **FIG. 3****,** a relatively few dedicated VOD Support Servers are positioned at strategic global locations throughout the Internet, and assigned the highest Trust Level **301** (e.g., 1 on a scale of 1 to 16). In one embodiment, they are very "close" to high-bandwidth fiber optic Internet backbone routers, enabling them to communicate among one another (as well as transfer data) very quickly. As noted above, these VOD Support Servers need not be utilized directly for VOD application functionality (such as the storage and retrieval of Content Objects), but might merely assist in performing certain ancillary functions, including the initialization of VOD peers as they are added to the network.

In one embodiment, when a VOD peer is added to the network, it inherently knows about one or more of these VOD Support Servers, which can provide certain initialization services, including assigning that VOD peer to a particular Cluster. Distributed software within each VOD peer, known as a "Cluster Controller," not only participates in this initialization process, but also manages intra-Cluster services (and, in some cases, inter-Cluster services, if the Trust Level of the VOD peer is sufficiently high) on behalf of the VOD peer.

These services, provided in a distributed fashion by each VOD peer's Cluster Controller (and discussed in greater detail below), include primary VOD functionality, such as the Publication and Pushing of Content Objects, the generation and propagation of Tracking Indexes and Tracking Files to maintain the locations of groups of Packages of each Content Object, the Pulling of these Content Object Packages for on-demand display of Content Objects at a requesting VOD peer, and the dynamic monitoring of network traffic to maintain NQoS (which in turn involves updating dynamically the Trust Levels of VOD peers, the membership of VOD peers within particular Clusters, and the size and location of groups of Packages of Content Objects, as well as the contents and location of associated Tracking Indexes and Tracking Files).

In one embodiment, the same Cluster Controller software is present at all VOD peers. This software is responsible for maintaining the Trust Levels of each VOD peer within a particular Cluster. For example, upon detecting (via dynamic monitoring of network traffic) that the reliability of a particular VOD peer is decreasing below a predetermined threshold, the Cluster Controller could decrease the Trust Level of that VOD peer accordingly. Trust Levels could of course increase in a similar fashion.

At a sufficiently high Trust Level, portions of this Cluster Controller software would also be responsible for maintaining Trust Levels of VOD peers across Clusters, involving both inter-Cluster and Super-Cluster communication. For example, in addition to simply raising or lowering the Trust Level of a VOD peer, this virtual Super-Cluster Controller functionality might also include changing the membership of a VOD peer from one Cluster to another. As the Trust Level of a VOD peer increases over time, it might become part of a larger Super Cluster (e.g., super Cluster **310**) that includes not only its prior Cluster (e.g., Cluster **320**) but other Clusters as well.

In one embodiment, 16 Trust Levels are maintained by the Cluster Controllers. In this embodiment, the highest or "most trusted" Trust Level is deemed Trust Level 1 **301,** which is reserved for dedicated VOD Support Servers. As the network of VOD peers grows over time, Trust Levels 2-5 **302** would represent a relatively small number of the total number of VOD peers. In other words, there would never exist more than a relatively small number of "most trusted" nodes.

Trust Levels 6-9 **303,** on the other hand, would represent the bulk of the VOD peers. Over time, VOD peers might regularly move up and down among these Trust Levels in accordance with dynamically monitored changes in their performance and reliability. Trust Levels 10-16 (not all shown, but included within the various Trust Levels **305** dispersed throughout the network) would represent the relatively few "unreliable" or "unusually low-bandwidth" VOD peers. Nevertheless, Trust Level 16 might still represent a "floor" of acceptable delivery probability for a VOD peer, such as 100kbps during an average network load time for a duration of 30 minutes.

Trust Level 12 **304,** for example, might in one embodiment be deemed a "default" Trust Level to which VOD peers would be assigned upon being initially connected to the network (or being reconnected, e.g., after a hardware failure). As its Cluster Controller obtains statistical information by dynamically monitoring network traffic over time, its Trust Level would be adjusted accordingly to reflect its effect on QoS more accurately. In fact, the duration of network connectivity is itself a reliability factor that contributes to the determination of a VOD peer's Trust Level.

In one embodiment, Trust Levels reflect four key "Trust Level Parameters" that are themselves determined from combining various "Trust Level Factors." The four Trust Level Parameters represent the VOD peer's effect on QoS across varying domains, including (1) its "local" Cluster; (2) its larger "regional" Cluster; (3) more "remote" larger regions, such as a country or continent; and (4) relatively remote parts of the core Internet, where bandwidth and interconnectivity is limited.

The Trust Level Factors, discussed in greater detail below, comprise varying statistics derived from dynamically monitoring network traffic. These Trust Level Factors are combined with respect to the domain represented by each Trust Level Parameter to generate a Trust Level Parameter reflecting the QoS within that domain. These Trust Level Parameters are then combined to generate a "global" Trust Level reflecting not only a local QoS, but also the degree to which a VOD peer can be trusted with inter-Cluster and Super-Cluster responsibilities. In one embodiment, this Trust Level is determined by a weighted average of the Trust Level Parameters.

The Trust Level Factors can of course be supplemented, replaced and tweaked over time in an attempt to more accurately represent various QoS levels across the Trust Level Parameter domains. In one embodiment, these Trust Level Factors comprise a myriad of attributes that can be measured dynamically over time, including (i) load time (e.g., reflecting higher traffic during early evening "prime time" hours), (ii) the probability of "high-speed" service delivery to a relatively local peer during a high load time; (iii) the probability of staying online for the next 500 hours; (iv) the probability of "high-speed" service delivery to "very remote" VOD peers (reflecting good connectivity across the Internet); (v) top speed to a given ISP; and (vi) top speed from a given ISP.

### B. Tracking Files and Tracking Indexes

Before discussing the major Push and Pull processes of the present invention, in which Content Objects are distributed throughout VOD peers and retrieved on demand, it is helpful to first describe some of the key data structures that are employed to "track" the locations of the groups of Packages of Content Objects that are distributed among these VOD peers. In one embodiment, these data structures are created and updated during the Publication process in which groups of Packages of a newly published Content Object are Pushed to various VOD peers, and then utilized during the retrieval process to fulfill the on-demand requests of VOD peers for Content Objects. They are also updated over time in response to the dynamic monitoring of network traffic by Cluster Controllers in order to maintain a relatively high QoS for subsequent requests.

Two major data structures are employed to track the locations of the various groups of Packages into which Content Objects are divided: (1) Tracking Files and (2) Tracking Indexes. Before exploring these data structures, it is important to distinguish a Content Object from the Event of publishing one or more Content Objects. For example, a movie might constitute one Content Object, while its trailer might constitute another separate Content Object. Publication of the trailer could be an Event, while publication of the movie might be a separate Event. Yet, publication of an "early release" of the movie in a fixed geographic area (say New York and California) could also constitute a separate Event, distinguishable from a later worldwide publication of the same Content Object (movie), whether by the same or a different publisher.

So, while these data structures assist in the tracking of locations of groups of Packages of a Content Object, their existence is predicated upon Events that involve the publishing of one or more Content Objects. It should be noted that, in one embodiment, multiple Content Objects could be published in a single Event while, in another embodiment, the publication of each Content Object could constitute a separate Event.

It should further be noted that these data structures can themselves be "distributed" in that they need not necessarily be present in their entirety in any single location. They can, for example, be layered such that "subset versions" exist within individual Clusters, while Super Clusters may contain a "superset version" having additional entries covering the additional Clusters contained within the Super Cluster. They could also be distributed in a more traditional manner such that they contain entries covering only "neighboring" VOD peers, requiring a propagation of requests to obtain a larger set of entries (e.g., covering an entire Cluster).

The first major data structure, the Tracking File, is used to track the locations of groups of Packages of the Content Objects that have been published within a particular Cluster. In one embodiment, a separate Tracking File within each "leaf" Cluster (i.e., not further divided into sub-Clusters) will track each Event in which a Content Object is published within that Cluster. As noted above, Superset Clusters may include "superset" Tracking Files containing entries for each of its "sub-Clusters."

Even within a Cluster, a Tracking File might be further "distributed." In other words, while it could contain an entry for each Event in which a Content Object is published within that Cluster, the copy of the Tracking File at a VOD peer might instead contain entries only for the Events in which that VOD peer was involved, as will be discussed further below.

In any case, Tracking Files correlate groups of Packages of a Content Object with the VOD peers (e.g., the IP addresses of those VOD peers) on which copies of those particular groups of Packages are stored. For example, as noted above, a Content Object such as a movie might be divided into a thousand different Packages of varying sizes averaging roughly 30 seconds each, with the early portions of the movie containing relatively smaller Packages, perhaps only 10 seconds, and other Packages as large as two minutes. A Tracking File might contain an entry for a group of the first 6 Packages of that Content Object, which could correlate to 8 different VOD peers in a Cluster, each of which contains copies of that group of 6 Packages (for redundancy, as well as a high QoS, depending upon the popularity of the Content Object), together representing the first minute of the movie.

Additional entries could account for the remaining groups of Packages of that Content Object, and perhaps for groups of Packages of other Content Objects published within that Cluster. For example, as will be discussed in greater detail below, when an Event results in the Publication of a Content Object, certain "master" VOD peers are selected to manage the propagation of groups of Packages of that Content Object. In addition to these "master" VOD peers (which may or may not store any of the groups of Packages of that Content Object), other VOD peers will be selected to store certain groups of Packages of the Content Object.

In one embodiment, each of the VOD peers involved in the Publication of that Content Object (e.g., the "master" VOD peers as well as the VOD peers storing groups of Packages of that Content Object) would have a Tracking File with entries correlating each group of Packages of that Content Object with every VOD peer within that Cluster on which that group of Packages is stored. This enables any copy of that Tracking File to be used to locate the entire Content Object without further propagation of requests.

In one embodiment, a Tracking File will also include information identifying one or more "master" VOD peers, whether or not they themselves store groups of Packages of the Content Object. In other embodiments, as noted above, a Tracking File could be further "distributed" (e.g., to include entries only for "neighboring" VOD peers storing relevant groups of Packages, and thus requiring further propagation of requests to locate the VOD peers storing all of the groups of Packages of the Content Object).

If a VOD peer is also involved in another Event (e.g., storing a group of Packages of a different Content Object published to the network), a separate Tracking File could be generated as described above. In another embodiment, the same Tracking File could be utilized, with additional entries for the groups of Packages of that other Content Object. In any case, some means of distinguishing groups of Packages across Events (e.g., across two different Content Objects) would be provided, as will be discussed in greater detail below.

In one embodiment, to facilitate efficient lookup of the groups of Packages of a particular Content Object, cryptographic hash algorithms are employed. Each Package of a Content Object is assigned a common hash value to enable Packages to be verified (e.g., when replicated or delivered to a target VOD peer) in small blocks that utilize relatively little memory (e.g., for file pointers, handles, etc). This hash-based data structure includes: (i) a header containing the total data size of all Packages of the Content Object, the number of Packages into which the Content Object is divided, and an offset into the original Content Object data stream before the division into Packages; (ii) an inter-Package hash table tree containing root hash values of each Package's internal hash tree, allowing for verification of each Package's common hash value; (iii) an intra-Package hash table tree, enabling lookup of the offset to the data where such Package is stored; and (iv) the data itself (i.e., the content of each Package). By combining this data integrity checking infrastructure with public key infrastructure, it is possible to control (e.g., allow or revoke) Content Object validity for replication and delivery of Packages to a desired VOD peer with granularity over time.

Thus, Tracking Files are generated and modified as Content Objects are published and Pushed to selected VOD peers within each Cluster. But, in order to utilize these Tracking Files to retrieve or Pull these Packages to a VOD peer requesting a Content Object on demand, they must first be located.

In one embodiment, a Tracking Index is generated and updated when the Tracking Files are created, so as to facilitate an alternative means of locating relevant Tracking Files. Thus, as will be discussed in greater detail below, an on-demand request for a particular Content Object could result in a search in which a relevant Tracking File might be located directly, or indirectly via a Tracking Index. Typically, such a search would propagate "up" (i.e., to VOD peers having higher Trust Levels) until the Tracking Index is located, which identifies various "candidate" VOD peers having a copy of a relevant Tracking File. Requests would then propagate "down" until a sufficiently "close" one of such candidate VOD peers is located, after which groups of Packages can then be located and delivered to the requesting VOD peer.

A Tracking Index thus correlates Events with the locations of VOD peers having copies of a Tracking File associated with the Content Object(s) published in connection with that Event. In one embodiment, the Tracking Index is itself a layered file, with greater numbers of entries existing at VOD peers having higher Trust Levels (e.g., covering Super Clusters).

Each entry in the Tracking Index contains a "Content Reference ID" or "CRID." The CRID serves to uniquely identify the relevant Event (and/or distinguish related Content Objects or components thereof) pursuant to which one or more Content Objects are published. In one embodiment, the entry for each Event may occupy several rows of the Tracking Index.

For example, the first row of each entry could include a "Core CRID" (discussed below) correlating a particular version of a Content Object (e.g., the movie "Aladdin" published by Disney) to the IP addresses of each VOD peer (or, in one embodiment, only each "master" VOD peer) within a particular "leaf" Cluster storing a copy of a Tracking File associated with that Content Object. Subsequent rows would include the same Core CRID and the IP addresses of analogous VOD peers within another "leaf" Cluster.

VOD peers at higher Trust Levels covering Super Clusters might thus store a Tracking Index with multiple rows correlating to each sub-Cluster in which the Event was published. In addition to these Core CRID rows that identify the VOD peers storing copies of a relevant Tracking File, additional rows would include other components of the CRID, which will now be described, along with the components of the Core CRID itself.

In one embodiment, the Core CRID consists of two fields which together uniquely identify the version of a Content Object. The first is a "Publisher ID" which uniquely identifies the publisher associated with the Event. The second field is an "Event Selector" which uniquely identifies for that publisher the Content Object(s) being published. For example, if Disney were to publish the movie "Aladdin" onto the network, the Publisher ID would uniquely identify that version of Aladdin. This level of granularity, for example, might correlate with the level at which a user might select a Content Object to be displayed on demand.

Other components of the CRID, however, serve to further identify the Event pursuant to which that Content Object was published. For example, to accommodate a user desiring to see the "trailer" for Disney's Aladdin, other fields might distinguish the movie from the trailer, while still sharing in common the same Core CRID. Depending upon the embodiment, the Publication of the movie and the trailer might constitute a single Event or multiple separate Events.

In one embodiment, the CRID includes, in addition to the Core CRID, three other "descriptors" that further describe the Event. The first is the "Main Descriptor" which includes a "Publication Zone" field, which identifies the area from which Publication emanates (e.g., a city or zip code), as well as a "Publication Rights" field, which indicates where the Content Object(s) may be published (e.g., ranges of zip codes). This Publication Rights field could, of course, include multiple entries to cover discontiguous areas (e.g., LA and NY).

The second descriptor is the "Publisher Descriptor," which provides information about the publisher that facilitates the system's ability to predict the popularity of a particular Event (e.g., by Pushing more copies of a published Content Object to some or all Clusters). The Publisher Descriptor includes a "Publisher Priority" field, which might, for example, distinguish Disney from a smaller and less-popular publisher, and a "Publisher Category" field, which attempts to categorize generally the content published by that publisher (e.g., private content, live broadcasts, commercial movies, pornography, etc).

Finally, the "End Descriptor" includes a single field that serves to distinguish Events involving related Content Objects, as well as provide supplemental information. For example, the value of this field could distinguish a movie ("00") from its "metadata" ("01" for text including information about a movie, such as its title, category, and release date, as well as other related information in textual, graphic, video or other form) or "additional assets" ("02" for trailers, storyboards, director's commentary, etc).

Depending upon the embodiment, these related assets could be deemed part of a single Content Object or separate Content Objects, and they could be published as a single Event, or as separate Events. The CRID can thus serve to distinguish separate related Events, or simply to identify related Content Objects (or components thereof) at different levels of granularity.

In one embodiment, the Tracking Index is maintained only by VOD peers at relatively high Trust Levels (e.g., associated with a Super Cluster). As will be explained in greater detail below, when a Content Object is published, the Event triggers a propagation of requests "up" to a sufficiently highly trusted VOD peer that will maintain a Tracking Index (for that and other Events), as well as "across" to other similarly highly trusted VOD peers (e.g., managing other Super Clusters) that will also maintain copies of that Tracking Index.

As noted above, this Tracking Index may be layered in that other less highly trusted VOD peers (e.g., managing a "lower-level" Super Cluster) may also maintain copies of that Tracking Index with fewer entries (reflecting only their sub-Clusters). Moreover, it may also be further "distributed" in that it may only contain entries pertaining to Content Objects published within its sub-Clusters, and perhaps only IP addresses of "neighboring" VOD peers having relevant Tracking Files.

To facilitate network communication for various functions, including, for example, searches for Tracking Indexes and Tracking Files (e.g., when a VOD peer makes an on-demand request to display a Content Object), bit-string "Identities" are employed to identify Nodes on the network (e.g., the IP address of a VOD peer, a Publication Node or a VOD Support Server) as well as Content Objects. For example, upon locating a Tracking Index with references to various VOD peers having a relevant Tracking File, it is still desirable (and sometimes necessary, to maintain a sufficiently high QoS) to locate a sufficiently "close" Tracking File. Otherwise, groups of Packages would be obtained from VOD peers that are too "far" away, and might not be received in a sufficiently timely manner to maintain the designated QoS.

By utilizing these bit-string Identities between two VOD peer nodes, for example, a virtual Internet Distance function can be calculated, essentially indicating the QoS that can be expected between those two VOD peers. In one embodiment, the Identities might be assigned in the first instance based upon known Internet infrastructure information, along with IP addresses and geographic information obtained from standard IP location services.

To calculate the Internet Distance between two VOD peers, their Identities could first be XORed, with the result interpreted as a binary number. This number could then be adjusted based upon information previously determined from dynamic monitoring of network traffic, such as Cluster IDs, Trust Values, and other statistical results discussed in greater detail below. The resulting Internet Distance, which can be calculated relatively quickly, would then be used to select candidate VOD peers from this larger list (e.g., from a Tracking Index), and propagate appropriate requests (e.g., for a Tracking File used to locate groups of Packages of a requested Content Object).

### C. Publication and PUSHing of Content Objects

As noted above, before Content Objects can exist on the network of VOD peers, they must first be published by a Publishing node such as Publishing Server **16** in **FIG. 2****.** Each Publishing Server includes VOD Publishing Software to implement the Publication process in conjunction with the distributed Cluster Controllers present on VOD peers. As noted above, this process will result in the division of the Content Object(s) to be published into groups of Packages, and the propagation of some number of copies of these groups of Packages to various VOD peers throughout the network (along with the generation and updating of related Tracking Files and Tracking Indexes).

Note that the Publishing Server might exist anywhere in the network (e.g., its Publication Zone might be in Colorado), and thus may not be "close" to the area in which the Content Object is to be published (e.g., the Publication Rights may cover NY and LA). In one embodiment, the Publication Server first generates a CRID (as described above) containing the relevant information about the publisher and the Content Object being published, including the Main, Publisher and End Descriptors.

The Publication Server then seeks to find a "Publication Announcer" that is relatively "close" (e.g., in Internet Distance) to the areas covered by the Publication Rights (e.g., NY and LA). The initial Publication Announcer will "announce" the Event (including transferring the CRID) to other Publication Announcers, who will select certain "master" VOD peers to manage the Publication process and ultimately cause copies of the groups of Packages of the Content Object being published to be distributed to selected VOD peers.

For example, the Publication Server might, by default, be aware of a few VOD Support Servers, and contact one of them, which may in turn forward this "Announcement" (including the CRID) to a known relatively highly trusted VOD peer in NY. That NY-based VOD peer (the initial Publication Announcer) could forward the Announcement to a known similarly highly trusted VOD peer in LA (a secondary Publication Announcer).

Each of the Publication Announcers (two in this example) will select one or more "master" VOD peers ("Publication Masters") to manage the Publication process. The Cluster Controllers in each of these Publication Announcers may already have certain general network traffic information (e.g., network "load") as well as information about potential candidate VOD peers (e.g., their Cluster IDs, Trust Levels, etc), and can also query them to obtain additional information (e.g., the amount of "free" hard disk space, which may be used for storing groups of Packages of the Content Object).

Utilizing this information, the Cluster Controllers in each Publication Announcer will each select (and forward the Announcement) to one or more Publication Masters to manage the Publication process. Typically, these Publication Masters will have a relatively high Trust Level (e.g., Level 4 of 16), though the Trust Level may vary by Cluster. For example, some Publication Masters may have a Trust Level 3, while others may have a Trust Level 4, e.g., due to differences in estimated sizes of their respective Clusters. Such information may be estimated by the Publication Announcers based upon the number of known VOD peers having similarly high Trust Levels, as well as inherently known Internet infrastructure information (e.g., known to all VOD peers).

Each Publication Master, upon receiving the CRID, will be responsible for managing Publication within their particular domain (e.g., a Cluster, sub-Cluster, etc). Initially, each Publication Master will "predict" the popularity of the Content Object being published based upon various information available from the CRID, as well as information previously obtained from dynamic monitoring of network traffic over time. For example, certain behavioral assumptions (e.g., based upon prior requests within this Cluster for similar titles and categories, as well as cumulative requests) may be factors, as will certain factual information (e.g., based upon the publisher, the date the Content Object was released, as well as other information available from the CRID).

Based upon this "predicted" popularity, the Cluster Controller in each Publication Master will communicate an "Interest Request" to the Publication Server (or, in another embodiment, indirectly to the Publication Server via the Publication Announcer). Upon compiling these various Interest Requests, the Publication Server will determine the appropriate size and number of Packages into which the Content Object to be published should be divided.

In one embodiment, the Publication Masters will create the Tracking Files that track the locations of those VOD peers which will ultimately store the groups of Packages as they are distributed during the remainder of the Publication process. In addition, these Publication Masters will also create a Tracking Index correlating the CRID to those VOD peers storing copies of the Tracking Files associated with that CRID.

In one embodiment, each Publication Master contacts its Publication Announcer with a "Collection" request. In response, the Publication Announcers communicate with one another and designate a "Collector" who contacts the Publication Server to "collect" the Tracking Index as well as the Packages of the Content Object for further distribution. The Collector then distributes the Tracking Index and Packages to the other Publication Announcers. This process typically requires little optimization due to the small number of Publication Announcers, though distributed techniques could be employed if necessary to minimize network traffic.

The Publication Announcers will determine, for their Publication Masters, initial groups of Packages (i.e., for storage as a group on a single VOD peer), and distribute those groups of Packages to the Publication Masters. For example, in one embodiment, only four groups of Packages may be necessary to provide a sufficient QoS within a typical Cluster. This grouping may, of course, be adjusted dynamically over time by Cluster Controllers within a particular Cluster. For example, if it is determined that the popularity of a given Content Object decreases over time (e.g., based upon tracked on-demand request patterns), then groups of Packages may be combined, and copies may be decreased (e.g., overwritten by groups of Packages of other Content Objects over time). Similarly, if popularity increases, groups of Packages may be further divided, and more copies generated and distributed.

Each Publication Master will then, based upon its determined level of interest, Push (further propagate) copies of its group of Packages "down" to other VOD peers (typically at the same or at a lower Trust Level). In addition, the Publication Master will generate and/or update a Tracking File correlating the CRID to the VOD peers that will be selected to store copies of this group of Packages.

It should be noted that the remainder of this Push process may be relatively centralized, but could be as distributed as necessary to facilitate efficient communication. For example, the Cluster Controllers in each Publication Master might determine the number of copies of its group of Packages that are to be distributed based upon its previously determined Interest Request, as well as other information (e.g., more copies if the group of Packages occur "early" in the Content Object). The Publication Master could then contact VOD peers directly to determine which have spare capacity to store the group of Packages, and then directly transfer that group of Packages to each such VOD peer, along with an updated Tracking File. Or, in another embodiment, the Publication Master may only communicate with a selected few "neighbor" VOD peers, who each will communicate with their "neighbor" VOD peers, employing standard distributed propagation techniques (both for the distribution of groups of Packages, and perhaps for Tracking Files as well).

Ultimately, however, one or more copies of each group of Packages will be distributed (Pushed) throughout the VOD peers in each "leaf" Cluster (within the areas defined by the Publication Rights). In addition, Tracking Files (whether duplicated in their entirety for each Cluster, or layered in a distributed fashion) will be stored, in one embodiment, on each Publication Master, as well as on each VOD peer storing one or more groups of Packages of the published Content Object. Tracking Indexes will be maintained on the Publication Announcers, and perhaps on the Publication Masters as well.

The Publication Node may be turned off once the Publication process is complete. In one embodiment, 24 hours is allowed for initial publication, though a typical Event may only require 20 minutes.

Information relating to the Publication Event (e.g., metadata contained within the CRID) will also be distributed throughout the network, e.g., to enable each VOD peer to update its user interface to reflect the availability of the published Content Object. Standard distributed propagation techniques can be employed.

However, depending upon the embodiment, different information may be made available to different VOD peers.

For example, VOD peers outside of the areas defined by the Publication Rights may not be made aware of the Event (since the users of such VOD peers do not have the right to access such Content Objects). In another embodiment, they may be made aware of that fact in their user interface, perhaps with a mechanism to acquire rights to the Content Object (e.g., "pay per view").

Other VOD peers may have sufficient rights, but may not be sufficiently "close" to a Pushed Content Object to receive it while maintaining a relatively high QoS. That fact may also be reflected in the user interface (e.g., using text, colors or other visual, or other, identifiers). For example, Content Objects available almost instantaneously (T0 - say within a few seconds on average, ranging from ½ second to 12 seconds from the user's request) might be color-coded "green." Other Content Objects not within a sufficiently "close" Internet Distance to the VOD peers storing its groups of Packages may not be as readily available (T1 - may not start for a minute or longer - e.g., within a range of 30 seconds to 5 minutes), and could be color-coded "yellow." Still other Content Objects may not even be available on the network when requested (T2), though their metadata may be made available for searching purposes, perhaps color-coded "red." Such requests could trigger a "pre-order" resulting in as much as a 24-hour delay before being delivered to and stored on the requesting user's VOD peer.

It should also be noted that other ancillary types of Content Objects, such as advertising, could also be pushed to VOD peers in a similar manner. Such advertising (whether in textual, graphic, video or other forms) could be related to Content Objects at varying degrees of granularity. For example, an ad could be related to an individual Content Object, or it could be targeted to a particular category of Content Objects (e.g., G-rated movies), or even to a particular geographic area. In one embodiment, such targeting information could be "matched" to the information contained in the CRID (e.g., in a Tracking Index), with the associated ad being delivered to VOD peers requesting such targeted Content Objects (or, in another embodiment, to VOD peers requesting similar or "related" Content Objects, e.g., using well-known collaborative filtering techniques).

### D. PULLing of Content Objects

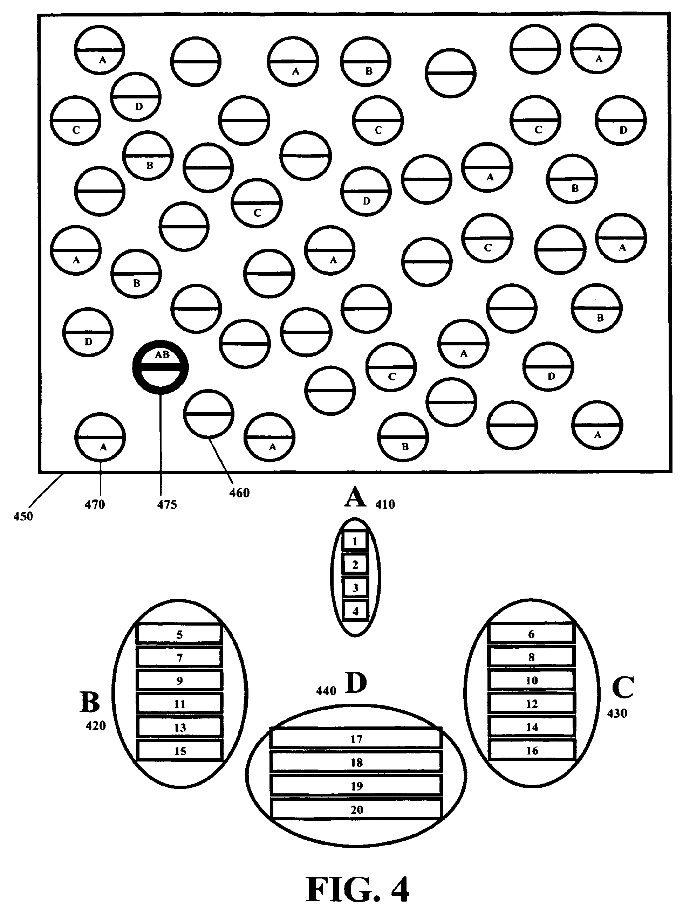

Having Pushed various Content Objects to VOD peers in Clusters throughout the network, and updated the user interface of relevant VOD peers, any user may then select a Content Object on demand via the user interface of its VOD peer. **FIG. 4** illustrates an embodiment of a typical Cluster **450** of VOD peers in which a Content Object has been Published, and 4 groups of the 20 Packages of that Content Object have been Pushed dynamically to selected VOD peers such that they can later be Pulled for viewing that Content Object on demand by any VOD peer in the Cluster while maintaining a high QoS.

Many of the VOD peers in Cluster **450,** such as VOD peers **460,** will, of course, not be storing any of the groups of Packages of that Content Object. Other VOD peers, such as VOD peers **470,** will be storing a copy of the initial group "A" **410** comprising the first four Packages 1-4 of the published Content Object (e.g., the first minute). Similarly, other VOD peers will be storing a copy of group "B" **420** and/or group "C" **430,** which comprise the next 12 somewhat larger Packages 5-16 of the Content Object in an alternating fashion (which, as noted above, enables higher bandwidth retrieval because consecutive Packages can be Pulled in parallel from multiple VOD peers).

Note that a VOD peer could store more than one group of Packages of the same Content Object, though one of the advantages of grouping Packages is to enable them to be distributed across multiple VOD peers for faster (parallel) retrieval. Thus, other VOD peers within Cluster **450** will likely store copies of the final group "D" **440** comprising the remaining four largest Packages 17-20.

As noted above, the sizes of earlier Packages of a Content Object, such as Packages 1-4 of group "A" **410,** will typically be smaller than later Packages due to the importance of Pulling these Packages more quickly (e.g., to start a movie immediately). In one embodiment, greater numbers of copies of these initial Packages will also be stored, providing faster access times as well as greater redundancy. Once the movie begins playing, and Packages are being buffered, more time is available in which to retrieve (Pull) subsequent Packages of the requested Content Object. Thus, relatively longer retrieval times are permitted.

As also noted above, the appropriate sizing and grouping of Packages of a Content Object, as well as the number of copies of such Packages stored throughout VOD peers within particular Clusters, is based upon a variety of information, including static information from the CRID as well as dynamic information obtained by monitoring network traffic and tracking request patterns over time. Such information may well reflect predicted popularity of the Content Object (generally, as well as within a particular Cluster), as well as current network congestion, relative access times and other relevant network traffic statistics.

Requesting VOD peer **475** is shown having currently buffered groups "A" **410** and "B" **420,** and awaiting arrival of groups "C" **430** and "D" **440,** presumably while playing the initial portion of the Content Object. Should the Cluster Controller within VOD peer **475** (or a Publication Master assisting in the Pulling process) detect, for example, that group "C" **430** is delayed and may not arrive in time (e.g., before Package 5 of group "B" **420** begins playback), alternative arrangements may be required.

In one embodiment, multiple requests will have been made for each group of Packages to provide redundancy for just such an occasion. In another embodiment, requests to alternative VOD peers storing other copies of the desired group of Packages can be made once a problem is detected. In still another embodiment, if a problem is not detected in sufficient time to allow for delivery from such alternative VOD peers, an "emergency" request could be made to a VOD peer of a higher Trust Level, whereupon an alternative VOD peer from another Cluster might be able to satisfy the request more quickly (e.g., due to the quicker response times of more highly trusted VOD peers).

Turning now to the steps involved in the Pulling process itself, a user of a VOD peer might, via the user interface, select a particular Content Object for retrieval from a list of Content Objects available on demand. The requesting VOD peer, in one embodiment, initiates a request for such Content Object by first checking the CRID associated with that requested Content Object against its own Tracking File(s) for a match of hash values. If unsuccessful (as will usually be the case), the request (containing the CRID) is propagated to known "neighbor" VOD peers, and then "up" to VOD peers having the next higher Trust Level, and eventually to a "high-level" (e.g., Trust Level 2 of 16) VOD peer that will be certain (in one embodiment) to have a Tracking Index with a match for all published CRIDs.

As the request propagates to such VOD peers, the CRID might match the hash value in a Tracking File if the request happens to be received by a VOD peer storing one or more groups of Packages of the Content Object identified by that CRID. In that "lucky" situation, the Tracking File will identify one or more Publication Masters which, in one embodiment, are utilized for a more efficient Pulling process.

In the more common case, the request will continue to propagate "up" until it reaches either a Publication Master (who will also have a copy of a relevant Tracking File with a "hash" match) or a VOD peer with a copy of the Tracking Index that identifies one or more Publication Masters based upon a matching CRID. In the event that the desired Content Object is not present within the same Cluster as the requesting VOD peer, a "bottom-up" search, followed by a "top-down" search, may be necessary to locate the "closest" Tracking File. Only when a sufficiently high Trust Level is reached will a Tracking Index or Tracking File be found ("bottom-up"), at which point the layered nature of the Tracking Files may require a "top-down" search to locate one that identifies VOD peers "relatively close" to (albeit not within the same Cluster as) the requesting VOD peer.

In any case, in this embodiment, one or more Publication Masters will eventually be identified, and the "closest" Publication Master will be determined, e.g., by utilizing the Internet Distance function with respect to the various candidates. In another embodiment, every Publication Master stores at least the group of Packages representing the initial portion (e.g., first 15 seconds) of the Content Object, which is retrieved to enable relatively instantaneous initial playback (providing additional time to retrieve subsequent groups of Packages).

Once the "closest" Publication Master is determined, its Cluster Controller will utilize the Tracking File to initiate requests for the various groups of Packages to the relevant VOD peers identified by the Tracking File. Such requests can be made in parallel, or can be prioritized based upon the linear progression of the Content Object (e.g., earlier groups of Packages requested first). Standard distributed propagation techniques can be employed to offload these requests to "neighboring" VOD peers.

In another embodiment, the requesting VOD peer, having identified a Tracking File, could simply request a copy of that Tracking File (perhaps after receiving the initial group of Packages to initiate playback) and request the various groups of Packages itself, rather than using a Publication Master as a proxy. Here too it could request the various groups of Packages directly from the VOD peers identified in the Tracking File, or utilize distributed propagation techniques to offload these requests to "neighboring" VOD peers.

Because the Internet Distance to the various VOD peers (storing groups of Packages of the requested Content Object) within the same Cluster as the requesting VOD peer have been predetermined to satisfy the QoS requirements (based upon prior dynamic monitoring of network traffic), it is highly likely that the groups of Packages will arrive at the requesting VOD peer in time to maintain the specified QoS. The requesting VOD peer will use its "free" storage space to buffer the groups of Packages and display them to the user. As noted above, in one embodiment, a predetermined amount of storage capacity (e.g., 4GB) is dedicated to this buffering/playback aspect of the Pulling process, with the remaining capacity (e.g., 6 GB) utilized for shared storage of groups of Packages of Content Objects for other requesting VOD peers.

Should problems occur "on route" (e.g., due to a software or hardware failure at one of the VOD peers specified in the Tracking File), such problems may be detected either by the Publication Master (e.g., when it receives no response within a predetermined time, or too slow a response) or by the requesting VOD peer (e.g., when its "buffer" of received Packages decreases below an expected threshold). In either case, the Publication Master will be notified and can initiate requests to one or more other redundant VOD peers (if such requests were not already made as a matter of course), as multiple copies of groups of Packages are typically stored within the same Cluster. In an "emergency" case, a VOD peer with a relatively high Trust Level (perhaps even a VOD Support Server) can be contacted in order to route requests to another Cluster for a higher-speed rerouting of certain specified groups of Packages. Provided that the problem is detected far enough in advance, the requesting VOD peer may not even be aware that a problem occurred.

As noted above, in some instances, a desired Content Object will not only not be available instantaneously, but it will not even be available anywhere on the network. This fact can be reflected in the user interface (e.g., as a "not found" result to a search), with a possible option, in one embodiment, of requesting a "pre-order," which could result in an automated (or manual) search for the Content Object. Upon the Event of its subsequent Publication to the network, the requesting user could be notified once the desired Content Object was available (whether in its entirety on the requesting VOD peer, or Pushed to other VOD peers within its Cluster).

### E. Network-Based QoS (NQoS) and Dynamic Monitoring of Network Traffic

Over time, this Push process will be repeated as new Events occur and Content Objects are added to the network, with the Pull process occurring (presumably with much greater frequency) as users initiate on-demand requests to display available Content Objects. But underlying both the Push and Pull processes is the dynamic monitoring of network traffic that is performed continuously, or at least on a periodic basis, in order to maintain relatively high QoS levels with a high degree of predictability.

As alluded to above, the QoS experienced by a VOD peer making an on-demand request can, in many respects, be predetermined. By monitoring network traffic dynamically (on a distributed basis using standard distributed propagation techniques), QoS can effectively be built into the network in that the ability of a VOD peer to receive files, of certain sizes within certain predetermined times, from its neighboring VOD peers (e.g., within a Cluster) can be determined in advance of any request.

The results of this dynamic network monitoring can then be used to increase QoS levels (e.g., by modifying Trust Levels and redeploying Packages of Content Objects) both within a Cluster as well as across inter-Cluster and Super Cluster boundaries (including redefining Cluster and Super Cluster membership). This resulting NQoS can then be made known to and relied upon during subsequent Pull processes (as Publishing Servers add new Content Objects to the network) as well as Push processes (as individual VOD peers make on-demand requests to display Content Objects).

Trust Levels of VOD peers are one way in which the NQoS is made known throughout the network. Another is a VOD peer's Cluster membership, via its Cluster ID, as well by the neighboring VOD peers (of varying Trust Levels) of which it is made aware over time. Moreover, as Packages of Content Objects are deployed (e.g., during the Push process, as well as in response to on-demand requests), VOD peers are made aware of the availability of such Content Objects at various QoS levels (e.g., relatively instantaneously, or with delays of a minute or more).

The Cluster Controller within each VOD peer is responsible for performing this dynamic monitoring of network traffic, in one embodiment, on a continuous basis - e.g., by communicating with the Cluster Controllers of other VOD peers (both within and outside its Cluster), as well as with known network nodes (e.g., a well-known ISP) using standard distributed propagation techniques. Certain communications may, of course, be periodic, or triggered by other events.

As noted above, in one embodiment, when a VOD peer is initialized (or reinitialized, e.g., after a software or hardware failure), its membership within a particular Cluster is determined based upon publicly available information regarding the Internet's physical infrastructure, along with IP addresses and geographic information obtained from standard IP location services. At that point, the VOD peer is made aware of a few relatively highly trusted VOD peers (perhaps even one or more VOD Support Servers) as well as some neighboring VOD peers at a similar "default" Trust Level.

From that point forward, the Cluster Controller of each VOD peer performs certain tests to monitor and detect changes in network traffic patterns (e.g., as paths among neighboring VOD peers become more or less reliable over time, whether due to network congestion or failures of VOD peers and other Internet nodes). Moreover, the Cluster Controller also monitors and detects changes in the deployment of Packages of Content Objects (e.g., as new Content Objects are Pushed to various locations, or as on-demand requests are made for particular Content Objects and categories thereof).

By tracking and compiling over time the results of such changes in general network traffic flow among VOD peers, as well as deployment of Packages of Content Objects, Cluster Controllers can utilize such results, in one embodiment, to modify the Trust Level Factors discussed above. Changes in these Trust Level Factors will in turn result in changes to the Trust Levels of various VOD peers over time, the results of which will ripple up across Cluster and Super Cluster boundaries.

For example, one general test might be a periodic "ping" to a well-known server close to an Internet Backbone router that would typically exhibit a high level of stable and reliable bandwidth. The Cluster Controller might ping Yahoo, or a VOD Support Server, every hour. Another ping test might be performed to a few known neighboring VOD peers within its Cluster, or even to a VOD peer within a "remote" Cluster. The results of such ping tests (e.g., high, low and average ping times, as well as occasional ping "failures," could be compiled over time to determine a level of reliability as well as differences due to "network load" (e.g., slower ping times during "prime time" early evening hours).

Other tests might involve actual file transfers of varying sizes, and to locations of varying Internet Distances. The ability of a VOD peer to transfer a file of a certain size to one or more of its neighbors within a certain period of time is of obvious importance, as it relates directly to the aspect of the Pull process the VOD peer may need to perform in response to an on-demand request for a Content Object containing a group of Packages it is storing in its "shared" hard disk space.

The results of these tests are then compiled over time, in one embodiment, and used to maintain a VOD peer's Trust Level Factors, such as the probability of "high-speed" delivery to a relatively local VOD peer during a high load time, or the probability that a VOD peer will stay online for the next 500 hours. As noted above, these Trust Level Factors (after being parameterized for various regional domains, e.g., intra-Cluster, Super Cluster, etc) are utilized to determine, and modify over time, the Trust Level of each VOD peer.

In one embodiment, these changes in Trust Levels might also result in redeployments of groups of Packages of Content Objects. For example, if a VOD peer's Trust Level were to fall below a certain threshold, a decision might be made to move one or more groups of Packages stored on that VOD peer to a neighboring VOD peer, and to update relevant Tracking Files accordingly.

At a Super Cluster level, the Cluster Controllers in one embodiment expand their tests across Cluster and Super Cluster boundaries. As a result, they can expand the size of a Cluster by adding certain VOD peers to that Cluster, or perhaps even by combining two smaller Clusters together into a single Cluster. They can also modify the Trust Levels of VOD peers across Clusters, e.g., increasing the Trust Level of a VOD peer that demonstrates over time greater reliability in transferring files across Cluster boundaries.

In addition to performing "generic" tests to detect dynamic changes in network traffic patterns over time, and using the results of such tests to affect Trust Levels and Cluster membership (and perhaps redeploy groups of Packages of a Content Object), the Cluster Controllers within each VOD peer also monitor and track "actual" network traffic involving the deployment of Packages of Content Objects. For example, as noted above, Cluster Controllers rely upon these updated Trust Levels and Cluster IDs (as well as "free" hard disk capacity) during the Push process to determine which VOD peers should store certain groups of Packages, and associated Tracking Files, when new Content Objects are added to the network. As on-demand requests are made, and groups of Packages are Pulled from various VOD peers for delivery to a requesting VOD peer, this dynamic network traffic is also monitored.

If it is determined, for example, that an unusually large number of requests have been made for a particular Content Object, then more copies of that Content Object may be needed to maintain the level of QoS within a particular Cluster. In one embodiment, the Cluster Controllers in the Publication Masters may cause additional copies of the groups of Packages of that Content Object to be stored on other VOD peers in the Cluster, and the associated Tracking Files to be updated and propagated among these VOD peers. Conversely, as fewer such requests are encountered, existing copies of groups of Packages may be designated as "free" to be overwritten, while existing Tracking Files are updated accordingly.

Finer "tuning" may also result, for example, in revised grouping of Packages. As a Content Object becomes less popular, multiple groups of its Packages may be consolidated into a single group. Conversely, if the Content Object's popularity increases, groups of Packages may be further divided into additional groups. Moreover, if it is determined that certain VOD peers are, in effect, "weak links" (in that they are not maintaining a typical QoS level during the Pulling process), then their Trust Level may be decreased, and their stored groups of Packages redeployed, as discussed above.

In one embodiment, cumulative information, such as the popularity within a Cluster of a particular category of Content Objects (e.g., comedy), may also result from monitoring actual on-demand requests. Such information might be used, for example, during a subsequent Push process in connection with the Publication of a new comedy Content Object. More copies of Packages of that Content Object may be Pushed within that Cluster than might have otherwise been the case.

Even relatively local information could be used to increase bandwidth, and thus QoS. For example, as illustrated above with respect to FIG. 4, two groups of Packages could be "interleaved" among multiple neighboring VOD peers. Thus, alternate Packages (e.g., P1, P3, P5) might be stored on one VOD peer, while the others (e.g., P2, p4, P6) would be stored on a neighboring VOD peer. This could result in increased bandwidth to a requesting VOD peer, and thus effectively raise the QoS within a Cluster, at least with respect to that particular Content Object.

Many other attributes of network nodes and network traffic, beyond those discussed above, can be monitored and tracked dynamically over time. A feedback loop, whether implemented manually or in an automated fashion, could enable such attributes to be tweaked based upon their effect on QoS. In some cases, the additional network traffic imposed by the monitoring activity itself may outweigh the benefits achieved by tracking certain attributes. Over time, however, the system may reach a form of homeostasis, in which a relatively optimal set of attributes is monitored and tracked dynamically so as to maximize overall NQoS.

### II. IMPLEMENTATION DETAILS

To better understand how the key concepts discussed above can be implemented, principal data structures are described below, as are communications protocols employed by VOD peers, along with explanations of the dynamic processes involved in publishing, retrieving and monitoring access to Content Objects in the VOD system of the present invention.

For example, every VOD peer includes a unique "Node ID" that enables VOD peers generally to identify and access one another, and more specifically to determine their relative proximity and trustworthiness for the purpose of identifying relatively trusted neighboring VOD peers. Such "trusted neighbors" can be relied upon for accessing Content Objects in a distributed fashion while maintaining NQoS.

Just as each VOD peer is uniquely identified via a Node ID, each Content Object, or more specifically, each Event of publishing a Content Object, is uniquely identified via a "CRID" (Content Reference ID, as discussed above) that enables a publisher to specify geographic and other restrictions on accessing that Content Object, as well as metadata describing and enabling users to browse and search for that Content Object.

As noted above, when a Content Object is published (i.e., an Event occurs), and its component Packages are distributed among VOD peers, various Tracking Files are generated in a distributed fashion to associate the CRID representing that Content Object with the VOD peers storing particular groups of such component Packages. These Tracking Files are also updated to reflect the current locations of the various copies of the component Packages of each Content Object, e.g., when copies are overwritten or additional copies are generated due to changes in user viewing behavior or network characteristics. Embodiments of data structures for these Tracking Files are discussed below, along with their corresponding Tracking Index data structures.

Just as Tracking Files are generated to maintain the locations of component Packages of a Content Object, corresponding Tracking Indexes are also generated (whether in a centralized or distributed fashion) to maintain the locations of VOD peers storing copies of these Tracking Files. For example, when a user requests access to a particular Content Object, the CRID representing that Content Object is used to search for Tracking Files (either directly, or indirectly via Tracking Indexes) that are stored on VOD peers relatively proximate to the requesting VOD peer.

In addition to these principal data structures, the manner by which VOD peers communicate among one another is also discussed, so as to illustrate how key dynamic network processes are implemented. For example, to publish a Content Object onto the network, certain communications protocols are employed to announce the Event, and then to generate and distribute (i.e., Push) component Packages, as well as corresponding Tracking Files and Tracking Indexes, among various VOD peers throughout the network.

When a user requests access to a Content Object (e.g., to watch a movie), other protocols are employed to search for and download (i.e., Pull) the component Packages of that Content Object, including searching for Tracking Indexes and Tracking Files, and then initiating downloads of the component Packages from different "feeder" VOD peers in a sufficiently timely manner to enable relatively immediate and continuous viewing of the Content Object "on demand."

Moreover, these communications protocols, coupled with the system's architectural components, maintain NQoS by monitoring various aspects of the network, including relative access times among VOD peers, actual user behavior (e.g., increasing demands for viewing certain Content Objects in one or more geographic areas during particular periods of time) and other network characteristics (e.g., network failures). By dynamically monitoring such factors, users can be apprised of the state of the system even before requesting access to a particular Content Object.

For example, while a user is browsing or searching for content, the user interface could reflect the fact one particular Content Object is available virtually instantaneously while another might require an overnight download (e.g., by displaying the titles of respective movies in colored "green" or "red" text). This is possible because the current system state is known as a result of such monitoring, and can be communicated among VOD peers in a distributed fashion. Moreover, another user (e.g., in a different Cluster) might encounter a different display, perhaps indicating that both Content Objects are instantaneously available (e.g., due to the relative proximity of copies of certain component Packages of such Content Objects, or quicker network response times among relevant neighboring VOD peers, or a combination of these and other factors).

To implement these communications protocols, a basic set of messages is employed, many of which are involved in multiple different communication scenarios. For example, certain basic messages are employed whenever two VOD peers perform an initial "handshake" to establish further communications, whether such communications will involve Publishing a Content Object, searching for a Tracking File to view a desired Content Object, monitoring network behavior, or some other purpose. Other "extended" messages are employed for certain specific purposes, as will be discussed in greater detail below.

### A. Node and Content Data Structures

### 1. Node ID

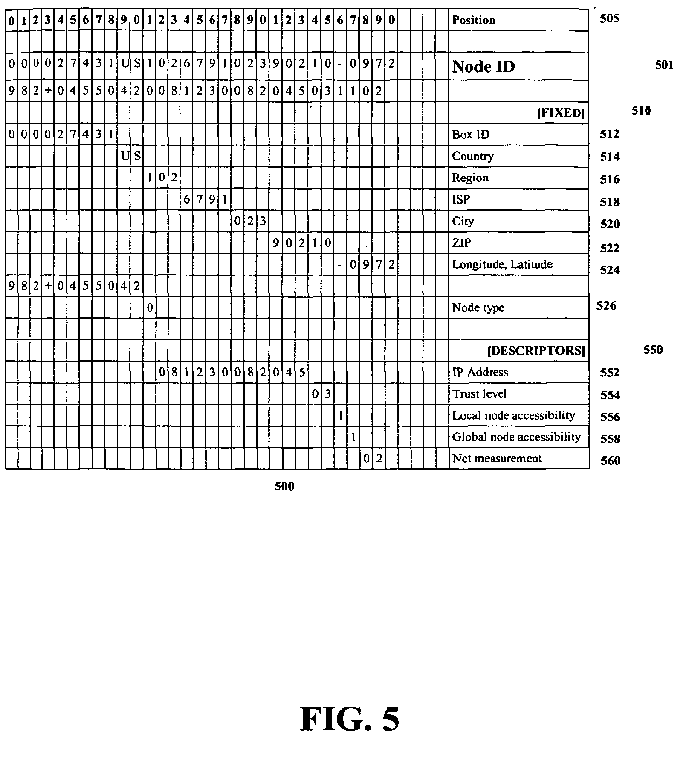

Turning to **FIG. 5****,** one embodiment of a "Node ID" data structure **500** is illustrated. It should be noted that, for ease of illustration, the values are listed in alphanumeric form. The "Positions" **505** represent consecutive bytes of data. The entire Node ID **501** itself is shown on multiple rows as a string of consecutive bytes, with each component thereof then broken down in subsequent rows. Actual data storage efficiency can, of course, be increased by employing more compact standard forms of representation, including standard compression techniques.

Node ID **501** represents a unique VOD peer, and includes various attributes of that VOD peer, such as a unique identifier, as well as other static and dynamic components. These components of Node ID **501** can be divided into two categories: a "Fixed" part **510,** that includes attributes of the VOD peer that are not likely to change frequently, if at all, and a set of "Descriptors" **550,** that includes network-related attributes that may change dynamically as the state of the network or user behavior changes over time.

Among the Fixed components **510** of Node ID **501** is a unique "Box ID" **512.** In this illustrated embodiment, Box ID **512** is a unique 9-byte identifier that distinguishes this physical VOD peer hardware device from all others. In addition to being a single unique identifier, components of Box ID **512** could further identify the manufacturer, model and version of the hardware (not shown). Moreover, by being unique, Box ID **512** could, for example, enable certain attributes (even ones not part of Node ID **501**) to remain associated with this VOD peer while other attributes may change. This could be useful for security, firmware upgrades, mobile applications, and in a variety of other contexts.

Another fixed component is the "Country" **514** in which the box is located. In one embodiment, this value, illustrated as a 2-byte field, could represent the country in which the box is deployed, e.g., determined when the box is initially powered on. It could remain fixed by default (e.g., upon subsequent "power on" events), yet be modifiable, for example, if the box is transported to another location.

Another fixed component is the "Region" **516** in which the box is located. In one embodiment, this Region **516** is a 3-byte identifier that represents a unique region within Country **514.** Various standards organizations have developed standards for region identifiers within particular countries. For example, within the United States, identifiers of individual states could be used (though larger regions could also be used, such as census regions, e.g., "Pacific" for CA, OR and WA). Other countries might have different non-state designations, such as provinces and territories within Canada (e.g., AB for Alberta). In one embodiment, different standards are employed across different countries, though Region **516** falls within Country **514,** while City **520** (discussed below) falls within Region **516.**

Another fixed component is the "ISP" **518** or Internet Service Provider through which the box obtains Internet access. In one embodiment, ISP **518** is a 4-byte identifier that represents the current ISP being used. Users are unlikely to change ISPs frequently in a given location, though moving the box to another location (temporarily or otherwise) might well result in a change to ISP **518.** This information can be utilized, for example, to identify groups of VOD peers sharing potentially faster or more trusted connections (e.g., due to a common ISP or multiple well-connected ISPs).

As noted above, City **520** is another fixed component that, in one embodiment, is a 3-byte value identifying an area within Region **516** (which in turn lies within Country **514**). As cities are relatively universal, City **520** will typically be unique within Region **516,** though other fields may serve to further distinguish this area (e.g., ZIP **522** or Longitude/Latitude **524** discussed below). It should be noted that these geographic fields (Country **514,** Region **516,** City **520,** ZIP **522** and Longitude/Latitude **524**), along with ISP **518,** can be used for various purposes. As noted above, they facilitate identification of groups of VOD peers that may share faster or more trusted connections (and thus may be part of the same Cluster). In addition, such fields can be used to limit access to particular Content Objects (e.g., restricted to a particular state in the U.S.) or to identify behavioral usage patterns (e.g., comedies more prevalent in a particular geographic area) that may result in modified distribution of Content Objects among VOD peers in particular geographic areas. Virtually any network, behavioral or other characteristic that is monitored can be utilized in conjunction with this geographic information to make decisions such as redeploying copies of Content Objects (or individual groups of Packages), adjusting Trust Levels or Cluster membership, etc.

As referenced above, ZIP **522** (illustrated in one embodiment as a 5-byte identifier) further serves to identify the geographic area in which the box is currently deployed. Standard zip codes can be utilized for this purpose, with different standards employed where necessary for particular countries.

As also referenced above, Longitude/Latitude **524** (illustrated in one embodiment as a 16-byte identifier) further identifies the geographic area in which the box is currently deployed with even greater specificity. These geographic fields can be utilized together to more precisely identify particular geographic areas, or individually for a discrete purpose (e.g., to implement a very specific content access restriction). As noted above, net proximity can be determined at varying levels of precision by employing standard IP location databases that rely on some or all of these geographic identifiers to different degrees.

The final fixed component, Node type **526,** is illustrated in this embodiment as a single-byte identifier that distinguishes among different categories of VOD peers. For example, publishers can be distinguished from dedicated VOD Support Servers, as well as from "ordinary" VOD peers. Though these distinctions need not necessarily be mutually exclusive, they can prove useful, for example, in quickly including or excluding certain categories of VOD peers. For example, certain functions, such as initiating software upgrades or providing certain fallback services in the event of a network "emergency," might be limited to a particular category of VOD peers, such as the VOD Support Servers. In such instances, Node type **526** can be relied upon to identify quickly those VOD peers meeting that criteria.

Moving on to the Descriptors **550,** IP Address **552** is illustrated in one embodiment as a 12-byte field representing a standard routable IP address. IP Address **552** could be either static or dynamic, and of course could change relatively frequently. Nevertheless, it can be relied upon, for individual sessions or relatively short periods of time, as a convenient means of identifying VOD peers for exchanging messages and other forms of communication (discussed in greater detail below).

Other Descriptors **550** may be changed even more frequently, as they reflect dynamic changes in the network infrastructure, bandwidth and reliability. For example, Trust Level **554** indicates a measure of relative reliability of a VOD peer. Implemented as a 2-byte value in one embodiment, it might differentiate 16 different levels of "trust," based upon various Trust Level Factors (discussed above) that reflect characteristics such as bandwidth and reliability monitored dynamically over time. Trust Level **554** can be used for a variety of purposes, such as determining Cluster membership and accessible neighboring VOD peers, as well as affecting the processes of distributing and accessing Content Objects and their component Packages.

Two additional Descriptors **550** are Local node accessibility **556** and Global node accessibility **558** (each single-byte values in one embodiment). These two fields indicate respectively whether the local (router) and global (cluster) ports (e.g., on the Internet router in the home in which the VOD peer box is deployed) are open or closed. For example, if the local port is closed (e.g., Local node accessibility **556** has a value of "0"), then the VOD peer may not be accessible directly due to a firewall/NAT router, requiring special indirect communications techniques (e.g., being contacted indirectly via a VOD Support Server or neighboring "local" VOD peers) to establish VOD network communications. Otherwise, a current routable IP Address **552** may be relied upon for such communications. If the global port is closed (e.g., Global node accessibility **558** has a value of "0"), then the VOD peer may not be accessible directly outside of its "local" Cluster, also requiring special indirect communications techniques (e.g., when an ISP loses connectivity with an entire Cluster, which is likely to occur very rarely, if ever). Both of these fields provide a relatively quick mechanism for determining the form of communications that may be necessary for other VOD peers to communicate with a particular VOD peer (based upon the values of these fields within the target VOD peer's Node ID **501**).

Finally, the remaining Descriptor, "Net measurement" 560, is implemented in one embodiment as a 2-byte field reflecting the current results of certain dynamically monitored factors. As discussed above (and below in greater detail), the Cluster Controllers of each VOD peer (in one embodiment) perform various tests to monitor and detect changes in patterns of network traffic generally, as well as "behavioral" traffic related to the deployment and usage of Content Objects and their component Packages. These values reflect the results of such tests. For example, a Cluster Controller might maintain averages over time of a periodic hourly "ping" to a well-known stable server close to an Internet Backbone router (e.g., a VOD Support Server). Such an average could be used as one measure of reliability, reflected in the Net measurement **560** value.

### 2. CRID

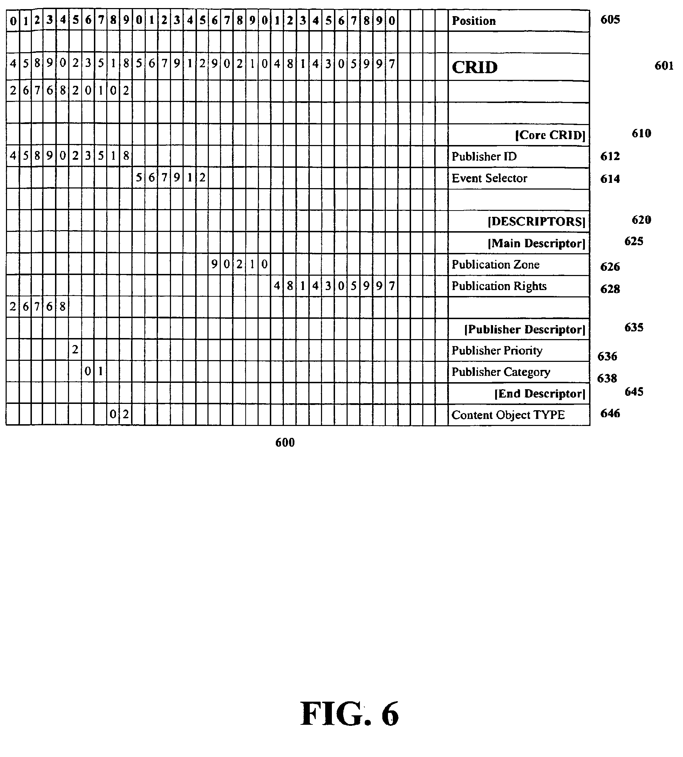

As discussed above, just as each VOD peer is uniquely identified by a Node ID, each Event of Publishing a Content Object is uniquely identified by a Content Reference ID or CRID **600,** the data structure of which is illustrated in **FIG. 6****.** In one embodiment, CRID **600** is used, for example, within Tracking Files to associate a published Content Object with certain VOD peers storing copies of component Packages of that Content Object. CRID **600** is also used within Tracking Indexes to associate that published Content Object with certain VOD peers storing copies of such Tracking Files.

As with the Node ID data structure **500** illustrated in **FIG. 5****,** CRID data structure **600** lists values in alphanumeric form for ease of illustration, with "Positions" **605** representing consecutive bytes of data (which can, of course, be represented more efficiently utilizing standard compression and other data representation techniques). Here too, the entire CRID **601** is shown on multiple rows as a string of consecutive bytes, with each component thereof then broken down in subsequent rows.

CRID **601** represents a unique published Event, distinguishing, for example, not only one movie from another, but also a particular version of that movie from a different publisher, and even a different form of that movie from the same publisher (e.g., a trailer, or perhaps even a widescreen version, as opposed to a standard aspect ratio version, or a version with subtitles or a different primary language, among other variations). Components of CRID **601** can also be divided into two categories: a "Core" CRID **610,** which uniquely identifies the publisher as well as the Event, and a set of "Descriptors" **620** which includes access restrictions as well as metadata relating to the publisher and the published Content Object.

In one embodiment, Core CRID **610** includes two fields, a "Publisher ID" **612,** which uniquely identifies the publisher of the Event (illustrated in one embodiment as a 10-byte value), and an "Event Selector" **514,** which uniquely identifies the Event from that publisher (illustrated in one embodiment as a 6-byte value). In another embodiment, Event Selector **514** may itself be unique even across publishers. This Core CRID **610** provides a relatively compact unique identifier for each Event published on the network.

In addition to Core CRID **610,** a set of Descriptors **620** provides further information relating to the Event. In one embodiment, illustrated in **FIG. 6****,** three Descriptors are shown: a "Main Descriptor" **625,** which outlines the access limitations associated with the Event, a "Publisher Descriptor" **635,** which provides further attributes relating to the publisher of the Event, and an "End Descriptor" **645,** which provides certain attributes relating to the Content Object published in connection with that Event.

In the illustrated embodiment, Main Descriptor **625** includes two fields: "Publication Zone" **626,** which identifies the area from which the Publication emanates (e.g., a 5-byte zip code), and "Publication Rights" **628,** which indicates where the published Content Object may be accessed (e.g., a 10-byte range of zip codes). In other embodiments, multiple zip code ranges, or other means of designating one or more contiguous or discontiguous geographic areas, may be employed. Moreover, additional limitations, beyond geographic limitations, could be utilized, such as access restrictions based upon users' profiles, behaviors, or virtually any other static or dynamic attribute.

In this embodiment illustrated in **FIG. 6****,** Publisher Descriptor **635** includes two fields, the first of which is "Publisher Priority" **636,** shown as a single-byte value reflecting not only different types of publishers, but also a prioritized order within each such type. For example, most movie publishers could be assigned a default level of "2," with "top publishers" (of the most popular movies, e.g., based on average demand) assigned a value of "1." And the lower priority values might be assigned not only to "lower priority" movie publishers, but to entirely different types or classes of publishers, such as a value of "9" for a publisher of streaming content. In one embodiment, "private" publishers might even be assigned a value of "0" (e.g., considered neither low nor high, but unique) to enable a simple means of differentiating publisher categories relatively quickly. In still other embodiments, these differing types of prioritization may be combined. Publisher Descriptor **635** also could include a "Publisher Category" **638** (shown in **FIG. 6** as a 2-byte field), which could be employed to identify the primary genre of Content Objects typically associated with a given publisher. In an alternative embodiment (not shown), an "Event Category" field could be employed (e.g., in a separate "Event Descriptor") to distinguish Content Object genres on a more discrete (e.g., "movie by movie") basis, as opposed to categorizing publishers. Such information could also (or exclusively) be stored in a separate, centralized "Metadata DB," and associated via CRID **601** (or Core CRID **610**), as discussed in greater detail below.

Finally, "End Descriptor" **645** is illustrated, in one embodiment, with a single field, "Content Object TYPE" **646** (e.g., a 2-byte value), to distinguish among different forms or types of Content Objects. For example, movies could be distinguished from their trailers, or from other types of "extra" content, as is typically found on many of today's DVDs. As noted above, aspect ratios (e.g., widescreen) or different primary languages could also be distinguishing factors. Moreover, completely different types of content (e.g., documentaries, training videos, educational videos, user-generated streaming clips, etc) could also be the source of distinguishable categories of Content Objects. As noted above, additional "Event-related" information could be included within an "Event Descriptor" and/or separately maintained in a centralized "Metadata DB" accessible to VOD peers on the network.

### 3. Tracking Files

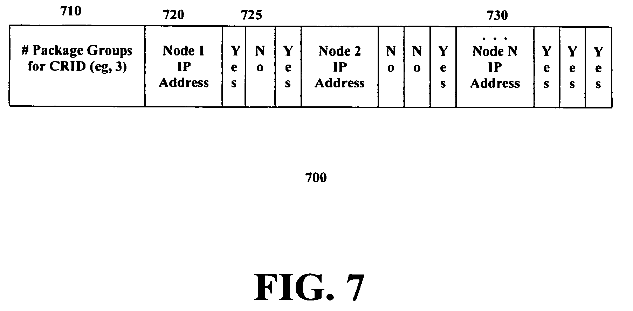

Turning to **FIG. 7****,** an embodiment of a portion of a Tracking File data structure **700** is illustrated, which maintains the locations of certain VOD peers storing particular groups of Packages of a published Content Object (i.e., an Event), and associates such VOD peer locations with the corresponding CRID representing that Event. In one embodiment, a separate Tracking File **700** is generated for each CRID representing an Event, while in other embodiments (not shown) a Tracking File could include entries for multiple CRIDs (Events), wherein each entry could identify for a particular CRID the various VOD peers storing component Packages of the Content Object associated with that CRID.

As noted above, Tracking File **700** is generated and maintained in a distributed fashion. Thus, the copy of Tracking File **700** stored on a particular VOD peer may include entries for only a subset of the VOD peers (e.g., neighboring VOD peers within a "leaf" Cluster) storing groups of Packages of a published Content Object (represented by a corresponding CRID). Other versions of Tracking File **700** (e.g., stored on a more trusted VOD peer) might represent a larger domain of VOD peers storing such groups of component Packages, including, for example, VOD peers within a larger "superset" Cluster in addition to those in "subset" leaf Clusters. In one embodiment, illustrated in **FIG. 7****,** all of the component Packages of a Content Object are accounted for in each Tracking File, so that multiple Tracking Files need not be located to obtain access to a particular Content Object.

Though illustrated in a tabular format, data within Tracking File **700** can be represented in more efficient formats, including compressed hash tables, linked lists and other standard low-level data structures and formats. In one embodiment, the first field of Tracking File **700** identifies the number of groups of component Packages ("Package Groups") that are stored on separate VOD peers. For example, a Content Object might be divided into 100 separate component Packages (of a fixed size, in one embodiment, and differing sizes in other embodiments), yet grouped into only 4 distinct Package Groups (e.g., with "Package Group 1" containing the first 10 Packages, "Package Group 2" and "Package Group 3" each containing subsequent groups of 20 Packages, and "Package Group 4" containing the remaining 50 Packages).

In the embodiment illustrated in **FIG. 7****,** this field **710** contains a "3," indicating that the Content Object associated with the CRID identifying Tracking File **700** contains three distinct Package Groups, copies of which are stored on individual VOD peers. Following field **710** is an entry for each such VOD peer, including the Node ID (or, in one embodiment, simply the IP address) of that VOD peer, followed by an indication of whether that VOD peer stores a copy of each Package Group. For example, following field **710** is the IP address for "Node 1" **720,** followed by values **725** for each of the three Package Groups indicating whether Node 1 stores a copy of that Package Group. Subsequent entries follow for each remaining VOD peer (through "final" entry **730**) storing one of more of these Package Groups. The number of such VOD peers could be designated by various means (not shown), such as a separate field or a null value in a linked list.

As noted above, a querying VOD peer might initially conduct a search of neighboring VOD peers based upon a CRID corresponding to a desired published Content Object (Event) and be unsuccessful in directly locating a VOD peer storing a copy of a Tracking File associated with that desired CRID. As will be explained in greater detail below, such a search might first yield a VOD peer containing a "Tracking Index" which will indirectly reference one or more VOD peers storing a copy of such a Tracking File. Moreover, even upon finding a relevant Tracking File, additional searches might be required if one or more of the VOD peers referenced in that Tracking File are unable to complete a download request (e.g., due to device or network failure, overloaded bandwidth or some other problem).

### 4. Tracking Index

As noted above, if a Tracking Index is identified before a relevant Tracking File is located, then the Tracking Index is utilized to locate one or more relevant Tracking Files based upon the CRID corresponding to the published Content Object (Event) that a requesting VOD peer desires to download and view. As also noted above, the Tracking Index and corresponding Tracking Files are generated when the Event initially occurs (i.e., when the relevant Content Object is initially published). These files are generated in a distributed fashion, e.g., across Clusters and down from "superset" to "subset" Clusters, though (for the sake of efficiency) not necessarily down to the level of each "leaf" Cluster. As changes are made in the deployment of Content Objects, including their component Packages (and groups thereof), corresponding changes may also be necessitated in these files (accomplished in a similar distributed fashion). Such changes may result from a variety of different network-related and behavioral causes. For example, they could result from device or network failures, measured changes in network bandwidth, as well as increased and/or decreased demand for particular Content Objects generally or within particular Clusters.

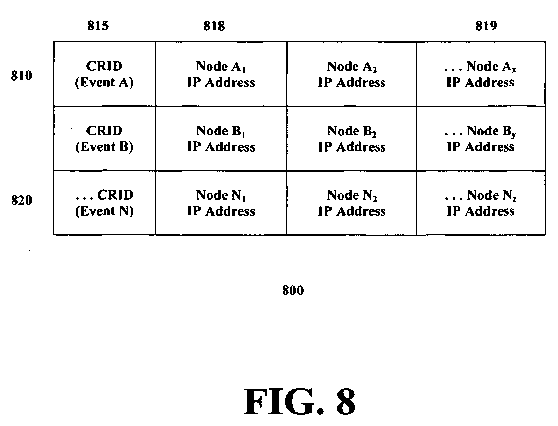

One embodiment of a Tracking Index data structure **800** is illustrated in **FIG. 8****.** Similar to that of Tracking File **700** discussed above, a tabular format is employed, with data that also can be represented in more efficient formats, including compressed hash tables, linked lists and other standard low-level data structures and formats. As noted above, a separate Tracking Index may be generated for each CRID (Event); or, as illustrated in **FIG. 8****,** a single Tracking Index could include entries for each such CRID (e.g., for each Event published within a particular Cluster).

In **FIG. 8****,** each row represents a particular Event, beginning with row **810** representing "Event A", with each subsequent row representing another Event (through "final" row **820** representing "Event N"). For each Event, the first field identifies the CRID **815** corresponding to that Event. This field would, of course, be unnecessary if, for example, a separate Tracking Index is generated for each CRID, in which case the CRID could be used to locate that separate Tracking Index file (e.g., via a hash table). Each CRID entry includes a list of IP Addresses (or Node IDs) of VOD peers storing a copy of a Tracking File corresponding to that CRID. The IP address of the first listed VOD peer is illustrated by column **818,** followed by IP addresses of subsequent VOD peers through column **819,** representing the IP address of the "final" VOD peer.

Note that the number of VOD peers storing copies of Tracking Files corresponding to a particular CRID (Event) may vary from one CRID to another. And a particular VOD peer might well store copies of Tracking Files associated with more than one CRID (whether stored as separate Tracking Files or as a single Tracking File with multiple CRID entries). Moreover, as noted above, in one embodiment, the number of different CRID entries within a Tracking Index may be higher in the Tracking Indexes stored on more trusted VOD peers (e.g., identifying additional VOD peers within various "subset" Clusters).

### B. Inter-Node Communication

Having described certain significant data structures, including the Node ID of VOD peers, the Content Reference ID (CRID) of Events in which Content Objects are published, and the Tracking Index and Tracking Files that are generated to maintain the distributed locations of groups of component Packages of such Content Objects, attention is now directed to the communications protocols and other means by which VOD peers communicate with one another (as well as with VOD Support Servers).

### 1. Initial Handshake

In one embodiment, whenever two VOD peers communicate directly with each other (e.g., via TCP without an intermediary serving as an application-level relay), one side acts as the "initiator" while the other side acts as the "responder." Thereafter, once an initial connection is established, much of the remaining communications architecture can be symmetrical.

This establishment of a TCP stream connection (where TCP connections are employed as an overlay network) is divided into discrete phases. The initial phase, "Phase A," involves the preliminary activities necessary to discover the IP addresses and ports used to establish an initial TCP connection. This is followed by a "Phase B" in which raw TCP connections are established, typically in accordance with published standards.

For example, in the "normal" case, exactly three TCP protocol data units (PDUs, or packets) are exchanged to set up the connection. The first exchanged packet has the "SYN" flag set, the second has both the "SYN" and "ACK" flags set, and the third has only the "ACK" flag set. In this embodiment, the VOD peer sending the first and third packets is deemed the "initiator," while the VOD peer sending the second packet is deemed the "responder."

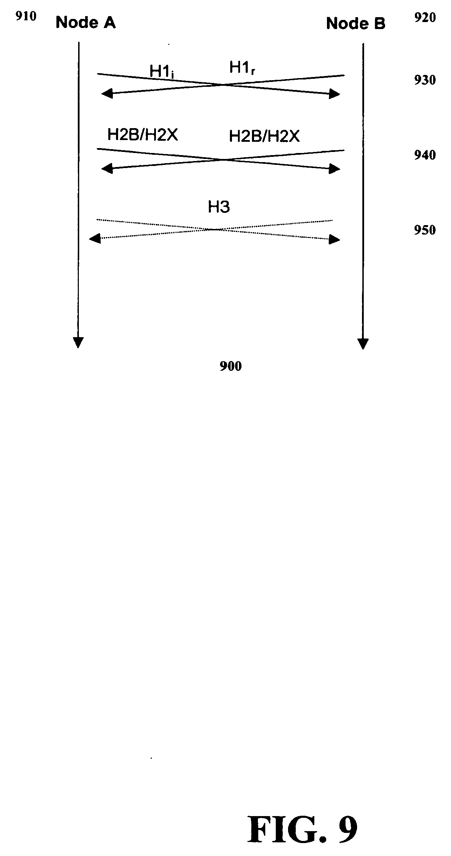

Upon completion of "Phase B," the symmetric handshaking phases illustrated in **FIG. 9** can begin. In the initial handshake phase, "Phase H1" **930,** the initiator, "Node A" **910,** and the responder, "Node B" **920,** each attempts to determine whether it has established a TCP connection with a VOD peer (as intended), or whether it has mistakenly established a TCP connection with another type of Internet-based entity. Thus, this initial handshake phase, Phase H1 **930,** is a symmetric one. Each VOD peer sends a single octet (byte), sets a timer and attempts to read another octet (byte) from the other VOD peer before the timer expires. In one embodiment, Node A **910,** the initiator, sends a message, "H1ᵢ", containing an ASCII "6" (0x36), while Node B **920,** the responder sends a message, "H1ᵣ", containing an ASCII "9" (0x39). If either side times out while waiting to receive an octet from the other side (or if it receives an unexpected value), then it will close the connection. Synchronization of its incoming or outgoing stream with the other VOD peer is unnecessary. The shutdown of these send and receive streams may in fact be implicit (e.g., when the application uses a "close(...)" or similar API element to detach itself from the connection). Otherwise, if all goes as planned (i.e., the expected octet is received in time), then the process proceeds to the next phase, "Phase H2" **940.**

Phase H2 **940** is also symmetrical in that each of the VOD peers attempts to persuade the other that it is indeed communicating with a legitimate VOD peer (as opposed to a node attempting to "crack" the system). In one embodiment, "H2X" messages are employed to perform this secure verification, while simpler "H2B" messages may be enabled (and perhaps required) for development and debugging purposes (e.g., to prevent encryption of communications that are being debugged). In this development/debug scenario, Phase H2 **940** involves both Node A **910** and Node B **920** exchanging "H2B" messages that, in one embodiment, consist of a single octet (e.g., the ASCII code for a dot or period).

In the typical production scenario, both Node A **910** and Node B **920** exchange "H2X" messages to provide secure verification. These "H2X" messages are encoded, in one embodiment, so as to be quickly and easily parsable to locate the end of the message (e.g., between 2 and 62 octets with the last octet being the only one encoded with the ASCII code for a period). They typically will contain well-seeded pseudo-random data mixed with various parameters for negotiation of security options. In one embodiment, when both sides send the "H2X" message as the Phase H2 **940** message, an additional phase, "H3" **950,** is required to complete the handshaking for the initial security setup.

On the other hand, in the development/debug scenario, if one side sends the "H2X" message while the other side sends the "H2B" message, then the handshake Phase H2 **940** completes without any need for a Phase H3 **950** to add further security to the connection. After the handshake is complete, the side that received the "H2B" message may be uncomfortable with the connection, sensing that the side that sent the "H2B" message may be using an old or preproduction version of the protocol, running in debug mode or otherwise trying to "crack" the system. Thus, it may well simply initiate a disconnection without providing any service (e.g., by sending a "DiscWithReason" message with an appropriate payload, as discussed below). If a VOD peer for some reason does not support Phase H3 **950,** its Phase H2 **940** might simply consist of sending an "H2B" message followed by reading up to 62 octets from the input stream until it encounters a terminating ASCII "period."

The initial messages in a Phase H3 **950** exchange will, in one embodiment, contain at least some value that is functionally dependent upon both "H2X" messages and another value (e.g., a cryptographic key) in a predefined order. Each side might also first verify that the received "H2X" message differs from the "H2X" message it sent (and drop the connection if it receives the same message it sent, an indicator of a possible attempt to "crack" the system). Several messages may be exchanged for additional security until verification is achieved, possibly including an exchange of Node IDs (even before the "normal" Node ID exchange following this handshake phase).

As a result of these handshake phases, the "H2B" and "H2X" messages can be received utilizing a relatively small buffer that can store a maximum-size "H2X" message (e.g., 62 octets/bytes) and simply reading from the input stream into that buffer until the terminator value (e.g., an ASCII period) is found or the buffer is full). If the first octet is the terminator value, then the message is an "H2B" message. Otherwise, it is an "H2X" message.

### 2. Message Encoding

After the initial handshake illustrated in **FIG. 9** is complete, various other "Basic" and "Extended" messages may be exchanged, depending upon the circumstances. For example, in one embodiment, VOD peers initially exchange Node IDs (in one embodiment, just IP Address, while in others the Box ID or entire Node ID) and Trust Levels. Other scenarios include VOD peer initial "bootstrap" or subsequent startup/boot processes, update and other administrative services, PUSH-related processes (such as announcements and publications), PULL-related processes (such as file searches and downloads), dynamic monitoring tests and data exchanges, and various other scenarios discussed in greater detail below.

In one embodiment, messages are encoded beginning with a 6-byte header. Strings are value-encoded using a 2-byte length. An additional 2 bytes are allotted for the protocol version employed, with another 2 bytes each for the payload size and payload type, respectively. Empty payloads are allowed in this embodiment. Examples of payload types include the following:
- 01 Search Index (Payload is always a CRID)
- 02 Request Tracking (Payload is always a CRID)
- 03 Request Content Package (Payload is CRID and Package number)
- 66 No socket connections left

In one embodiment, a message payload may consist of n elements having the same type (with each element having a fixed size, or different elements having different sizes) or different types. When a payload consists of more than one element all having the same type with a fixed known size, the first 2 bytes define the number of elements, followed by the fixed number of bytes that compose each element, as shown below:
- Example: the payload consists of three elements (a, b and c), all having the same type with a fixed known size.

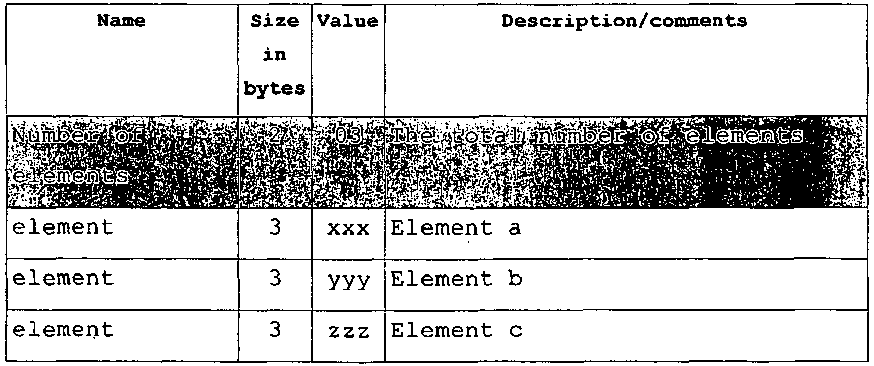

When a payload consists of n elements all having the same type, but of different sizes, then the first 2 bytes define the number of elements, followed by 2 bytes for each element that define the size of that element, followed by the bytes that compose that element, as shown below:
- Example: the payload consists of three elements (a, b and c) all having the same type, but of differing sizes (3, 4 and 5 bytes, respectively).

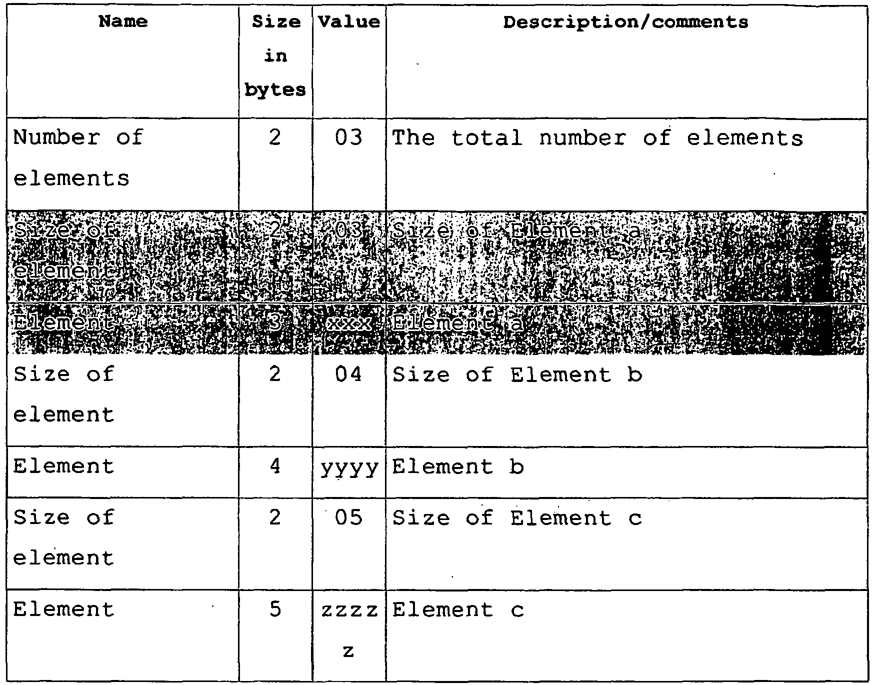

When a payload consists of n elements of different types, then various combinations of element types and sizes is possible, with elements of each type (whether of the same fixed size, or different sizes) specified together, as illustrated below:
- Example: The payload consists of various numbers of three types of elements. The first and second types of elements (type A and type B) have a fixed size. The third type of element (type C) has elements of variable sizes.

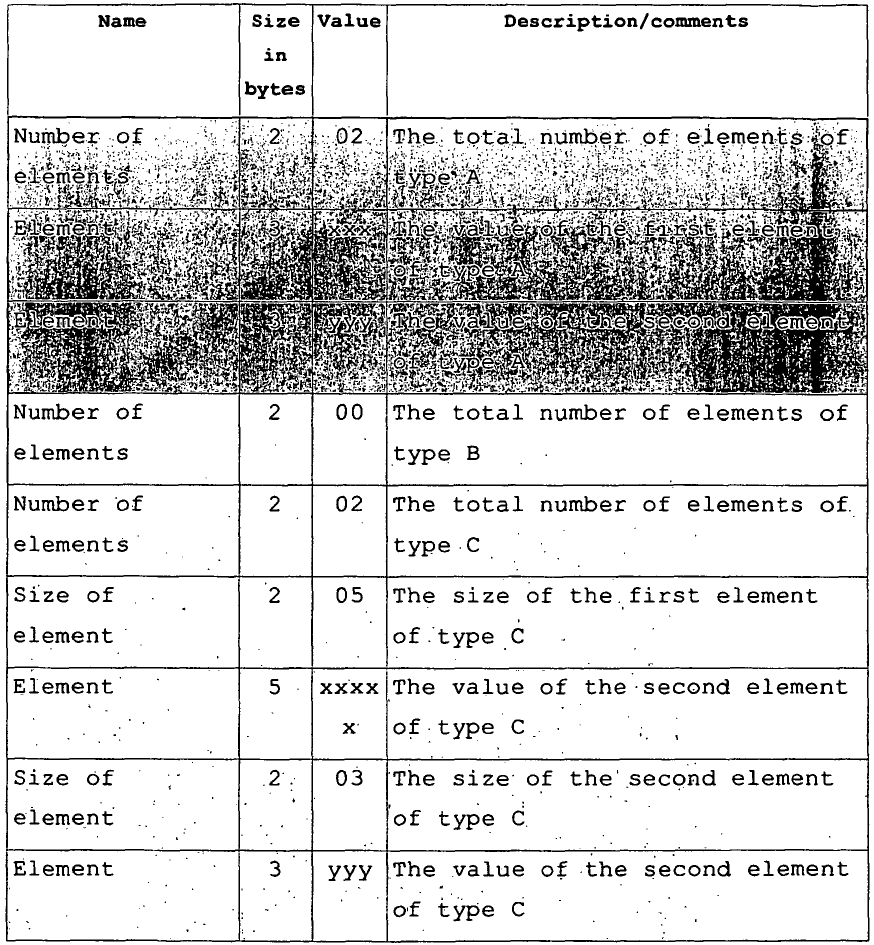

### 3. Basic Messages

Following are descriptions of embodiments of "Basic Messages" that are employed by VOD peers for various general purposes, and not necessarily restricted to a particular purpose such as the primary Push, Pull and Network Monitoring functionality of the present invention (which are invoked by "Extended Messages" as discussed below). Such general purposes include initial handshaking and login messages to establish and verify connections, indications of "idle" time as well as request cancellation and disconnection of existing connections, as discussed below.

In one embodiment, "Basic Messages" include the following:

**Initial Handshaking**

| **NAME** | **SIZE (Bytes)** | **DESCRIPTION** |
|---|---|---|
| H1ᵢ | 1 | Sent by the initiator to the responder (ASCII "6" or 0x36) |
| H1ᵣ | 1 | Sent by the responder to the initiator (ASCII "9" or 0x39) |

**Second Handshake**

| **NAME** | **SIZE (Bytes)** | **DESCRIPTION** |
|---|---|---|
| H2B | 1 | Sent by the initiator to the responder |
| H2X | 1 | Sent by the responder to the initiator |
| H3 | 2-62 | Additional Security (optional) |

**Login (LSTR) - to connect to another Node (contains Node ID of Initiator)**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 43 | Message Type (ASCII) |
| Size | 2 | | Payload Size (binary encoded) |
| Node ID | 61 | | Entire Node ID of Initiator |

**Login (ACK) - confirmation of handshaking verification (sent after accepting Login) Contains Node ID of responder Subsequent disconnection considered unexpected disconnection of "handshaked" connection, not error in handshake phase**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 44 | Message Type (ASCII) |
| Size | 2 | | Payload Size (binary encoded) |
| Node ID | 61 | | Entire Node ID of Initiator |

**Idle - may need to send message even when no substantive message necessary**

| **NAME** | **SIZE (Bytes)** | **VALUE** (**Defaul** **t)** | **DESCRIPTION** |
|---|---|---|---|
| Protocol | 2 | 01 | Version of the protocol used for the message |
| Type | 2 | 47 | Message Type (ASCII) |
| Size | 2 | | Payload Size (binary encoded) |

**CancelRequest - Cancel a request**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 47 | Message Type (ASCII) |
| Size | 2 | | Payload Size (binary encoded) |

**RequestClosed - This response is normally always returned when a request is finally responded to or cancelled**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 49 | Message Type (ASCII) |
| Size | 2 | | Payload Size (binary encoded) |

**WTDiscRequest - to enable proper shutdown of connection before closing socket "WTDiscRspGranted" message sent in response before proper shutdown initiated**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 51 | Message Type (ASCII) |
| Size | 2 | | Payload Size (binary encoded) |

**WTDiscRspGranted - response to WTDiscRequest message to initiate proper shutdown Sender of "WTDiscRequest" message initiates proper shutdown to close socket after receiving this message**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 52 | Message Type (ASCII) |
| Size | 2 | | Payload Size (binary encoded) |

**WTDiscRspDoNot - sent if disagreement regarding disconnection**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 54 | Message Type (ASCII) |
| Size | 2 | | Payload Size (binary encoded) |

**Disconnecting - alternate manner of disconnection without "asking" first Instead of exchanging "WTDiscRequest" and "WTDiscRspGranted" messages(in effect "asking permission" to close socket), this message can be sent and the shutdown performed to close the socket unilaterally**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 55 | Message Type (ASCII) |
| Size | 2 | | Payload Size (binary encoded) |

**DiscWithReason - same as "Disconnect" but Payload includes reason for disconnection Payload may include reason for disconnection in cleartext or encoded form**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 57 | Message Type (ASCII) |
| Size | 2 | | Payload Size (binary encoded) |

### 4. Extended Messages

As noted above, the "Extended Messages" include more substantive messages relating to the primary Push, Pull and Network Monitoring functionality of the present invention. In one embodiment, these Extended Messages include the following:

**Alive List Req - sent to share "alive lists" with another VOD peer Contains "alive list" of initiator**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 01 | Message Type (ASCII) |
| Size | 2 | 61n | Payload Size (binary encoded) |
| Node ID 1 | 61 | | First Node ID of "alive list" of Initiator |
| . . . | . . . | | |
| Node ID n | 61 | | Last Node ID of "alive list" of Initiator |

**Alive List Resp - response to Alive_List_Req Contains "alive list" of responder**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 02 | Message Type (ASCII) |
| Size | 2 | 61n | Payload Size (binary encoded) |
| Node ID 1 | 61 | | First Node ID of "alive list" of Responder |
| . . . | . . . | | |
| Node ID n | 61 | | Last Node ID of "alive list" of Responder |

**Buddy Download Request - message to VOD peer that has agreed to be "buddy" Payload contains CRID, Package Groups to be downloaded and Node ID of VOD peer from which Package Groups will be downloaded**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 03 | Message Type (ASCII) |
| Size | 2 | | Payload Size (binary encoded) |
| CRID | 136 | | CRID of Event |
| Node ID | 61 | | Node ID from which Package Groups will be downloaded |
| Package Group 1 | 2 | | ID of first Package Group to be downloaded |
| . . . | . . . | | |
| Package Group n | 2 | | ID of last Package Group to be downloaded |

**Buddy Download Response - sent as one or more responses to Buddy_Download_Request message Payload contains Package Groups now ready to be downloaded Empty Payload indicates current inability to act as "buddy" (e.g., due to dropped or slow connection, etc)**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 04 | Message Type (ASCII) |
| Size | 2 | | Payload Size (binary encoded) |
| CRID | 136 | | CRID of Event |
| Node ID | 61 | | Node ID from which Package Groups will be downloaded |
| Package Group 1 | 2 | | ID of first Package Group to be downloaded |
| . . . | . . . | | |
| Package Group n | 2 | | ID of last Package Group to be downloaded |

**Buddy Function Request - request to VOD peer to act as "buddy" Notifies recipient to prepare prioritized download connection (and to expect current downloading connection to drop) Payload contains CRID and Node ID of current downloading VOD peer**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 05 | Message Type (ASCII) |
| Size | 2 | | Payload Size (binary encoded) |
| CRID | 136 | | CRID of Event |
| Node ID | 61 | | Node ID from which Package Groups originally to be downloaded |

**Buddy Function Response - response to Buddy_Function_Request message Confirms VOD peer is ready to use "buddy" for alternate download Empty Payload indicates VOD peer is ready to accept download requests from "buddy"**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 06 | Message Type (ASCII) |
| Size | 2 | 0 | Payload Size (binary encoded) |

**Buddy Request - sent by VOD peer in need of "buddy" to assist in download Payload contains CRID of Event and Node ID of VOD peer from which Packages Groups originally were to be downloaded**

| **NAME** | **SIZE (Bytes)** | **VALUE (Defaul t)** | **DESCRIPTION** |
|---|---|---|---|
| Protocol | 2 | 01 | Version of the protocol used for the messages |
| Type | 2 | 07 | Message Type (ASCII) |
| Size | 2 | 0 | Payload Size (binary encoded) |
| CRID | 136 | | CRID of Event |
| Node ID | 61 | | Node ID from which Package Groups originally to be downloaded |

**Buddy Response - sent in response to Buddy_Request message Payload identifies conditions under which VOD peer can act as "buddy" to enable requester to determine whether it wants to use this "buddy" function Empty Payload indicates that VOD peer cannot currently act as "buddy"**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 08 | Message Type (ASCII) |
| Size | 2 | 0 | Payload Size (binary encoded) |
| Duration | 4 | | Estimated time in seconds during which VOD peer can act as "buddy" |
| Bandwidth | TBD | | Estimated bandwidth VOD peer can supply as "buddy" |
| Package Groups | TBD | | Estimated number of Package Groups VOD peer can supply |

**Cluster Download Complete - sent from VOD peer that is part of "feed cluster" once it has completed downloaded all of its designated Package Groups Payload contains CRID of Event Empty Payload indicates download failed and no Package Groups are stored on requesting VOD peer**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 10 | Message Type (ASCII) |
| Size | 2 | | Payload Size (binary encoded) |
| CRID | 136 | | CRID of Event |
| Node ID | 61 | | Node ID from which Package Groups will be downloaded |
| Package Group 1 | 2 | | ID of first Package Group that was downloaded |
| . . . | . . . | | |
| Package Group n | 2 | | ID of last Package Group that was downloaded |

**Cluster Download Start - sent from VOD peer responsible for publishing Event within its Cluster (telling recipient VOD peer to download specified Package Groups from Node ID of specified VOD peer**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 11 | Message Type (ASCII) |
| Size | 2 | | Payload Size (binary encoded) |
| CRID | 136 | | CRID of Event |
| Node ID | 61 | | Node ID from which Package Groups will be downloaded |
| Package Group 1 | 2 | | ID of first Package Group ready to be downloaded |
| . . . | . . . | | |
| Package Group n | 2 | | ID of last Package Group ready to be downloaded |

**Content Retrieval Ready - sent from VOD peer that is part of feed cluster, indicating that it is ready to download Package Groups to requesting VOD peer**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 12 | Message Type (ASCII) |
| Size | 2 | | Payload Size (binary encoded) |
| CRID | 136 | | CRID of Event |
| Package Group 1 | 2 | | ID of first Package Group ready to be downloaded |
| . . . | . . . | | |
| Package Group n | 2 | | ID of last Package Group ready to be downloaded |

**Content Retrieval Help Downloaded - sent from VOD peer that has been asked for help as alternative "feeder node," indicating that specified Package Groups are ready to be downloaded**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 14 | Message Type (ASCII) |
| Size | 2 | | Payload Size (binary encoded) |
| CRID | 136 | | CRID of Event |
| Package Group 1 | 2 | | ID of first Package Group ready to be downloaded |
| . . . | . . . | | |
| Package Group n | 2 | | ID of last Package Group ready to be downloaded |

**Content Retrieval Help Request - request from VOD peer for help in downloading Package Groups Sent only to VOD peers having good connection to requesting VOD peer. Help requested due to poor or lost connection with original "feeder node" Payload consists of CRID of Event, Node ID of VOD peer from which Package Groups are currently being downloaded, and IDs of Package Groups with which the requesting VOD peer requires assistance in downloading. Similar to Buddy_Request message, though instead of replacing existing connection, this message requests entirely new connection.**

| **NAME** | **SIZE** (Bytes) | **VALUE (Defaul t)** | **DESCRIPTION** |
|---|---|---|---|
| Protocol | 2 | 01 | Version of the protocol used for the message |
| Type | 2 | 15 | Message Type (ASCII) |
| Size | 2 | | Payload Size (binary encoded) |
| CRID | 136 | | CRID of Event |
| Node ID | 61 | | Node ID from which Package Groups are currently being downloaded |
| Package Group 1 | 2 | | ID of first Package Group to be downloaded |
| . . . | . . . | | |
| Package Group n | 2 | | ID of last Package Group to be downloaded |

**Content Retrieval Help Response - response to Content_Retrieval_Help_Request confirming that it will download some or all of the requested Package Groups Payload consists of CRID of Event and IDs of Package Groups it has agreed to download**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 16 | Message Type (ASCII) |
| Size | 2 | | Payload Size (binary encoded) |
| CRID | 136 | | CRID of Event |
| Package Group 1 | 2 | | ID of first Package Group to be downloaded |
| . . . | . . . | | |
| Package Group n | 2 | | ID of last Package Group to be downloaded |

**Feed Cluster Start - Sent from VOD peer wanting other VOD peers to participate in "feed cluster" content Push Payload consists of CRID of Event and Node ID of Publishing Server from which content will be downloaded**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 17 | Message Type (ASCII) |
| Size | 2 | | Payload Size (binary encoded) |
| CRID | 136 | | CRID of Event |
| Node ID | 61 | | Node ID of Publishing Server |

**Feed Cluster Response - Response to Feed_Cluster_Start message, confirming that it will participate in "feed cluster" Payload consists of Node ID of Publishing Server from which content will be downloaded**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 18 | Message Type (ASCII) |
| Size | 2 | | Payload Size (binary encoded) |
| Node ID | 61 | | Node ID of Publishing Server |

**File Check Request - request for one or more download connections from another VOD peer Payload consists of CRID of Event and IDs of desired Package Groups**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 19 | Message Type (ASCII) |
| Size | 2 | | Payload Size (binary encoded) |
| CRID | 136 | | CRID of Event |
| Package Group 1 | 2 | | ID of first Package Group to be downloaded |
| . . . | . . . | | |
| Package Group n | 2 | | ID of last Package Group to be downloaded |

**File Check Response - returns status of VOD peer in response to File_Check_Request i.e., number of download connections it can accept OR how long it will take before it can accept a connection Payload consists of number of available connections (and, if none available, also includes estimated time until connections available). Empty Payload indicates request cannot be fulfilled.**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 20 | Message Type (ASCII) |
| Size | 2 | | Payload Size (binary encoded) |
| Connections | 1 | | Number of Available Connections |
| Time | 4 | | Estimated time in seconds when Connections will be available (only used if NO Connections are currently available) |

**Global Message Request - requests all of the "global messages" from another VOD peer**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 21 | Message Type (ASCII) |
| Size | 2 | | Payload Size (binary encoded) |

**Global Message Response - response to Global_Message_Request, returning all global messages (Payload empty if there are none)**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 22 | Message Type (ASCII) |
| Size | 2 | | Payload Size (binary encoded) |

**Index File Keeping - notifies another VOD peer that it has a new/updated Tracking Index**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 23 | Message Type (ASCII) |
| Size | 2 | | Payload Size (binary encoded) |

**Index File Keeping Response - response to Index_File_Keeping request, acknowledging knowledge of new/updated Tracking Index**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 24 | Message Type (ASCII) |
| Size | 2 | | Payload Size (binary encoded) |

**Index Request - request for Tracking Index from another VOD peer Payload consists of CRID of Event associated with desired Tracking Index**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 25 | Message Type (ASCII) |
| Size | 2 | | Payload Size (binary encoded) |
| CRID | 136 | | CRID of Event |

**Index Response - response to Index_Request, returning requested Tracking Index Payload consists of requested Tracking Index (empty if not present)**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 26 | Message Type (ASCII) |
| Size | 2 | | Payload Size (binary encoded) |
| Tracking Index | VAR | | Tracking Index associated with requested CRID |

**Peer Casting Client - informs another VOD peer that it should act as a client in a "peer casting" scenario Payload consists of Node ID of VOD peer that should act as server**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 27 | Message Type (ASCII) |
| Size | 2 | | Payload Size (binary encoded) |

| **NAME** | **SIZE (Bytes)** | **VALUE (Defaul t)_** | **DESCRIPTION** |
|---|---|---|---|
| Node ID | 61 | | Node ID of Peer Casting Server |

**Peer Casting Client Response - response to Peer_Casting_Client message Empty Payload indicates Peer Casting Server has been contacted, and "peer casting" scenario has been accepted**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 28 | Message Type (ASCII) |
| Size | 2 | | Payload Size (binary encoded) |

**Peer Casting Download Setup - sent from "client" to "server" in "peer casting" scenario, confirming that connection can be set up properly**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 29 | Message Type (ASCII) |
| Size | 2 | | Payload Size (binary encoded) |

**Peer Casting Download Setup Response - response to Peer_Casting_Download_Setup message**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 30 | Message Type (ASCII) |
| Size | 2 | | Payload Size (binary encoded) |

**Published List Request - message from publisher to VOD Support Server indicating that publisher wants to announce new Event (i.e., newly published Content Object) Payload consists of CRID of Event associated with published Content Object**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 31 | Message Type (ASCII) |
| Size | 2 | | Payload Size (binary encoded) |
| CRID | 136 | | CRID of published Event |

**Published List Response - message from VOD Support Server to publisher in response to Published_List_Request Payload contains list of Node IDs that publisher should contact with announcement of new Event Empty payload indicates that VOD Support Server has determined that no VOD peer of Trust Level "2" (or below) should have access to the Event's published Content Object**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 32 | Message Type (ASCII) |
| Size | 2 | | Payload Size (binary encoded) |
| Number | 2 | | Number of Node IDs |
| Node ID 1 | 61 | | First Node ID of VOD Peer to contact to Announce New Event |
| | | | |
| Node ID n | 61 | | Last Node ID of VOD Peer to contact to Announce New Event |

**Published Announcement - announcement to another VOD peer of a new Event (Content Object published and available for download) Payload consists of CRID of new Event**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 33 | Message Type (ASCII) |
| Size | 2 | | Payload Size (binary encoded) |
| CRID | 136 | | CRID of new Event |
| Node ID | 61 | | Node ID from which Content Object corresponding to CRID is available for download |

**Published Announcement Response - response acknowledging receipt of Published_Announcement Payload consists of CRID of new Event**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 34 | Message Type (ASCII) |
| Size | 2 | | Payload Size (binary encoded) |
| CRID | 136 | | CRID of new Event |

**Publishing Complete - sent to Publishing Server when entire Content Object associated with Event has been downloaded to a particular Cluster**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 35 | Message Type (ASCII) |
| Size | 2 | | Payload Size (binary encoded) |

**Que Request - sent to VOD peer with no available download slots (containing information about requested Package Groups) Empty Payload cancels all pending queues for that VOD peer**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 37 | Message Type (ASCII) |
| Size | 2 | | Payload Size (binary encoded) |
| CRID | 136 | | CRID of new Event |

**Que Response - response to Que_Request**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 38 | Message Type (ASCII) |
| Size | 2 | | Payload Size (binary encoded) |

**Rescue Preparation - message to VOD peer having Trust Level "2", warning that help may be requested should requester's connection with a less trusted VOD peer fail**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 39 | Message Type (ASCII) |
| Size | 2 | | Payload Size (binary encoded) |

**Rescue Preparation Response - response acknowledging Rescue_Preparation message**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 40 | Message Type (ASCII) |
| Size | 2 | | Payload Size (binary encoded) |

**Tracking File Request - requests a Tracking File from another VOD peer Payload consists of CRID of Event associated with desired Tracking File**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 41 | Message Type (ASCII) |
| Size | 2 | | Payload Size (binary encoded) |
| CRID | 136 | | CRID of desired Event |

**Tracking File Response - response to Tracking_File_Request Payload consists of requested Tracking File**

| **NAME** | **SIZE (Bytes)** | **VALUE (Defaul t)** | **DESCRIPTION** |
|---|---|---|---|
| Protocol | 2 | 01 | Version of the protocol used for the message |
| Type | 2 | 42 | Message Type (ASCII) |
| Size | 2 | | Payload Size (binary encoded) |
| Tracking File | VAR | | Requested Tracking File |

### C. Dynamic Communication Processes

Having discussed certain Basic Messages and Extended Messages employed in one embodiment for communication among VOD peers, attention is now directed to the higher-level functionality implemented by employing such messages. Such functionality includes major dynamic processes of the present invention, such as initial startup (and restarts) of VOD peers, the Push process (including announcement and publication of new Content Objects), the Pull process (including searches for Tracking Indexes and Tracking Files, as well as downloading of Content Object Packages) and dynamic monitoring of network, behavioral and other attributes of the system (including the consequences of such dynamic monitoring, such as changes to Trust Levels, Cluster membership, and distribution of copies of Content Object Packages).

### 1. Node Startup

In one embodiment, when a VOD peer initially joins the network, it performs certain initial housekeeping tasks. Initially, it relies upon its default Node ID, as well as the Node ID of known VOD Support Servers, to communicate with other network devices. Such information is stored when the VOD peer device is manufactured. For example, its unique Box ID field would be predetermined when the device was manufactured, though other fields would need to be filled in by the user (via the VOD peer's user interface) and/or obtained by communicating with a VOD Support Server (or other VOD peer).

The VOD peer's internal software would initially determine whether a network connection existed by default (e.g., via a local DHCP server) and, if not, would invoke a network setup routine that would establish such a connection. In addition, in one embodiment, direct Internet connectivity is not required. For example, a VOD peer have a direct connection (or further indirect, or perhaps a "proxy" connection) with a VOD peer that does have access to the Internet. In such cases, the latter VOD peer would be responsible for relaying messages to and from the VOD peer without direct Internet access to enable full or partial network and VOD functionality. The following steps are explained assuming direct Internet connectivity, though they could be performed indirectly or via a "proxy" VOD peer.

Upon setting up network connectivity and Internet access, the VOD peer would then access its internal memory (e.g., ROM) to obtain the Node ID of one of the known VOD Support Servers, and proceed to communicate with that VOD Support Server to establish a connection and perform these initial housekeeping tasks. Such tasks might include software upgrades (to obtain the latest VOD peer client software or firmware) and time synchronization (which could, in one embodiment, be maintained on a periodic basis thereafter), as well as a "creation process" that will serve to obtain the necessary data to fill in and/or update the remaining Node ID fields, along with other initial profile information.

For example, in one embodiment, the Box ID of the VOD peer can be utilized by the VOD Support Server to check for new software or firmware updates. Upon verification of the Box ID, the VOD Support Server could reply back with a CRID that contains the update software designated for the VOD peer's device model and version number. The VOD peer could then download the update software and invoke a client-side update or installation process. In other words, such update software could be considered just another Content Object on the network; though, in this case, the CRID's "Content Object TYPE" would identify the Content Object as update software that required installation (instead of, for example, a movie designed for VOD viewing).

In addition, the VOD Support Server can access standard IP location databases (on behalf of the VOD peer being initialized) to obtain certain geographic information (such as the ISP, Country, Region and other related fields of the Node ID discussed above). Such information will be passed to the VOD peer which will update its own internal memory.

To generate the full Node ID of the VOD peer, data from additional Node ID fields (e.g., IP Address) may be obtained directly from the VOD peer, while other data may be determined indirectly via additional "test" communications. For example, the VOD peer's "Local node accessibility" and "Global node accessibility" field values may be set by exchanging certain messages (e.g., in one embodiment, pinging particular IP address and awaiting an acknowledgment) to determine whether direct access to the VOD peer is typically blocked via a firewall/NAT router, or whether a broader Cluster (e.g., a wider set of IP addresses) is accessible. Additional fields, such as the "Net measurement" field, can be determined by performing a set of standard network measurements (e.g., ping and traceroute tests), or by simply defaulting to certain values, and relying upon subsequent tests to maintain a current state of such values. Other fields (e.g., Trust Level) are set by default in this embodiment, and maintained over time as additional network measurements are obtained via the VOD peer's Cluster Controller.

In addition, in one embodiment, a user registration process is performed to register users, as well as optionally authenticate and verify users' permissions with respect to the network. For example, certain users may be provided with restricted or filtered access to certain Content Objects and/or network functionality. Such restrictions can be enforced upon startup via this initial registration process (and subsequently reverified over time and/or upon subsequent restarts). During this registration process, the VOD Support Server can obtain certain user profile and related information via the user interface software stored on the VOD peer itself (at the time of manufacture and/or via a software or firmware update), and store such information in a centrally accessible database on the network.

In one embodiment, whether a VOD peer is starting up for the first time, or restarting (e.g., due to a device or network failure, power outage, etc.), it will exchange certain information with a VOD Support Server (and/or perhaps indirectly with other VOD peers), including, for example, an updated "Alive list" (to determine known neighboring VOD peers that are "alive" or known to be recently active). Upon initial startup, a VOD peer will obtain a "high level" Alive list containing the Node IDs of very trusted VOD peers, such as VOD Support Servers (e.g., those within the same IP range as the VOD peer based upon the information obtained from standard IP location databases). In addition, the Node IDs of less trusted, but still relatively highly trusted (e.g., "Cluster level") VOD peers may.be included in this (or a separate) Alive list.

Subsequent exchanges of Alive lists (e.g., performed during periodic network monitoring processes, discussed in greater detail below) are performed, in one embodiment, at a rate determined by the VOD peer's Trust Level. In this embodiment, less trusted VOD peers are "updated" (i.e., exchange Alive lists with their neighbors) more frequently than more trusted VOD peers. For example, a VOD peer with a default Trust Level might be updated every minute, while a VOD Support Server or VOD peer with a Trust Level of 2 might only be updated hourly. As will be discussed in greater detail below, Trust Level (along with other factors) may be utilized to determine the frequency of other network monitoring tests as well.

Additional metadata, such as information specific to one or more superset Clusters of which the VOD peer is a member, may also be exchanged upon initial,or subsequent startups of the VOD peer. For example, updated Tracking Indexes or Tracking Files may be exchanged. These, of course, may also be exchanged subsequently on a periodic basis and/or triggered by a change to such files.

### 2. Publication and PUSHing of Content Objects

As noted above, when a new Content Object is published onto the network (i.e., an Event occurs), two primary functions are performed: (1) an "announcement" of the publication of the Content Object; followed by (2) the actual "publication" of the Content Object itself (i.e., the distributed Pushing of Content Object Packages onto various VOD peers).

As also discussed above, in one embodiment, the initial Publication Server generates a CRID for the Event, and then seeks Publication Announcers (e.g., trusted VOD peers closer to the areas in which the Content Object is to be published) to further announce the Event. Each of the Publication Announcers in turn selects one or more Publication Masters (relatively highly trusted VOD peers) to manage the process of publishing the Content Object.

The Publication Masters determine the "predicted" level of popularity of the Content Object (as discussed in greater detail above) and issue Interest Requests to the Publication Server (directly or indirectly via a Publication Announcer), which the Publication Server uses to determine the appropriate size and number of Packages into which the Content Object should be divided. The Publication Masters also generate and update a Tracking Index (which correlates the CRID with VOD peers storing Tracking Files) and Tracking Files (which correlate the CRID with those VOD peers onto which groups of Packages of the Content Object will be Pushed and stored).

In one embodiment, the Publications Masters will then issue Collection requests to the Publication Announcers who will designate a Collector (among themselves) to obtain the Tracking Index and groups of Packages from the Publication Server. Each Publication Master will be responsible for identifying candidate VOD peers (e.g., among those in a particular Cluster or sub-Cluster) onto which the groups of Packages will be further pushed and stored, as well as downloading such Packages to those VOD peers.

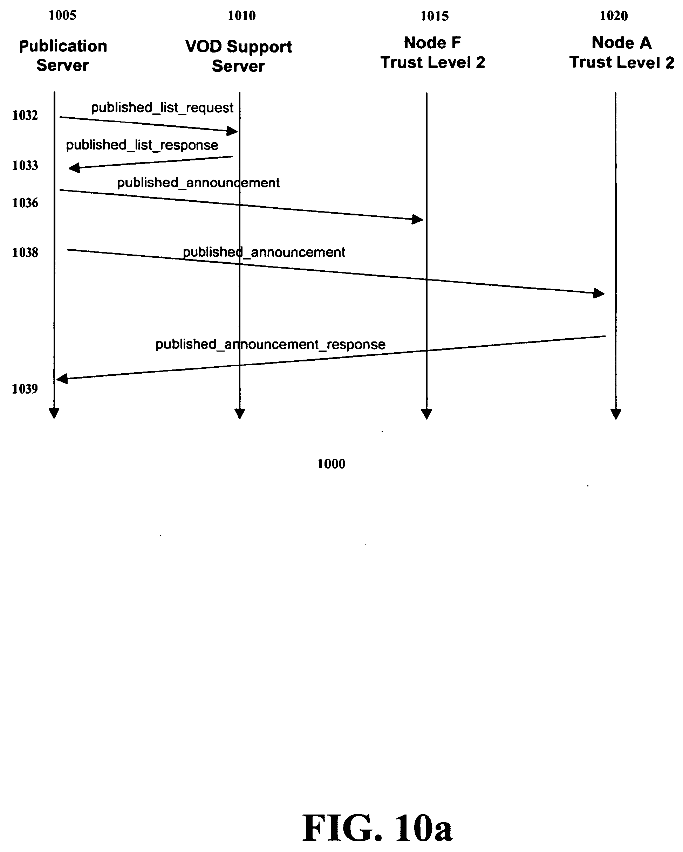

Thus, in one embodiment, the Publication Server "announces" the Event to one or more Publication Announcers (who in turn further announce the Event to one or more Publication Masters). A communications protocol **1000** to implement these announcements is shown in **FIG. 10a****,** which illustrates the process (utilizing various Extended Messages discussed above) by which a Publication Server 1005 announces an Event to one or more Publication Announcers.

In this embodiment, Publication Server **1005** first contacts a VOD Support Server **1010** to obtain a list of highly trusted (e.g., Trust Level "2") Publication Announcers. In the initial communication **1032,** Publication Server sends a published_list_request message (containing the Event CRID) to VOD Support Server **1010,** which responds in communication **1033** with a published_list_response message (containing Node IDs of candidate Publication Announcers).

Utilizing the Node IDs obtained in that response message, Publication Server then contacts these two prospective Publication Announcers ("Node F" **1015** and "Node A" **1020,** each VOD peers of Trust Level "2") and sends each of them a published_announcement message (also containing the Event CRID) in respective communications **1036** and **1038.** In this example, Node F **1015** determines that the Content Object identified in the CRID should not exist in its Cluster (e.g., because its geographic area is excluded based upon the Publication Rights field of the CRID), and thus does not respond to the published_announcement message in communication **1036.**

In other embodiments, a negative response or other acknowledgment messages could, of course, be utilized, for example, to distinguish other reasons (such as device or network failure) for the lack of a response. Moreover, as noted above, various handshaking protocols can be employed to obtain a reliable and authentic connection (along with appropriate acknowledgments), which may obviate the need for such additional messages.

Node A **1020,** however, responds in communication **1039** with a published_announcement_response, indicating that the publication of the Event can proceed within its Cluster. As noted above, in one embodiment, a similar announcement phase (not shown) will occur to identify Publication Masters that will be responsible for the publication phase of this Event.

Following this announcement phase, the Publication Masters are responsible for the actual publication (Pushing) of the Content Object Packages (and associated Tracking Files) onto candidate VOD peers. This includes, in one embodiment, the determination of which Content Object Packages are Pushed onto which VOD peers. In other embodiments, the Publication Server (or other "helper" VOD peers) could assist in (or exclusively take over) this process.

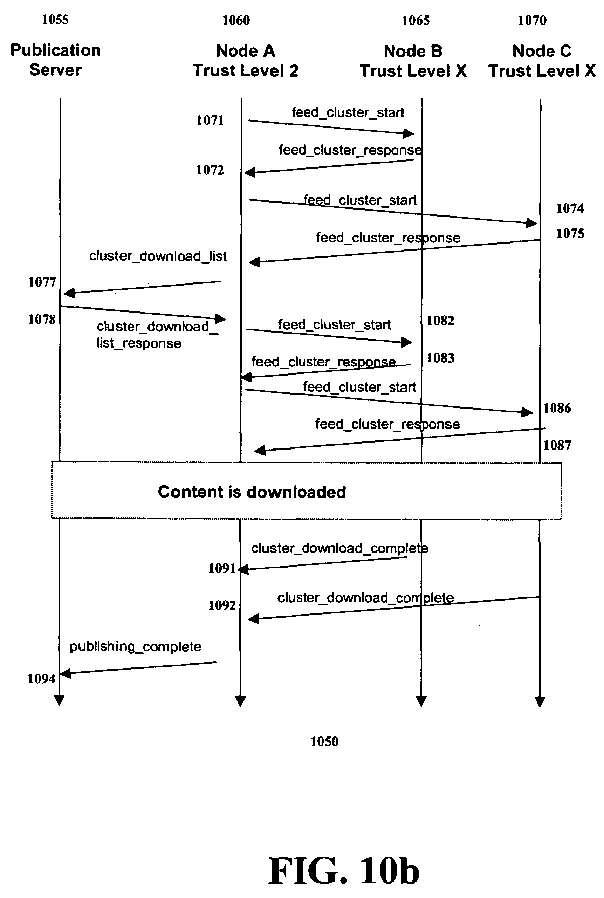

One embodiment of a communications protocol **1050** to implement this distributed downloading of Content Object packages is shown in **FIG. 10b****,** which illustrates the process (utilizing additional Extended Messages not described above) by which Publication Masters act as "feeder nodes" to effect the Pushing of Content Object Packages to other (typically slightly less trusted - e.g., Trust Level X where X might equal "4") VOD peers. Such VOD peers will, in turn, continue this distributed process (not shown) until the Content Object Packages are sufficiently distributed among and within candidate Clusters so as to enable a desired level of NQoS for subsequent VOD requests.

Turning to **FIG. 10b****,** "Node A" **1060** (i.e., one of the Publication Masters) identifies two of these candidate VOD peers ("Node B" **1065** and "Node C" **1070**) to which particular Content Object Packages are to be Pushed and initiates communications to effect the downloading of such Content Object Packages. In communication **1071,** Node A **1060** sends a feed_cluster_start message to Node B **1065** (indicating its intent to include Node A **1060** in the "feed cluster") and awaits a feed_cluster_response message from Node B **1065** (in communication **1072),** confirming Node A's consent (e.g., that it has available space, etc). Similarly, Node A **1060** sends a feed_cluster_start message to Node C **1070** (in communication **1074**) and awaits a confirming feed_cluster_response message from Node C (in communication **1075**).

In this embodiment, upon receiving responses to these messages, Publication Master Node A **1060** sends a cluster_download_list message to Publication Server **1055** (in communication **1077**), in order to notify Publication Server **1055** of the list of candidate VOD peers in this "feed cluster" (i.e., Node B **1065** and Node C **1070**) so that Publication Server **1055** may prioritize and schedule Content Object Package downloads to these VOD peers itself should it decide to take on this task. No response is required in this embodiment, though communication **1078** illustrates a negative cluster_download_list_response message.

Node A **1060** then schedules the download of such Content Object Packages to Node B **1065** and Node C **1070** (via respective communications **1082** and **1086,** and respective responses **1083** and **1087,** involving similar feed_cluster_start and feed_cluster_response messages). Then, the actual file transfer downloads of the Content Object Packages (not shown in detail) is initiated. While not shown, this distributed process continues until the relevant Content Object Packages are Pushed not only to Node B **1065** and Node C **1070,** but to all of the candidate VOD peers in the target Cluster.

Once this distributed Pushing of Content Object Packages to all candidate VOD peers in the target Cluster is complete, Node B **1065** and Node C **1070** each sends a cluster_download_complete message (via respective communications **1091** and **1092**) to Node A **1060,** which in turn notifies Publication Server **1055** that its portion of this distributed Push process is complete by sending a publishing_complete message via communication **1094.**

### 3. "Instant Play" and the PULLing of Content Objects

Once Content Objects have been published and their component Packages Pushed to VOD peers throughout various Clusters, users may invoke VOD functionality of the present invention to view such Content Objects (often instantaneously) with a consistent NQoS that is enabled by a variety of features, many of which have been discussed in great detail above.

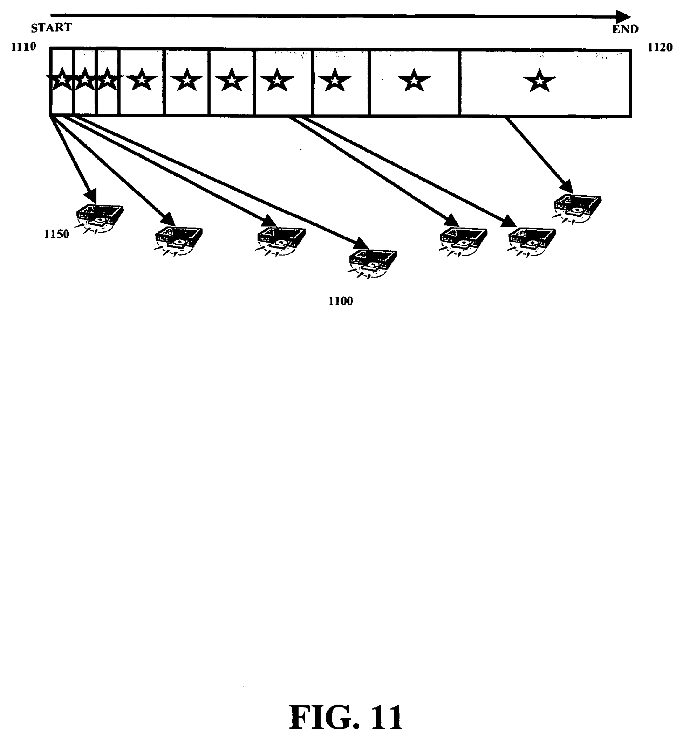

One such feature which facilitates the "instant play" aspect of the present invention is the division of Content Objects into component Packages and distribution of groups of such Packages among Clusters of VOD peers throughout the network. This distribution of Packages of Content Object **1100** is illustrated in **FIG. 11****.**

As discussed above, in one embodiment, Content Objects (e.g., movies) typically have a linear progression from start to finish. By grouping Content Object Packages into smaller groups toward the start **1100** of a Content Object **1100,** and progressively larger groups toward the end **1120** of that Content Object 1100, and storing copies of these smaller earlier groups on relatively more VOD peers **1150,** a VOD peer requesting VOD viewing of Content Object **1100** can obtain such earlier groups relatively quickly (i.e., because they are smaller and more likely to be nearby due to their storage on many more other VOD peers). Subsequent groups of Packages of Content Object **1100** can be downloaded in parallel, utilizing the additional time that is required to view Content Object **1100** in sequential fashion to allow for the longer time required to download such groups (due to the fact that there exist relatively fewer copies of such groups of Packages, as well as their larger size).

In one embodiment, this is accomplished by dividing Content Object **1100** into variable length Packages (e.g., earlier Packages being smaller and subsequent Packages being progressively larger). In other embodiments, Packages of Content Object **1100** can be a fixed size, with variability in size being achieved by grouping fewer or more of such Packages for storage on VOD peers **1150.** Employing progressively larger variable-size Packages (or progressively more fixed-size Packages) is, of course, only one of many different possible implementations of the same basic principle. For example, sizes of variable-size Packages (or numbers of fixed-size Packages) might vary only at the start **1110** or finish **1120** of Content Object **1100,** or in other patterns that effectively provide the result of facilitating "instant play" as well as consistent and reliable downloading of Packages consistent with VOD functionality.

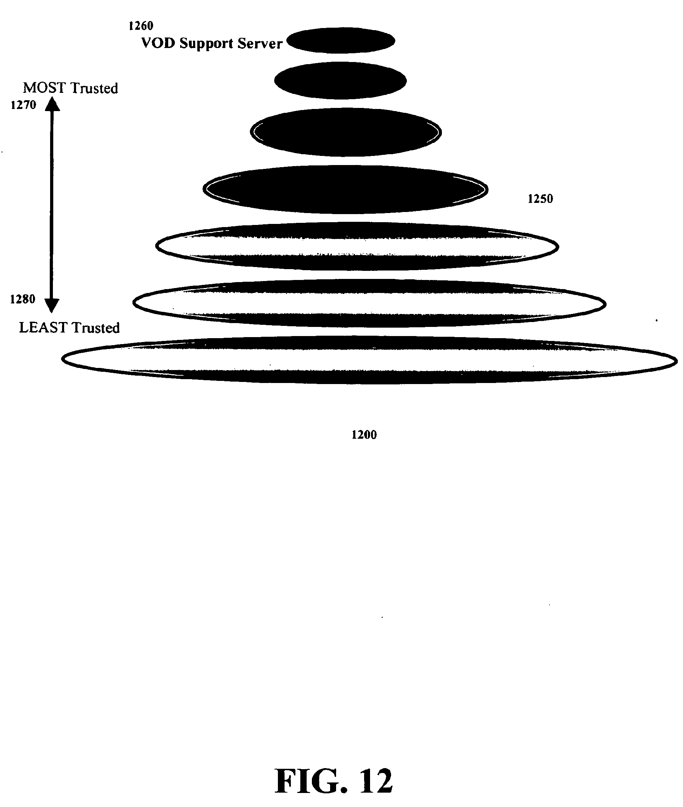

Moreover, this feature is further facilitated by the careful selection of particular VOD peers, both among and within Clusters, for storage of particular groups of Content Object Packages. **FIG. 12** illustrates not simply Clusters of VOD peers, but a relatively natural distribution of Trust Levels **1200** among VOD peers that exists primarily due to the Internet's existing infrastructure, but can be exploited for the purposes of the present invention to provide a mechanism for forming Clusters (and sub-Clusters) of VOD peers onto which Content Object Packages can be stored based upon their relative proximity or Internet Distance from one another.

At the most trusted Trust Level **1270** in the embodiment illustrated in **FIG. 12** are the relatively few VOD Support Servers **1260.** At the least trusted Trust Level **1280** are an extremely large number of "leaf node" VOD peers that are relatively far in Internet Distance from high-bandwidth broadband routers and ISPs at the "core" of the Internet. In between these two extremes are a relatively moderate number of VOD peers having "medium" Trust Levels **1250** (e.g., 6-9 on a scale of 1 to 16).

What this reverse correlation of the numbers of VOD peers with the "level of trust" of such VOD peers illustrates is that the physical infrastructure of the Internet provides a mechanism for the formation of Clusters (and sub-Clusters) that facilitates relatively uniform sets of neighboring VOD peers. For example, if **FIG. 12** represents a typical Cluster, then within any Trust Level lies a set of VOD peers having a relatively similar Internet Distance from the backbone or "core" of the Internet. VOD Support Servers **1260** at the most trusted Trust Levels **1270** lie relatively close to this Internet core, while, at the other end of the spectrum, the large number of "leaf node" VOD peers at the least trusted Trust Levels **1280** lie relatively far from this Internet core. Yet, looking across Trust Levels, there is a relatively uniform distribution of VOD peers proximate (in Internet Distance) to one another.

In other words, by working outward from the Internet core, these sets of VOD peers at each Trust Level can be effectively "sliced" such that slices of VOD peers across Trust Levels can be combined based upon their relative proximity (in Internet Distance) to one another. The result of these "inter Trust Level" slices will be Clusters of VOD peers having a variety of Trust Levels but sharing a relatively proximate Internet Distance to one another. As will be discussed in greater detail below, however, this reverse correlation of the numbers of VOD peers with the "level of trust" of such VOD peers may evolve over time into a variety of different configurations due to behavioral and other network-based considerations.

Having discussed this static "post-Push" distribution of Content Object Packages among VOD peers at varying Trust Levels across and within Clusters, attention is now turned to certain key dynamic communications protocols for implementing the Pull aspect of the present invention.

As was the case with the Pushing of Content Objects during their publication, the Pulling of such Content Objects for viewing "on demand" by a VOD peer involves two primary functions: (1) searching for VOD peers storing relevant Tracking Indexes and Tracking Files (i.e., files including the selected CRID), and (2) downloading Content Object Packages from the VOD peers identified in those Tracking Files.

In one embodiment, whenever the available content is made known to VOD peers (in a distributed fashion), such information includes the CRID for each published Content Object (Event), as well as various metadata (e.g., title, genre, etc.) relating to that Event, made available to the user via the VOD peer's user interface. When the user of a VOD peer selects a Content Object for VOD viewing via the user interface of that VOD peer, the client software accesses its internal memory to extract the CRID that correlates to that Content Object.

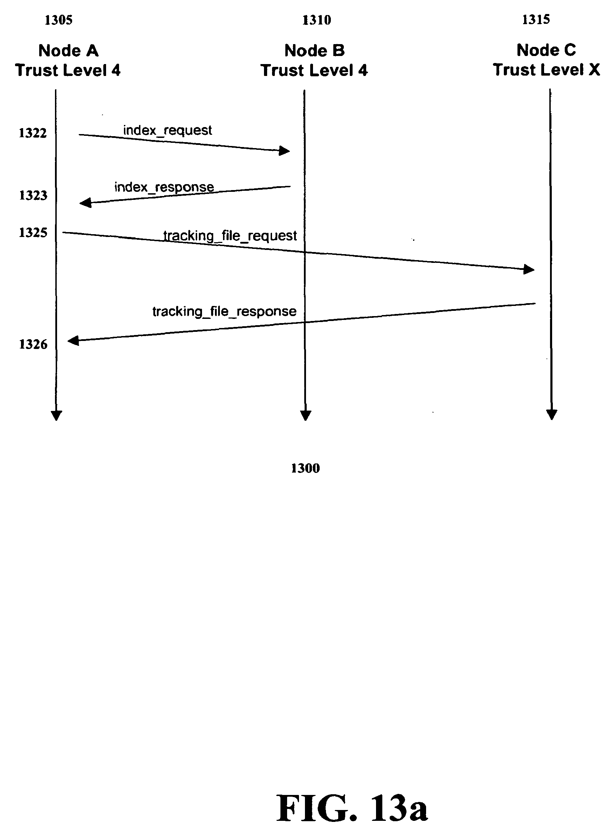

**FIG. 13a** illustrates an embodiment of a communications protocol **1300** for utilizing that CRID to locate corresponding Tracking Indexes and Tracking Files, which will then be used to identify the various VOD peers on which component Packages of the desired Content Object are stored, and download such Packages from those VOD peers for "on demand" viewing of that Content Object. In this embodiment, requesting VOD peer "Node A" **1305** (assuming a Trust Level of "4") will initially search for a Tracking Index corresponding to the CRID by contacting known neighboring VOD peers (e.g., in its Alive list) having the same Trust Level, and sending index_request messages (discussed above).

Should it not succeed in finding the Tracking Index among VOD peers at the same Trust Level, it will proceed to search VOD peers at higher Trust Levels until the Tracking Index is found. It should also be noted that, in other embodiments, a Tracking File may be identified before a Tracking Index is found (e.g., by sending requests for both a corresponding Tracking Index and Tracking File).

Returning to **FIG. 13a****,** Node A **1305** sends an index_request message to "Node B" **1310** (which also has a Trust Level of "4") via communication **1322,** and receives an index_response message via communication **1323** containing (in this example) the relevant Tracking Index (or, in another embodiment, the relevant entries of that Tracking Index corresponding to the requested CRID). Node A **1305** then extracts from those entries the Node IDs of the VOD peers that have copies of the corresponding Tracking Files (which will identify those VOD peers that are actually storing component Packages of the Content Object corresponding to the requested CRID).

Following this scenario, one of those entries storing a Tracking File is "Node C" **1315** (which may, of course, have a different Trust Level "X" from either Node A **1305** or Node B **1310**). Node A **1305** then proceeds to send a tracking_file_request (also discussed above) to Node C **1315** via communication **1325,** and receives a tracking_file_response via communication **1326** containing the Tracking File corresponding to the requested CRID. Node A **1305** then extracts from that Tracking File the Node IDs of the various VOD peers that are actually storing component Packages of the Content Object corresponding to the requested CRID. Those Node IDs provide the information necessary to initiate the next phase of downloading the Content Object Packages for VOD viewing.

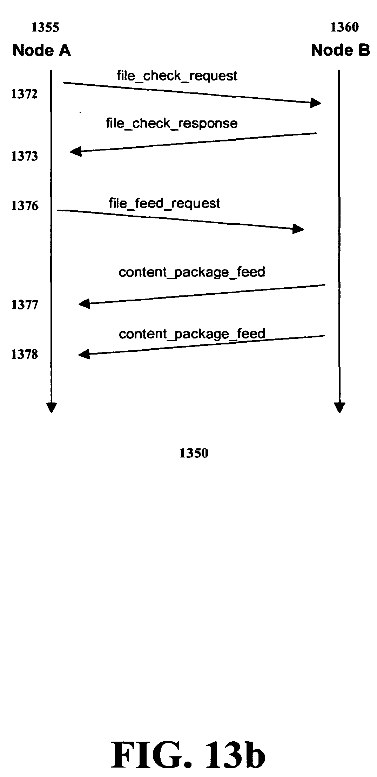

This next phase is shown in **FIG. 13b****,** which illustrates an embodiment of a communications protocol **1350** for downloading the Content Object Packages. Note that, in this embodiment, there are typically multiple VOD peers storing different groups of Packages of the desired Content Object (and thus multiple Node ID entries in the corresponding Tracking File). **FIG. 13b** illustrates the communications with one such VOD peer, though multiple analogous communications can be performed in parallel. In this embodiment, those VOD peers storing "earlier" Packages (i.e., Packages containing the earlier portions, for example, of a movie) will be contacted first, as those files will be required earlier for viewing. However, given even real-time playback speeds, the amount of time required to initiate multiple such requests is relatively insignificant provided that the downloads occur without significant delays (which is where the NQoS comes into play, as discussed both above and below in greater detail). In addition, as will be discussed below, multiple files may be downloaded (also in parallel) from each such VOD peer.

Having identified "Node B" **1360** as one of the VOD peers storing particular Packages of the desired Content Object, "Node A" **1355** sends a file_check_request message (also discussed above) to Node B **1360** via communication **1372,** which includes a desired number of connections for downloading one or more files (i.e., groups of Packages of the desired Content Object). Node B **1360** responds with a file_check_response (also discussed above) via communication **1373,** which either contains the number of currently available connections or the waiting time should no connections be currently available (along with the number of files in the queue).

In the example illustrated in **FIG. 13b****,** the file_check_response from Node B **1360** in communication **1373** indicates that two connections are available and reserved for downloading files. Node A **1355** then proceeds to send a "file_feed_request" message (not previously discussed) via communication **1376** that triggers the downloading of the files (containing the Packages of the desired Content Object specified in the Tracking File) using the two reserved channels specified in the file_check_response message from Node B **1360.** Node B **1360** then sends to Node A **1355** content_Package_feed messages (not previously discussed) containing the actual files via respective communications **1377** and **1378** (corresponding to the two specified communications channels).

As it receives these files, requesting VOD peer Node A **1355** can begin to queue these Packages of the Content Object for display via its user interface. Initial groups of Packages may be viewed immediately, while subsequent groups of Packages will typically be queued for "just in time" viewing unless needed immediately. This process is somewhat similar to a point-to-point streaming download, though it is accomplished on a multi-point basis with significant intelligence (inherent in the various features of the present invention, including NQoS, Push process, Pull process, etc) for ensuring that the playback buffer does not run out except in very unusual and extreme scenarios.

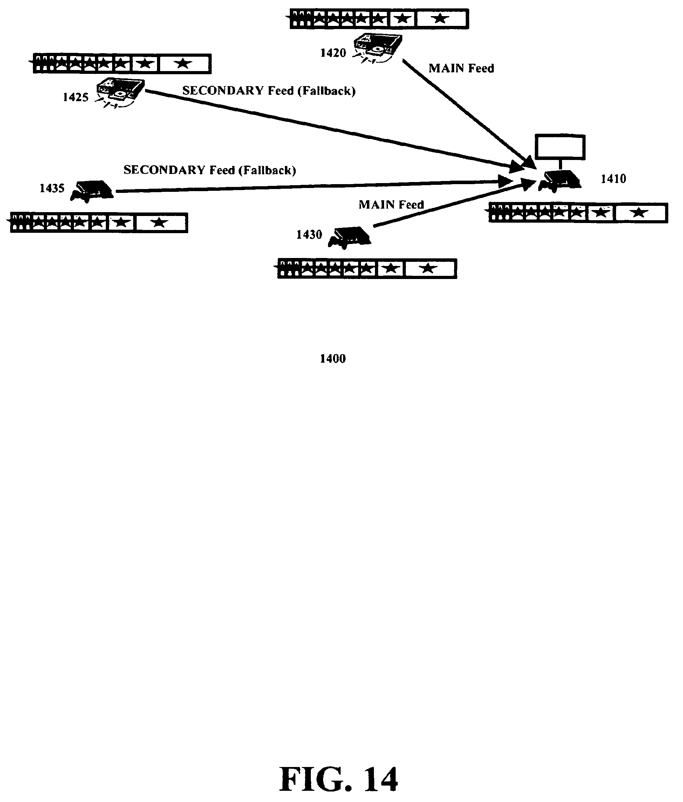

In addition to typical Pull download scenarios as described above, some supplementary features are included in one embodiment to account for even relatively rare occurrences and further minimize the probability that playback of a requested Content Object will be delayed and/or interrupted. For example, in one embodiment illustrated in **FIG. 14****,** a Pull download scenario **1400** is illustrated in which VOD peer **1410** is requesting Package downloads (in parallel) from two primary "feeder" VOD peers **1420** and **1430.** As noted above, it can be assumed that VOD peer **1410** is receiving one group of Packages from VOD peer **1420,** and a different group of Packages (for the same Content Object) from VOD peer **1430.**

But, there are scenarios in which one or both of these "feeder" VOD peers **1420** and **1430** suffers an interruption during the process of transferring its files to VOD peer **1410.** For example, a VOD peer might suffer a local device failure, or a network failure might occur due to a VOD peer or other network node simply disappearing (e.g., an intermediate Internet router between two VOD peers, and not otherwise a part of the VOD network of the present invention).

In such a case, VOD peer **1410** may need to rely on a "fallback" VOD peer (e.g., secondary or fallback VOD peer **1425** for main or primary VOD peer **1420,** and secondary VOD peer **1435** for main VOD peer **1430**). There are a number of different ways in which such "corruption handling" functionality can be implemented. For example, in one embodiment, VOD peer **1410** could utilize additional available connections to initiate downloads from such secondary VOD peers before any error occurs. It might prioritize its selection of these secondary VOD peers (from the domain of Node IDs present in the Tracking File entries it receives) toward the earlier groups of Packages of a desired Content Object that will be required sooner than will later groups of Packages (to avoid interruption of the playback of the Content Object).

In one embodiment, such corruption handling functionality is implemented (once a VOD peer recognizes that its connection with its primary "feeder" VOD peer is slowing or has or might soon fail) with an initial exchange of "rescue_preparation" and "rescue_preparation_response" messages with a highly trusted (e.g., Trust Level "2") peer. Should the primary connection fail (or slow beyond a certain predetermined threshold), the VOD peer can request downloads of the remaining Package Groups via that highly trusted VOD peer (which will likely be ready to accommodate such a request without a drop in NQoS due to the advance notice it received).

In addition to handling, or preemptively attempting to avoid, interruptions in the downloading (Pulling) of Packages to a requesting VOD peer, other scenarios include situations in which a potential "feeder" VOD peer recognizes (e.g., upon receiving a "file_check_request" message) that it does not have a sufficient number of available connections (e.g., due to an overload of requests, existing download connections, etc) to complete the requested download with the expected/desired NQoS.

In one embodiment, it could provide the requesting VOD peer with the option of queuing (i.e., delaying) the request (as discussed above with respect to the "file_check_request" and "que_request" messages, and responses) or relying upon another (secondary or fallback) VOD peer to complete the request (or, in another embodiment, to do both).

In yet another embodiment, a requesting VOD peer (or perhaps even a potential "feeder" VOD peer) might recognize that it does not have sufficient bandwidth within its Cluster to download a requested Content Object (or perhaps Content Objects generally), but that it does have a good connection with a neighboring VOD peer ("buddy") that has significantly better intra-Cluster (and/or inter-Cluster) connectivity. In this embodiment, the requesting VOD peer could delegate the task of downloading one or more Content Objects (or component Package Groups) to its "buddy," which will then forward such Content Objects for viewing on the requesting VOD peer (utilizing the "buddy_request," "buddy_function_request" and "buddy_download_request" messages and their responses, as discussed above). This "Buddy Function" could be employed on a "request-by-request" basis or, in other embodiments, on a less temporary basis. And, as noted above, even a potential "feeder" VOD peer could utilize this Buddy Function, i.e., to delegate the downloading of a requested group of Packages to a requesting VOD peer.

While all of the above scenarios involve a "client-server" approach to the downloading of Content Object Packages, yet another option for requesting (and "feeder") VOD peers facing insufficient bandwidth and/or connectivity to complete a request is an alternative method known as "Peer Casting," which involves multicasting downloads to chains of peers that relay such downloads (e.g., within a Cluster) until the intended recipient is reached. Use of such a technique in one embodiment might overcome the overloading of a particular VOD peer (e.g., in an "emergency" scenario, or when a particular Content Object is so popular that many VOD peers want to view it at approximately the same time).

This technique is recommended only as a temporary measure, however, due to its detrimental effect on QoS (and thus NQoS in the context of the present invention) as a result of the absence in this scenario of updating Tracking Indexes and Tracking Files. Instead, VOD peers are told directly which other VOD peers they should contact to obtain desired Package Groups.

For example, a VOD peer that is "feeding" multiple other VOD peers might recognize the opportunity for "Peer Casting" (e.g., to save bandwidth by having those multiple VOD peers directly "feed" one another). It could then designate one as a "server" (e.g., the more trusted one) and another as a "client" (e.g., via the "peer_casting_client" message discussed above, which includes an identification of the designated "server" Node ID). In this embodiment, it will continue to download Package Groups to both until the "Peer Casting" scenario is confirmed (e.g., via the "peer_casting_client_response" message discussed above, which indicates that the "client" has contacted the "server" and accepted this "peer casting" scenario). It will still continue to download Package Groups to the "server" VOD peer, which will download them to the "client" VOD peer (e.g., in response to the "peer_casting_download_setup" message discussed above).

### 4. NQoS and Dynamic Monitoring of Network Traffic

Having discussed communications protocols and messaging generally and specifically with respect to the key Push and Pull functionality of the present invention, attention is now turned to the means by which the VOD peers dynamically monitor network traffic (including behavioral aspects of VOD functionality, as well as network attributes such as bandwidth and reliability) and perform various "content balancing" and related functions to provide NQoS for VOD applications in the context of a network that relies on existing Internet infrastructure.

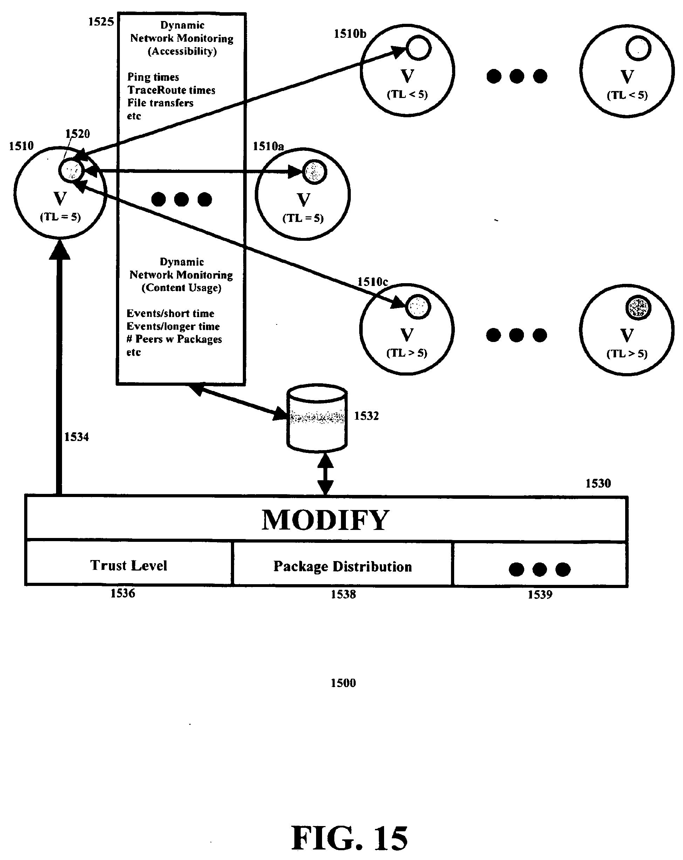

As noted above, and in the embodiment illustrated in **FIG. 15****,** the Cluster Controllers of each VOD peer are largely responsible for this distributed dynamic monitoring functionality. In addition to monitoring network and behavioral activity, these Cluster Controllers also modify various network and content distribution attributes as a result of such monitoring, effectively creating a "distributed closed loop feedback" system **1500.**

This system **1500** provides QoS that is effectively built into the network (NQoS) by enabling a VOD peer to discern, in advance of any request, the network's ability to deliver to that VOD peer a particular Content Object (which is distributed in Packages among its neighboring VOD peers) within certain predetermined times.

VOD Peer **1500** is shown in **FIG. 15** having a Trust Level of "5" and a Cluster Controller **1520** that will enable communications with the Cluster Controllers of other known VOD peers (in one embodiment, both within and across Clusters). These other VOD peers include those having the same Trust Level (e.g., VOD peers **1510a),** lower Trust Levels (e.g., VOD peers **1510b**) and higher Trust Levels (e.g., VOD peers **1510c**). For ease of reference in future examples, VOD peer **1510a** will also be referred to herein as a specific VOD peer (initially having a Trust Level of "5").

Dynamic Network Monitoring **1525** is (as explained above in greater detail) a distributed process involving communications among the Clusters Controllers of each VOD peer in system **1500.** Tests can be performed, and statistical results of such tests can be maintained, by individual VOD peers on their own behalf. For example, in one embodiment, VOD peer **1510** might perform periodic ping tests with three of its known neighbors, and record the results of such tests (e.g., high, low and average ping times, number of failures, etc.) in the Net Measurement field of its Node ID. In one embodiment, relatively small file transfers with files of varying sizes might also be performed (e.g., to neighboring as well as remote VOD peers of varying Trust Levels).

In addition, in one embodiment, relatively highly trusted VOD peers can perform such tests and maintain such results on behalf of their Clusters (potentially including inter-Cluster as well as intra-Cluster activity). For example, a relatively highly trusted VOD peer (e.g., Trust Level "3") in the same Cluster as VOD peer **1510** might maintain an analogous value reflecting the cumulative results of the ping tests performed by all VOD peers (or some subset) within that Cluster (e.g., extracted from distributed messages querying VOD peers for the values of their Net Measurement fields).

In addition to performing "generic" network traffic tests (pings, traceroutes, file transfers of varying sizes, etc) among neighboring and remote VOD peers (whether maintained individually or on an intra-Cluster or inter-Cluster basis), Cluster Controllers can also, in one embodiment, monitor actual VOD network traffic. For example, requests for a particular Content Object, or requests for Content Objects generally, are detected by the Cluster Controller of VOD peers at various Trust Levels (e.g., because certain messages relating to those requests "pass through" such VOD peers).

This VOD network traffic can be maintained "globally" (e.g., for the entire VOD network), or on an inter-Cluster, intra-Cluster or even purely "local" level (e.g., an individual VOD peer). In one embodiment, such information could include the number of requests within particular daily time slots for all Content Objects, and/or those within a particular genre, or any Content Object exceeding a predetermined minimum or maximum threshold of requests. Moreover, information can also be maintained regarding the distribution of Content Object Packages among VOD peers within and among Clusters. For example, the number of copies of a Content Object, or Content Objects within a particular genre, could also be maintained over time, as could the number of copies of particular groups of Packages of a Content Object (e.g., within a particular Cluster).

It should be noted that, in one embodiment, some or all of these Dynamic Network Monitoring **1525** tests can be performed on a periodic basis, as well as in response to various triggers (e.g., the detection of a device or network failure, a VOD request for a particular Content Object, or one that has not been accessed within a particular period of time, etc). Moreover, results of such tests may reflect minimum or maximum scores, as well as average or other cumulative values compiled over time. As also noted above, a balance is maintained to avoid overloading the network with such "monitoring" traffic (e.g., to avoid significantly impairing NQoS with respect to the substantive VOD network traffic itself).

By maintaining such statistics over time, Cluster Controllers of VOD peers are then capable (in one embodiment) of taking actions based upon those statistics. As noted above and as illustrated in **FIG. 15****,** the results obtained by Dynamic Network Monitoring **1525** can be maintained by VOD peers of varying Trust Levels in Dynamic Network Monitoring Results Database **1532** (centrally accessible to VOD peers, in one embodiment), as well as in the Net Measurement fields of their own Node ID (not shown). Thus, this information is available for "feedback" **1534** not only to individual VOD peers, such as VOD peer **1510,** but to other VOD peers as well via distributed communications among the Cluster Controllers of each VOD peer.

This feedback **1534** will be reflected, as discussed above and illustrated in **FIG. 15****,** in various Modifications **1530** to the attributes of individual VOD peers, as well as to the VOD network infrastructure (e.g., Cluster membership and distribution of Content Objects and groups of their component Packages among VOD peers within and among such Clusters). For example, as a result of generic network traffic tests, or even actual responses to requests for Content Objects, the Trust Level of a particular VOD peer may be modified over time. These "Trust Level Modifications" **1536** are one significant means by which NQoS is effected, as discussed below.

"Package Distribution Modifications" **1538** (also discussed below) are another significant means of effecting NQoS. They might include, in one embodiment, changes in the deployment of Content Objects and their component groups of Packages. For example, the number of copies of a particular Content Object (and/or its component groups of Packages) could be increased or decreased (e.g., as a result of popularity of a Content Object or genre of Content Objects monitored over time within or among particular Clusters). The size and number of component Packages of a Content Object (or Content Objects generally) could also be modified.

In addition to Trust Level Modifications **1536** and Package Distribution Modifications **1538,** there are a variety of other modifications **1539** that could be employed to effect NQoS. For example, in one embodiment, Cluster membership could be altered based upon the results of Dynamic Network Monitoring **1525** (e.g., by restricting the set of known neighboring VOD peers to those exhibiting sufficiently low neighboring ping times). Other modifications might include altering the number of VOD peers to whom requests (or other messages) are initially sent (e.g., based upon prior success rates or response times for similar messages). Apart from the specific type of modification, it should be noted that virtually any modification to a node or network attribute that can be dynamically monitored over time and then modified via feedback **1534,** can play a role in effecting NQoS. Some modifications and dynamically monitored tests are simply more effective and efficient than others (individually and in combination).

In one embodiment, the results of "generic" network traffic tests by individual VOD peer **1510** might trigger (e.g., due to a threshold number of ping test failures with VOD peer **1510a** being exceeded) a change in the Trust Level of VOD peer **1510a.** As discussed above in greater detail, various Trust Level Parameters are determined (in one embodiment) from component Trust Level Factors that are maintained over time, the cumulative result of which is a current computed Trust Level. Thus, changing a Trust Level Factor as the result of particular Dynamic Network Monitoring **1525** tests may trigger a relatively immediate change in a Trust Level Parameter, and ultimately in the Trust Level itself. (which would be reflected in the Trust Level field of the VOD peer's Node ID).

It is important to understand how these dynamic Trust Level Modifications **1536** (illustrated via dynamic feedback **1534**) effect NQoS. As noted above, the existing Internet infrastructure does not inherently provide QoS.

VOD requests initiated by VOD peer **1510** result in communications not only among other VOD peers, but also among existing Internet hosts, routers and other nodes, all of which (individually and collectively) are susceptible to device failure and changes in bandwidth and reliability at virtually any time. There is no central or distributed mechanism monitoring global Internet traffic generally and maintaining consistent and reliable QoS levels.

Nevertheless, the "distributed closed loop feedback" system **1500** of the present invention provides such a mechanism among the network of VOD peers that resides "on top of" or as part of the Internet's existing infrastructure (i.e., NQoS).

For example, while VOD peer **1510a** exhibits a Trust Level of "5," it may be capable of responding to a request from VOD peer **1510** and "feeding" it component Packages of the requested Content Object previously distributed among neighboring VOD peers (including VOD peer **1510a)** relatively quickly and reliably - e.g., sufficient to provide virtually "instant playback," as well as consistent and reliable playback, of that Content Object. So, the user of VOD peer **1510** might, for a period of time, be satisfied with this level of service.

Yet, as noted above, failures of other devices (VOD peers, Internet routers or hosts, etc) may well affect that level of service. Assume, for example, that the Trust Level of VOD peer **1510a** is modified from "5" to "6" (less trusted) as a result of periodic ping test failures or other tests from Dynamic Network Monitoring **1525.** The Cluster Controller in VOD peer **1510a** might detect this change in Trust Level and automatically (or, in another embodiment, only if a predefined threshold was exceeded, e.g., "Trust Level > 5") send one or more messages to notify neighboring VOD peers that they might need to rely upon another (more trusted) neighbor.

In one embodiment, this could be accomplished more generically by a routine exchange of updated Alive lists (whether performed periodically and/or triggered by a change in Trust Level). VOD peer **1500** might now know to rely (e.g., for a subsequent request) upon another Trust Level "5" neighbor (or more trusted neighbor) rather than VOD peer **1510a,** thereby improving its NQoS for such subsequent request.

In one embodiment, periodic updates of Alive lists are performed, with less trusted VOD peers performing such updates relatively more frequently (e.g., once per minute) than more trusted VOD peers (e.g., once per hour). This routine periodic process of automatically updating Alive lists of VOD peers (in a distributed fashion) greatly reduces the amount of network traffic necessary to enable VOD peers to effect changes to improve NQoS (i.e., because VOD peers are made aware of dynamic network changes efficiently via this "distributed broadcast" mechanism).

It should also be noted that modifications to VOD peer and network attributes made as a result of Dynamic Network Monitoring **1525** may often be interrelated to one another. For example, the Trust Level Modifications **1536** discussed in the specific examples above might also trigger Package Distribution Modifications **1538.** For example, when the Trust Level of VOD peer **1510a** changes from "5" to "6", such a change might also, in one embodiment, be detected (e.g., through a distributed update of Alive lists, again either periodic or triggered by this change in Trust Level) by a VOD peer managing the Cluster. As a result, additional copies of the groups of Packages (or some subset thereof) currently stored on VOD peer **1510a** might be redeployed. For example, another VOD peer (e.g., one having a Trust Level of "5") might be selected to receive a copy of such groups of Packages. In one embodiment, this could be achieved by causing that "replacement" VOD peer to communicate directly with VOD peer **1510a** to obtain such copies (though, in other embodiments, a more trusted VOD peer might be relied upon, or perhaps the original Publishing Server would be contacted). In any event, Tracking Files and Tracking Indexes would be updated accordingly (as discussed above).

With respect to Package Distribution Modifications **1538** generally, these might be performed in a variety of different scenarios. For example, a relatively trusted VOD peer might be responsible (in one embodiment, via its Cluster Controller) for managing requests within its Cluster. Upon detecting a request for a particular Content Object (e.g., via distributed messages as discussed above), it might update Dynamic Network Monitoring Results Database **1532** and notice that a predefined threshold had been exceeded - e.g., a maximum number of requests for the same Content Object within a particular period of time.

As a result, this "manager" VOD peer might, in one embodiment, contact one of the "feeder" VOD peers (such as VOD peer **1420** in **FIG. 14** discussed above), which would then cause the requesting VOD peer to be added the Tracking File (i.e., transforming the requesting VOD peer into a future "feeder" VOD peer). In another embodiment, VOD peer 1420 would, in effect, become a publisher and cause additional copies of the Content Object to be Published (Pushed) within the Cluster (as described above with respect to the publication process generally).

Thus, NQoS is effected (i.e., QoS is effectively built into the VOD network) as a result of this "distributed closed loop feedback" system **1500** of the present invention, in which dynamically monitored changes in network attributes and VOD behavior trigger "feedback" modifications to these VOD peer and network attributes, as well as modifications to the deployment of Content Objects throughout the VOD network. VOD peers are thus able to discern, in advance of any request, the network's ability to deliver to that VOD peer a particular Content Object (which is distributed in Packages among its neighboring VOD peers) within certain predetermined times.

It should also be noted that Clusters of VOD peers facilitate NQoS by providing an infrastructure that enables content to be located "nearby" the consumers of that content. As noted above, Clusters initially are based upon existing Internet infrastructure (e.g., as provided by standard IP location services, and based in part upon similarities of IP addresses), but are then updated dynamically to reflect actual network and behavioral traffic. This infrastructure enables Content Objects to be distributed among groups of neighboring VOD peers, and then dynamically redeployed to maintain that "closeness" as the network evolves (whether changes are "generic" in nature, e.g., device failures and network congestion, or behavioral in nature, e.g., increased requests for some or all content at peak times).

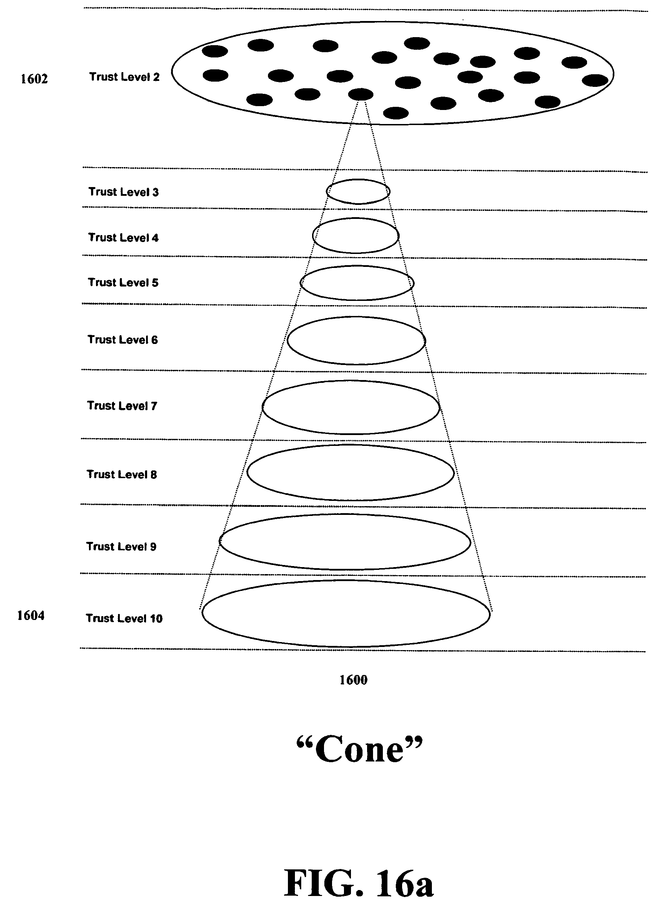

Regardless of the reasons, the composition of Clusters in the VOD network of the present invention evolves over time. **FIGs. 16a** **- 16d** illustrate embodiments of four different general patterns or configurations of Clusters of VOD peers (grouped by Trust Level) that might result from different generic network and behavioral scenarios.

**FIG. 16a** illustrates a "Cone" **1600** pattern that reflects what is likely to be a common scenario, in which relatively few VOD peers within a Cluster are highly trusted **1602** (e.g., Trust Level "2"), and progressively more less trusted VOD peer members are found, with the least trusted **1604** VOD peers (e.g., Trust Level "10") being the most numerous of these "Trust Level groups" within the Cluster.

As was noted with respect to similar **FIG. 12** above, this relatively natural distribution of Trust Levels exists primarily due to the Internet's existing infrastructure, but can be exploited for the purposes of the present invention to provide a mechanism for forming Clusters (and sub-Clusters) of VOD peers onto which Content Object Packages can be stored based upon their relative proximity or Internet Distance from one another.

Moreover, this reverse correlation of the numbers of VOD peers with their relative "level of trust" facilitates the grouping into Clusters of many VOD peers (e.g., the least trusted **1604** VOD peers) that are far from the Internet "core" but are relatively close to one another. As a result, the VOD peers in **FIG. 16a** share in common a relatively close Internet Distance to one another, despite their Internet Distance from the Internet core.

Nevertheless, the existence of a large number of not very trusted VOD peers, though unfortunately realistic, is not necessarily desirable. However, in the context of the present invention, this shortcoming can be counterbalanced by Pushing relatively more copies of Content Objects to these numerous relatively less trusted VOD peers, and delegating more of the management of this "equilibrium" to relatively more trusted VOD peers.

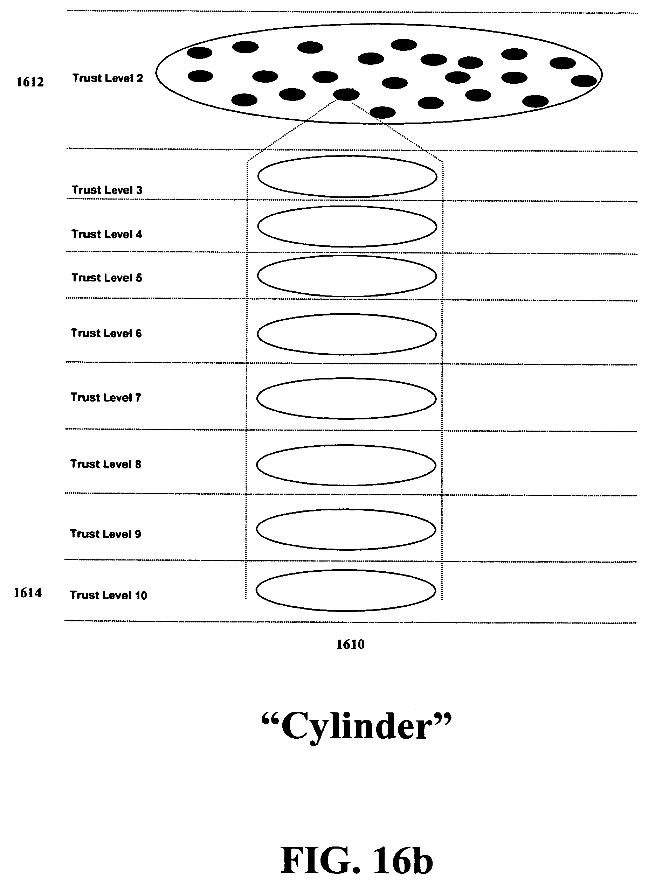

Turning to **FIG. 16b****,** this "Cylinder" **1610** pattern reflects a scenario in which Clusters contain approximately the same number of VOD peers at each Trust Level. It is not clear that such a scenario is likely to occur naturally given the Internet's existing infrastructure. This scenario, while not undesirable, in that there is not as high a concentration of least trusted **1614** VOD peers (e.g., Trust Level "10") as was present in **FIG. 16a****,** is still somewhat problematic in that there are still large numbers of relatively less trusted VOD peers. On the other hand, there is a higher concentration of most trusted **1612** VOD peers (e.g., Trust Level "2") than was present in **FIG. 16a****,** as well as relatively more trusted VOD peers.

Yet, having many highly trusted VOD peers, while not undesirable, may not be a sufficient counterbalance for the many less trusted VOD peers. In other words, there is still a need to Push content "close" to the many less trusted VOD peers that will consume that content. The fact that there exist many highly trusted VOD peers does not obviate the need to Push more copies of Content Objects down to those relatively numerous less trusted VOD peers.

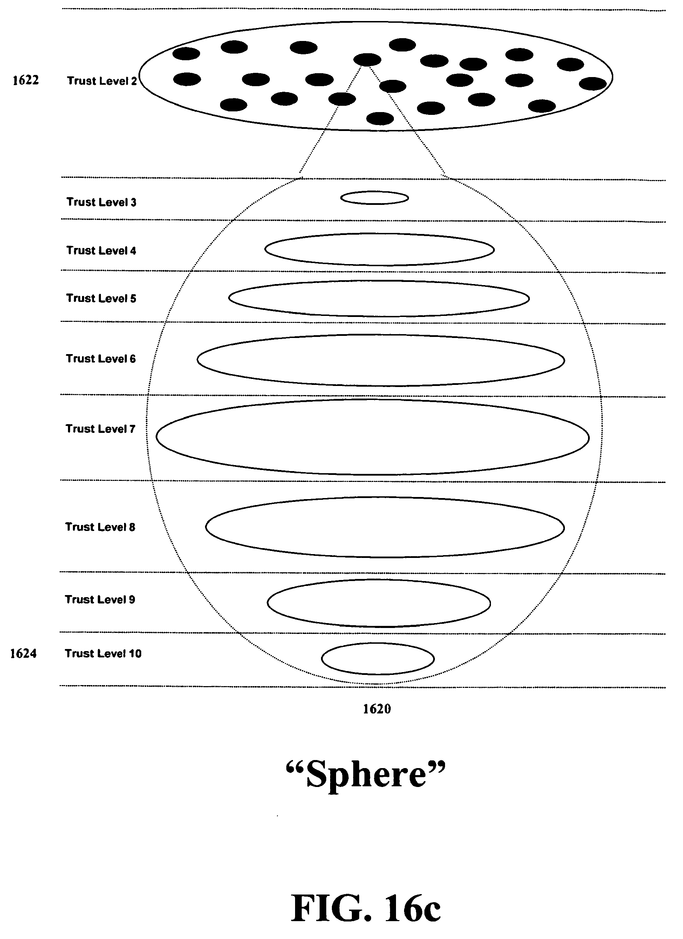

Turning to **FIG. 16c****,** this "Sphere" **1620** pattern reflects a scenario in which the majority of VOD peers have moderate Trust Levels (e.g., Trust Levels "4" through "8"), relatively few VOD peers are highly trusted or not very trusted, and the fewest numbers of VOD peers are either most trusted **1622** or least trusted **1624.** It is also not clear that this scenario is very likely to occur naturally, without some external mechanism (e.g., significant increases in fiber optic lines to the home) that would enable many otherwise less trusted VOD peers to become relatively highly trusted.

Nevertheless, this scenario is an extremely desirable one with respect to NQoS (and even QoS generally). Pushing copies to these large numbers of moderately trusted VOD peers would be more efficient, given that fewer copies would be necessary (as these VOD peers are generally more reliable). Moreover, the greater overall reliability would require fewer adjustments to maintain NQoS.

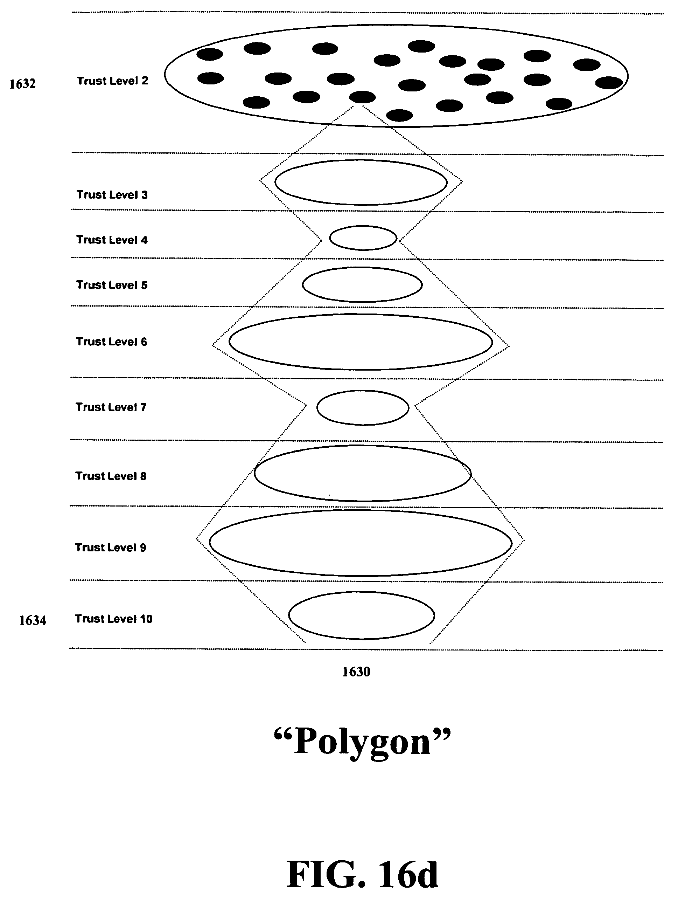

Finally, the "Polygon" **1630** pattern in **FIG. 16d** reflects a scenario in which there is virtually no correlation in a Cluster between the number of VOD peers and their relative "level of trust." The distribution among Trust Levels is essentially random. It also seems unlikely that this scenario will ever exist naturally, or through any external mechanism than anyone is likely to devise. Nevertheless, the present invention would provide at least as effective a solution to this scenario as it would to the much more likely scenario illustrated in **FIG. 16a****.** To put it simply, there is a lower concentration of least trusted **1634** "problem" VOD peers. In addition, though less significant, there is a higher concentration of most trusted **1632** VOD peers. The same counterbalance mechanisms, including Pushing more copies of Content Objects to these "problem" VOD peers, would have the same benefit of effecting NQoS, regardless of the "pockets" of numerous VOD peers at other random Trust Levels.

### III. INTEGRATION OF ADVERTISING CONTENT

### A. Ad Insertion Architecture and Features

Having described key features of various embodiments of the present invention that effect NQoS in the context of a VOD system, attention is now turned to one special type of Content Object - advertisements ("Ads"). Ads are, in one embodiment, a special type of Content Object. They can include text, images, audio, video and virtually any combination of media elements that can be heard and/or displayed.

In one respect, Ads are just another Content Object, in that they are delivered in much the same way as other Content Objects. They are divided into Content Object Packages, Pushed in a distributed manner to VOD peers within and across Clusters of the network, redeployed based upon dynamically monitored network and behavioral attributes, and Pulled in a distributed manner from the multiple VOD peers on which their component Packages are stored.

Yet, in another respect, Ads are a special type of Content Object, in that they can be displayed within and between other Content Objects, as well as within other aspects of the user interface of the VOD system of the present invention. They are also special in that they are not typically requested by VOD peer users, as are other Content Objects. Instead, they are displayed in accordance with rules imposed by the VOD system of the present invention (in one embodiment, via an "Ad Server," that can be a distinct server or a VOD Support Server as well), in accordance with parameters set forth by the publisher of the Ad.

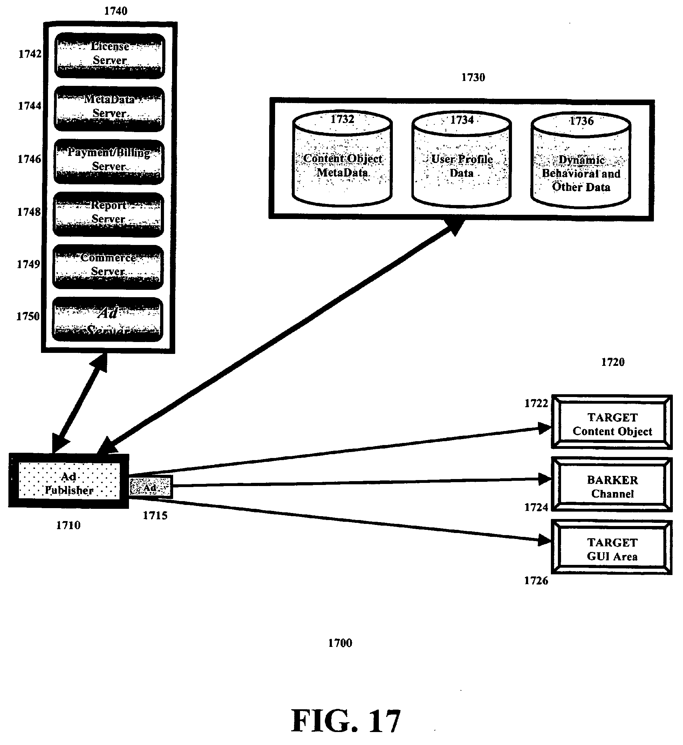

**FIG. 17** illustrates a block diagram embodiment of an Ad Insertion mechanism **1700** for inserting advertisements as Content Objects within and among other Content Objects, as well as within the user interface of the VOD system of the present invention. Ad Publisher **1710** is, in one embodiment, a VOD peer that is also a Publishing Server for Content Objects of the "advertising" type, such as Ad **1715.**

In one embodiment, Ad **1715** can be inserted into a variety of different "TARGET Locations" **1720,** including, as noted above, within and between Content Objects such as TARGET Content Object **1722.** In addition, Ad **1715** can be inserted into BARKER Channel **1724** which, in one embodiment, is a perpetually running channel that is accessible to a VOD peer user via the user interface of the VOD system of the present invention. Finally, Ad **1715** can be inserted into TARGET GUI Area **1726 -** i.e., into various aspects of the user interface that will appear on the user's display depending upon the state of the system. For example, in one embodiment, a "VOD Portal" channel includes Ads viewed within the prior week, enabling users to browse or search into, and then replay, any Ad viewed within that prior week (as well as click on links to sites containing commerce opportunities and/or additional information). Various embodiments of the methods employed for inserting Ad **1715** into TARGET Locations **1720** will be explained in greater detail below.

In one embodiment, Ad Publisher **1710** publishes its Content Object (Ad **1715**) like any other Publishing Server, as described above. In addition, Ad Publisher **1710** may rely upon an "Ad Insertion Tool" (within the VOD Publishing Software available to any Publishing Server) to simplify the Ad publishing process. In another embodiment, Ad Publisher **1710** may also access, directly or indirectly, various system resources (including System Databases **1730** and System Servers **1740**) to facilitate its specification of the parameters under which Ad **1710** will be displayed to users of the VOD system of the present invention. The rules for displaying Ad **1715** are determined and imposed, in one embodiment, by Ad Server **1750,** in accordance with the parameters specified by Ad Publisher **1710** (whether specified directly, or indirectly via the Ad Insertion Tool).

In one embodiment, Ad Publisher **1710** accesses System Databases **1730** to obtain information that affects the parameters it specifies to Ad Server **1750.** For example, Content Object MetaData **1732** database contains information relating to each Content Object, such as its title, genre, description and, in one embodiment, a variety of other metadata (in the form of text, images, video and other media) relating specifically to that Content Object. Ad Publisher **1710** might, for example, desire to display Ad **1715** within Content Objects meeting certain criteria, such as "comedies."

Ad Publisher **1710** could specify such criteria as a parameter directly to Ad Server **1750** or search Content Object MetaData **1732** database based on such criteria, and then specify parameters to Ad Server **1750** that might be the same, or perhaps more or less specific (e.g., the CRIDs for specific Content Objects). Ad Publisher **1710** could also combine the results of searching Content Object MetaData **1732** database (or its original criteria) with other information, such as data from other System Databases **1730.**

For example, Ad Publisher **1710** might access User Profile Data **1734** database to obtain information about VOD peer users, such as their name, gender, address, age, occupation, marital status, and a variety of other related data specific to the user (and perhaps the user's family). Ad Publisher **1710** might search Content Object MetaData **1732** database for "comedies" while also searching User Profile Data **1734** database for users between the ages of 20-35, and perhaps also searching "Dynamic Behavioral and Other Data" **1736** database for users that watch at least 5 movies per month (enabling a form of "behavioral targeting" of Ads based upon users' prior behavior within the VOD system). Ad Publisher **1710** might then submit combined results of such searches as parameters to Ad Server **1750.**

In addition to relying upon System Databases **1730** for information to facilitate the targeting of Ad **1715,** Ad Publisher **1710,** in one embodiment, also may rely upon various System Servers **1740** to assist in this task. For example, as noted above, Ad Publisher **1710,** in addition to publishing Ad **1715** (like any other Content Object) might submit parameters to Ad Server **1750,** which in turn will integrate such parameters into rules that it will enforce in order to trigger the display of Ad **1715** at the appropriate times and locations on particular VOD peers in accordance with such rules (since Ad **1715** will not typically be requested "on demand" as are other Content Objects).

In addition, Ad Publisher **1710** may rely upon License Server **1742** (as can any other publisher) to enforce "digital rights management" (DRM) protections to Ad **1715,** as well as user authentication and other related security measures, to guard against unauthorized use of Ad **1715.** For example, in addition to general protections against unauthorized copying and distribution of such content, License Server **1742** may also enforce rules limiting the use of Content Objects (e.g., allowing a limited number of replays) in accordance with parameters specified by the publisher. Though Ad publishers typically might not be concerned about limiting the exposure of their Ads, Ad Publisher **1710** could, for example, request that License Server **1742** allow an unlimited number of replays of Ad **1715,** but substitute a different Ad (not shown) for all requested replays (e.g., an Ad that is more of a "hard sell," perhaps with a link to a commerce website, once the user has expressed interest by requesting a replay).

Ad Publisher **1710** may also rely upon MetaData Server **1744,** for example, to assist with access to Content Object MetaData database **1732.** For example, rather than requiring Ad Publisher **1710** to query Content Object MetaData database **1732** itself, MetaData Server **1744** could provide a simpler, higher-level interface to Ad Publisher **1710** to enable indirect access to this data.

In addition, Ad Publisher **1710** may rely upon Payment/Billing Server **1746,** which provides various "customer relationship management" (CRM) models for Content Objects, including "pay per view" (PPV), subscriptions, prepaid access, free and paid promotions, etc. Though use of such functionality will be more prevalent with respect to publishers of other types of Content Objects, Ad Publisher **1710** might utilize Payment/Billing Server **1746** to launch a promotion, for example, in which Ad **1715** is displayed in connection with particular PPV movies on an optional basis (e.g., where the user receives the PPV movie for free upon agreeing to view Ads such as Ad **1715**).

Report Server **1748** can be of significant value to Ad Publisher **1710** (as well as to publishers of other types of Content Objects). By specifying report parameters, Ad Publisher **1710** can receive from Report Server **1748** a variety of different types of reports regarding user behavior in connection with the display of its Ads, including Ad **1715.** For example, such reports might include information regarding the profile of users viewing its Ads at particular times and dates, which Content Objects (or types of Content Objects) they were watching (assuming users allowed release of such aggregate information), and a variety of other behavioral information (e.g., click-thru statistics on Ads, related purchases, etc).

Finally, Ad Publisher **1710** may rely upon Commerce Server 1749 to facilitate commercial promotions relating to Ad **1715,** including "direct buying" promotions (e.g., via links in Ad **1715** to commercial websites), access to "video promotion windows" (e.g., mixed with other, perhaps related, Ads), "in-video Ads" (to facilitate inserting Ad **1715** into particular video content), and a host of other commercial opportunities.

It should be noted that access to System Servers **1740,** System Databases **1730** and TARGET Locations **1720** is not limited to publishers of Ads. These resources are, in one embodiment, centrally accessible to Publishing Servers and, to a much more limited and indirect extent, VOD peers generally (e.g., accessing additional information relating to a Content Object via the system's user interface). Publishers of other types of Content Objects may also, in one embodiment, limit which Ads (or types of Ads or Ad publishers) are viewed in connection with their own Content Objects. For example, a publisher of family movies may not permit Ads involving certain types of products (e.g., cigarettes or alcohol), or may exclude specific Ad publishers known to promote such products.

### B. Ad Insertion Implementation

As noted above, to simplify the job of Ad publishers, the system provides (in one embodiment) an "Ad Insertion Tool" that is part of the VOD Publishing Software available to any Publishing Server. This Ad Insertion Tool provides an interface that enables an Ad publisher to avoid the necessity of communicating directly with System Servers **1740,** System Databases **1730** and TARGET Locations **1720.** Ad publishers can instead utilize a higher-level interface to accomplish its tasks more simply and in a manner that is more specifically targeted to the publication of Ads.

In one embodiment, the Ad Insertion Tool provides a simplified user interface enabling an Ad publisher to select predefined choices from drop-down lists in order to specify the parameters that will dictate the manner in which the publisher's Ads will be targeted and presented to VOD peer users. The Ad Insertion Tool generates a "playlist" that selects Ads from the Ad publisher's "Ad package" for display during the specified time slots on those VOD peers meeting the specified targeted profile.

Ads are typically published with "top" and "tail" portions which are relatively brief sequences that precede ("top") and follow ("tail") the playback of the remainder of the Ad. The Ad publisher can specify IDs for the Ad, as well as for the desired top and tail portions, along with an Ad duration (e.g., 30 seconds) and the desired target vehicle in which the Ad will be inserted - which, in one embodiment, includes an Event (with or without a VOD browser), the "Barker" channel, a VOD messaging service (e.g., for purely textual Ads), "Interactive Ads" (e.g., including links via a VOD browser to sites containing additional information, promotions, sales, etc.), as well as the option of also including "print" Ads (outside of the VOD system).

In one embodiment, basic Ad types include: (1) Single Ad - a standalone Ad Event; (2) Serial Ad - a sequence of up to five Ad repetitions inserted into one or multiple Events; (3) Tagged Ad - an Ad with different tail sequences (e.g., to "localize" the Ad for different geographic zones); (4) Parallel Ads - multiple different Ads from the same Ad publisher with different tail sequences; and (5) Interactive Ads - with links and/or other forms of "user response" capabilities. Moreover, in another embodiment, such Ad types may be offered in combination.

Serial Ads enable an Ad publisher to build up interest throughout an Event (as well as across Events) by repeating the Ad (or, in one embodiment, slightly different Ads) over time. Different Ad tails can also incrementally build interest, e.g., by announcing contest details or other information toward the end of the sequence. Tagged Ads enable local offers, while Parallel Ads facilitate an Ad publisher's desire to offer Ads that promote, for example, a line of products using different Ad tails. Interactive Ads provide additional opportunities to provide information to users incrementally, as well as obtain specific targeted feedback regarding user interest (which can be utilized dynamically, in one embodiment, to further promote an Ad publisher's products).

In another embodiment, a form of "direct publishing" may be enabled, which greatly simplifies a non-professional publisher's ability to publish Content Objects, as well as Ads, from handheld and other devices not typically part of the VOD network. For example, in the context of minor sports, one could upload/publish a sporting event (e.g., a horse race, perhaps with local Ads as well) that would provide an opportunity otherwise requiring a massive advertising budget. Similarly, small retailers could publish, from their store via a cell phone with video capabilities, a "speak and sell" promotion of particular products, coupled with Ads.

The targeting methods utilized by the Ad Insertion Tool involve, in one embodiment, a variety of statistics relating to VOD peer users (e.g., stored in User Profile Data **1734** database). Such statistics provide a mechanism for targeting Ads at various aspects of user profiles. For example, they can include, for a time period (e.g., a week), the total number of users and the average number of Events viewed per user (also divided into geographic zones). In addition, such statistics can include percentages of gender (men versus women), age (e.g., 18-24, 25-54, 55+), household income (e.g., $50K+, $75K+, $100K+, $150K+), education (e.g., college degree, postgraduate degree), marital status, children, and behavioral VOD usage (e.g., consumer categories, system use within prior week, online shopping habits within last 30 days, or ever, etc.).

In addition, in one embodiment, "VOD User Profile Categories" are defined by combining user profile data. For example, "Couples," "Families," "Singles" and "Children" can be defined as VOD User Profile Categories divided into fixed age ranges, countries, geographic zones and particular areas of interest. Moreover, Ad publishers can specify certain restrictions regarding its Ad campaign (e.g., start, stop and hold dates, governmental restrictions relating to geographic zones, categories, number of hours, etc.).

Finally, Ad publishers can select from a variety of demographic information to target their Ads at particular sets of VOD peer users. Such demographic information can then be cross-referenced (as discussed below) with the actual VOD peer user profile statistics discussed above. For example, in one embodiment, the following demographic categories are included: Gender (male, female), Age (18-24, 18034, 18-49, 25-34, 25-44, 25-54, 45-54, 45-64, 21+, 25+, 35+, 45+, 55+, 65+), Marital status (married, single), Children (yes/no), Education (high school, college graduate, postgraduate, college graduate+), Occupation (professional/managerial, sales/retail, secretarial/clerical, services/labor, student, retired, self employed), Income (currency type, $35K+, $50K+, $75K+, $100K+, $150K+), Geographic Zone, etc.

To better understand how Ads are inserted within and between Events (as well as within the Barker channel and other target locations), metadata relating to such Ads is now described. In one embodiment, such Ad metadata includes XML tags for "Generic Ad Metadata" (describing the Ad), "Event Ad Handling Metadata" (describing restrictions on Ads shown within an Event), "Ad Targeted User Profile Metadata" (describing VOD peer user profile data to which Ad is targeted), and "Ad Insert Lists Metadata" (including blocks within Events into which Ads will be inserted).

In one embodiment, Generic Ad Metadata includes the following tags describing data structures for storing data describing each Ad:

| **GENERIC AD METADATA** | **DESCRIPTION** |
|---|---|
| **ad_crid** | Required CRID identifying the Ad |
| **ad-id** | Optional The ad-id (if any) of the Ad |
| **ad**_**runtime** | Required Ad Duration. |
| **ad_size** | Required Number of Ad Key Frames |
| **ad_group** | Optional |
| | Name of Group of Ads |
| **ad_group_interval** | Optional Time Interval during which all members of Group available for viewing |
| **ad_targeting** | Required When and Where Ad available for viewing |
| **country** | Required Country Code in which Ad can be viewed Child of ad_target_zone |
| **state** | Optional State Code in which Ad can be viewed Child of ad_target_zone |
| **ad_showing_time** | Required Time of Day during which Ad can be viewed Child of ad_target_zone |
| **start_time** | Required Point within Time of Day when Ad viewing begins Child of ad_showing_time |
| **end**_**time** | Required Point within Time of Day when Ad viewing ends Child of ad_showing_time |
| **day**_**of**_**week** | Optional, Day of Week on which Ad can be viewed Child of ad_showing_time |
| **zip**_**code**_**range** | Required Range of Zip Codes in which Ad can be viewed |
| | Child of ad_zone |
| **not**_**this**_**zip**_**code**_**range** | Required Range of Zip Codes in which Ad cannot be viewed Child of ad_zone |
| **zip_code_start** | Required Initial Zip Code in Range |
| **zip_code_end** | Required Final Zip Code in Range |
| **ad**_**description** | Optional Short description of Ad |
| **ad_category** | Required Ad Category (in which Ad can be categorized) |
| **ad**_**main**_**category** | Required Main Ad Category Child of ad_category |
| **ad**_**sub**_**category** | Required Ad Sub Category Child of ad_category |
| **ewer** | Optional Describes a specific user profile to which Ad is Targeted |
| **user_profile** | Optional Describes a specific user profile that can view Ad |

Event Ad Handling Metadata includes the following tags describing data structures describing locations within an Event into which Ad can be inserted:

| **EVENT AD HANDLING METADATA** | **DESCRIPTION** |
|---|---|
| **event**_**crid** | Required CRID identifying the Event into which Ad can be inserted |
| **ad**_**insert** | Required Yes or No |
| **not_this_type** | Optional Ad Types not to be viewed within Event |
| **ad_category** | Required Ad Category to be viewed within Event |
| **ad_sub_category** | Optional Ad Sub Category to be viewed within Event |
| **ad**_**keyframe**_**locator** | Optional Keyframe within Event into which Ad can be inserted |

Ad Targeted User Profile Metadata includes the following tags describing data structures describing user profiles to which Ad is targeted:

| **AD TARGETED USER PROFILE METADATA** | **DESCRIPTION** |
|---|---|
| **age** | Optional Age span of targeted users |
| **minimum**_**age** | Required Starting Age of Span |
| **maximum**_**age** | Required Ending Age of Span |
| **gender** | Optional Gender of targeted users (male or female) |
| **occupation** | Optional Occupation of targeted users |
| **income** | Optional Income level of targeted users |
| **education** | Optional Education level of targeted users |
| **number_of_children** | Optional Number of children of targeted users |
| **interest_key_word** | Optional Keywords describing Interests of targeted users |
| **user_interest** | Optional Interests included within targeted users |
| **user**_**non**_**interest** | Optional Interests excluded from targeted users |

Ad Insert List Metadata includes the following tags describing data structures describing locations within an Event into which an Ad can be inserted:

| **AD INSERT LIST METADATA** | **DESCRIPTION** |
|---|---|
| **event**_**crid** | Required CRID of Event into which Ad can be inserted |
| **ad**_**crid** | Required CRID defining Ad |
| **ad_block** | Required Block of Ads to be viewed together |
| **ad_block_runtime** | Optional Total Running Time of Ad Block |
| **ad_keyframe_locator** | Required Keyframe within Event into which Ad will be inserted |

In one embodiment, Ad publishers can "sponsor" Events as well as other aspects of the system's user interface. For example, a "Sponsored Theme" could include a commercial "skin" created by an Ad publisher and available for selection by VOD peer users. This skin could cover virtually all of the user interface elements accessible to users. Viewers could download these skins, which would then appear on a main menu in the user interface. They might include background images, icons, logos and other elements (including, for existing, existing system elements, such as play and pause buttons) into which the Ad publisher's logo (or other form of expression or style) have been integrated.

Such Sponsored Themes could provide additional interactive elements enabling users to obtain additional information promoting products offered by the Ad publisher. In addition to including promotions in a Barker channel, other promotions, such as games, contests and lotteries, could also be provided.

In one embodiment, "Sponsored Events" would enable an Ad publisher to offer, for example, free viewing of an Event (e.g., an upcoming popular movie, even if published by another publisher) in exchange for viewing the Ad publisher's Ads. For example, a Content Object otherwise only available on the VOD network as a PPV movie might also be offered as a Sponsored Event from a particular Ad publisher, enabling users to view the Event for free, in exchange for submitting themselves to a promotion. In one embodiment, this promotion might include an on-screen logo, insertion of "infotainment" material, interactive questions for the user, links to further promotions or commerce opportunities, and perhaps an agreement to monitor user activity and submit to follow-up Ad viewing, mail, etc.

In addition to Sponsored Events, Ad publishers can also generated "Branded Channels" in which groups of Events (e.g., sharing some relationship in common with an Ad publisher's products or services) would be available from a single point of reference (e.g., channel logo) that also included Ads or perhaps skins as well.

In other embodiments, additional promotions are possible, including longer term Ad campaigns in which user could build up "points" over time by submitting to Ads and related promotional events (e.g., Ads for products or services in which they might otherwise be interested). Such points could then be redeemed for free viewing on the VOD network, as well as prizes, discounts, etc. Such promotions offer Ad publishers very targeted opportunities to promote their products and services, while enabling users to "choose" whether to submit to Ads and other promotions.

By integrating Ads into the VOD network as a type of Content Objects, a virtually unlimited number of possibilities exist to promote an Ad publisher's products and services in a highly targeted and efficient manner (including extensive targeted tracking and reporting capabilities), without interrupting users' ability to view Content Objects on the system. While users are provided opportunities to "opt out" of promotional activities, they are (more significantly) provided incentives to "opt in" to such activities, in exchange for free viewing, product and service discounts, and a host of other creative opportunities devised by Ad publishers for their highly targeted customers.

## Claims

1. A digital content delivery system comprising:
a plurality of network nodes, each of which is adapted to demand ordered playback of linear content objects;
a content pusher adapted to:
divide a linear content object into at least two groups of packages, wherein a first group of packages occurs prior in sequence to a second group of packages;
identify a first network node and a second network node in proximity to a third network node, wherein said third network node is one of network nodes most likely to subsequently pull said first group of packages and second group of packages;
push said first group of packages to said first network node; and
push said second group of packages to said second network node, and
a content puller adapted to:
in response to a request by said third network node for playback of the linear content object, search for the first group of packages and the second group of packages, identify locations of the first network node and the second network node and retrieve the first group of packages and the second group of packages for ordered playback of the first content object on the third network node,
whereby the digital content delivery system enables the third network node to begin playback of the linear content object prior to receiving the second group of packages.

2. A system according to claim 1, wherein the content pusher is further adapted to:
designate at least one of said first group of packages and said second group of packages to be free to be overwritten.

3. A system according to claim 1 or 2, wherein the content pusher is further adapted to:
distribute a designation message, indicating that at least one of said first group of packages and said second group of packages is free to be overwritten, to at least a corresponding one of said first network node and second network node.

4. A system according to claim 3, wherein the content pusher is further adapted to:
receiving an indication of a decreasing number of demands for play-back of the linear content object,
wherein the designation message is distributed responsive to the indication of a decreasing number of demands of playback of the linear content object.

5. A system according to any one of the preceding claims, wherein the content pusher is further adapted to identify network nodes to which content object packages are to be distributed.

6. A system according to any one of the previous claims, in which each network node in the digital content delivery system is associated with a trust level accessible by network nodes, said content pusher having an equal or higher trust level than that of the first and second network nodes.

7. A system according to any one of the preceding claims, wherein the content pusher is further adapted to distribute said groups of packages by means of propagated distribution.

8. A system according to any of the preceding claims, wherein the content pusher is urther adapted to create, for said content object, a tracking file, which is accessible by network nodes in the digital content delivery system.

9. A system according to claim 8, wherein said tracking file is stored on a network node to which one or more groups of packages of the content object has been distributed.

10. A system according to claim 8 or 9, wherein the tracking file correlates a content reference identity, CRID, which is associated with said content object, with network nodes on which at least one group of packages of the content object is stored.

11. A system according to any one of claims 8 to 10, wherein the content pusher is further adapted to create a tracking index correlating a CRID with network nodes storing a tracking file.

12. A system according to any one of the preceding claims, wherein the content pusher is further adapted to cause combination of groups of packages of a content object.

13. A method of publishing a linear content object in a digital content delivery system comprising a plurality of network nodes, each of which is adapted to demand ordered playback of linear content objects, the method comprising the steps of:
dividing, at a content pusher, a linear content object into at least two groups of packages, wherein a first group of packages occurs prior in sequence to a second group of packages;
identifying a first network node and a second network node in proximity to a third network node, wherein said third network node is one of network nodes most likely to subsequently pull said first group of packages and second group of packages;
pushing said first group of packages to said first network node;
pushing said second group of packages to said second network node;
in response to a request by said third network node for playback of the linear content object:
searching for the first group of packages and the second group of packages;
identifying locations of the first network node and the second network node; and
retrieving the first group of packages and the second group of packages for ordered playback of the first content object on the third network node,
whereby the digital content delivery system enables the third network node to begin playback of the linear content object prior to receiving the second group of packages.

14. A method according to claim 13, further comprising:
designating at least one of said first group of packages and said second group of packages to be free to be overwritten.

15. A method according to claim 14, further comprising:
distribute a designation message, indicating that at least one of said first group of packages and said second group of packages is free to be overwritten, to at least a corresponding one of said first network node and second network node.

16. A method according to claim 15, further adapted to:
receiving an indication of a decreasing number of demands for playback of the linear content object,
wherein the designation message is distributed responsive to the indication of a decreasing number of demands of playback of the linear content object.

17. A method according to any one of claims 13 to 16, further comprising the step of to identifying, at the content pusher, network nodes to which content object packages are to be distributed.

18. A method according to any of claims 13 to 17, wherein said distributing the first and/or second group of packages is performed by means of propagated distribution.

19. A method according to any one of claims 13 to 18, further comprising the step of creating, for said content object, a tracking file, which is accessible by network nodes in the digital content delivery system.

20. A method according to claim 19, further comprising the step of storing said tracking file on a network node to which one or more groups of packages of the content object has been distributed.

21. A method according to claim 19 or 20, wherein the tracking file correlates a content reference identity, CRID, which is associated with said content object, with network nodes on which at least one group of packages of the content object is stored.

22. A method according to any one of claims 19 to 21, further comprising the step of creating a tracking index correlating a CRID with network nodes storing a tracking file.

23. A method according to any one of claims 13 to 22, further comprising the step of combining groups of packages of a content object.

24. A method according to any one of claims 13 to 23, further comprising:
retrieving, responsive to a third network node having demanded playback of the linear content object, said groups of packages from the first and second network nodes for ordered playback on the third network node.

25. A computer program product comprising computer-readable instructions which, when executed on a general-purpose computer, perform the method set out in claim 13.

## Patentansprüche

1. Digitales Inhaltsbereitstellungssystem, umfassend:
eine Vielzahl von Netzwerkknoten, von denen jeder geeignet ist, um eine bestellte Wiedergabe von linearen Inhaltsobjekten anzufordern;
eine Inhalt-Push-Vorrichtung, die geeignet ist zum:
Unterteilen eines linearen Inhaltsobjekts in mindestens zwei Gruppen von Paketen, wobei eine erste Gruppe von Paketen früher als eine zweite Gruppe von Paketen in der Sequenz vorkommt,
Identifizieren eines ersten Netzwerkknotens und eines zweiten Netzwerkknotens in der Nähe eines dritten Netzwerkknotens, wobei der dritte Netzwerkknoten einer der Netzwerkknoten ist, die anschließend höchstwahrscheinlich die erste Gruppe von Paketen und die zweite Gruppe von Paketen pullen;
Pushen der ersten Gruppe von Paketen zu dem ersten Netzwerkknoten; und
Pushen der zweiten Gruppe von Paketen zu dem zweiten Netzwerkknoten, und
eine Inhalt-Pull-Vorrichtung, die geeignet ist zum:
als Reaktion auf eine Anfrage von dem dritten Netzwerkknoten für die Wiedergabe des linearen Inhaltsobjekts, Suchen nach der ersten Gruppe von Paketen und der zweiten Gruppe von Paketen, Identifizieren der Standorte des ersten Netzwerkknotens und des zweiten Netzwerkknotens und Abrufen der ersten Gruppe von Paketen und der zweiten Gruppe von Paketen für die bestellte Wiedergabe des ersten Inhaltsobjekts an dem dritten Netzwerkknoten,
wodurch es das digitale Inhaltsbereitstellungssystem dem dritten Netzwerkknoten ermöglicht, die Wiedergabe des linearen Inhaltsobjekts zu beginnen, bevor es die zweite Gruppe von Paketen empfängt.

2. System nach Anspruch 1, wobei die Inhalt-Push-Vorrichtung ferner geeignet ist zum:
Bezeichnen mindestens einer von der ersten Gruppe von Paketen und der zweiten Gruppe von Paketen, um zum Überschreiben frei zu sein.

3. System nach Anspruch 1 oder 2, wobei die Inhalt-Push-Vorrichtung ferner geeignet ist zum:
Verteilen einer Bezeichnungsnachricht, die angibt, dass mindestens eine von der ersten Gruppe von Paketen und der zweiten Gruppe von Paketen frei ist, um überschrieben zu werden, an mindestens einen entsprechenden von dem ersten Netzwerkknoten und dem zweiten Netzwerkknoten.

4. System nach Anspruch 3, wobei die Inhalt-Push-Vorrichtung ferner geeignet ist zum:
Empfangen einer Angabe einer abnehmenden Anzahl von Anforderungen zur Wiedergabe des linearen Inhaltsobjekts,
wobei die Bezeichnungsnachricht als Reaktion auf die Angabe einer abnehmenden Anzahl von Anforderungen der Wiedergabe des linearen Inhaltsobjekts verteilt wird.

5. System nach einem der vorhergehenden Ansprüche, wobei die Inhalt-Push-Vorrichtung ferner geeignet ist, um Netzwerkknoten zu identifizieren, an die Inhaltsobjektpakete zu verteilen sind.

6. System nach einem der vorhergehenden Ansprüche, wobei jeder Netzwerkknoten in dem digitalen Inhaltsbereitstellungssystem mit einer Vertrauensstufe verknüpft ist, die für Netzwerkknoten zugänglich ist, wobei die Inhalt-Push-Vorrichtung eine gleiche oder höhere Vertrauensstufe als die der ersten und zweiten Netzwerkknoten aufweist.

7. System nach einem der vorhergehenden Ansprüche, wobei die Inhalt-Push-Vorrichtung ferner geeignet ist, um die Gruppen von Paketen anhand einer propagierten Verteilung zu verteilen.

8. System nach einem der vorhergehenden Ansprüche, wobei die Inhalt-Push-Vorrichtung ferner geeignet ist, um für das Inhaltsobjekt eine Verfolgungsdatei zu erstellen, die für Netzwerkknoten in dem digitalen Inhaltsbereitstellungssystem zugänglich ist.

9. System nach Anspruch 8, wobei die Verfolgungsdatei an einem Netzwerkknoten gespeichert ist, an den eine oder mehrere Gruppen von Paketen des Inhaltsobjekts verteilt wurden.

10. System nach Anspruch 8 oder 9, wobei die Verfolgungsdatei eine Inhaltsreferenzkennung, CRID, die mit dem Inhaltsobjekt verknüpft ist, mit Netzwerkknoten korreliert, an denen mindestens eine Gruppe von Paketen des Inhaltsobjekts gespeichert ist.

11. System nach einem der Ansprüche 8 bis 10, wobei die Inhalt-Push-Vorrichtung ferner geeignet ist, um einen Verfolgungsindex zu erstellen, der eine CRID mit Netzwerkknoten, die eine Verfolgungsdatei speichern, korreliert.

12. System nach einem der vorhergehenden Ansprüche, wobei die Inhalt-Push-Vorrichtung ferner geeignet ist, um die Kombination von Gruppen von Paketen eines Inhaltsobjekts zu veranlassen.

13. Verfahren zum Veröffentlichen eines linearen Inhaltsobjekts in einem digitalen Inhaltsbereitstellungssystem, das eine Vielzahl von Netzwerkknoten umfasst, von denen jeder geeignet ist, um eine bestellte Wiedergabe von linearen Inhaltsobjekten anzufordern, wobei das Verfahren folgende Schritte umfasst:
Unterteilen an einer Inhalt-Push-Vorrichtung eines linearen Inhaltsobjekts in mindestens zwei Gruppen von Paketen, wobei eine erste Gruppe von Paketen früher als eine zweite Gruppe von Paketen in der Sequenz vorkommt;
Identifizieren eines ersten Netzwerkknotens und eines zweiten Netzwerkknotens in der Nähe eines dritten Netzwerkknotens, wobei der dritte Netzwerkknoten einer der Netzwerkknoten ist, die anschließend höchstwahrscheinlich die erste Gruppe von Paketen und die zweite Gruppe von Paketen pullen;
Pushen der ersten Gruppe von Paketen zu dem ersten Netzwerkknoten;
Pushen der zweiten Gruppe von Paketen zu dem zweiten Netzwerkknoten; und
als Reaktion auf eine Anfrage von dem dritten Netzwerkknoten für die Wiedergabe des linearen Inhaltsobjekts:
Suchen nach der ersten Gruppe von Paketen und der zweiten Gruppe von Paketen;
Identifizieren der Standorte des ersten Netzwerkknotens und des zweiten Netzwerkknotens; und
Abrufen der ersten Gruppe von Paketen und der zweiten Gruppe von Paketen für die bestellte Wiedergabe des ersten Inhaltsobjekts an dem dritten Netzwerkknoten,
wodurch es das digitale Inhaltsbereitstellungssystem dem dritten Netzwerkknoten ermöglicht, die Wiedergabe des linearen Inhaltsobjekts zu beginnen, bevor es die zweite Gruppe von Paketen empfängt.

14. Verfahren nach Anspruch 13, ferner umfassend:
- das Bezeichnen mindestens einer von der ersten Gruppe von Paketen und der zweiten Gruppe von Paketen, um zum Überschreiben frei zu sein.

15. Verfahren nach Anspruch 14, ferner umfassend:
das Verteilen einer Bezeichnungsnachricht, die angibt, dass mindestens eine von der ersten Gruppe von Paketen und der zweiten Gruppe von Paketen frei ist, um überschrieben zu werden, an mindestens einen entsprechenden von dem ersten Netzwerkknoten und dem zweiten Netzwerkknoten.

16. Verfahren nach Anspruch 15, ferner umfassend:
das Empfangen einer Angabe einer abnehmenden Anzahl von Anforderungen für die Wiedergabe des linearen Inhaltsobjekts, wobei die Bezeichnungsnachricht als Reaktion auf die Angabe einer abnehmenden Anzahl von Anforderungen der Wiedergabe des linearen Inhaltsobjekts verteilt wird.

17. Verfahren nach einem der Ansprüche 13 bis 16, ferner umfassend den Schritt des Identifizierens an der Inhalt-Push-Vorrichtung von Netzwerkknoten, an die Inhaltsobjektpakete zu verteilen sind.

18. Verfahren nach einem der Ansprüche 13 bis 17, wobei die Verteilung der ersten und/oder zweiten Gruppe von Paketen anhand einer propagierten Verteilung erfolgt.

19. Verfahren nach einem der Ansprüche 13 bis 18, ferner umfassend den Schritt des Erstellens für das Inhaltsobjekt einer Verfolgungsdatei, die für Netzwerkknoten in dem digitalen Inhaltsbereitstellungssystem zugänglich ist.

20. Verfahren nach Anspruch 19, ferner umfassend den Schritt des Speicherns der Verfolgungsdatei an einem Netzwerkknoten, an den eine oder mehrere Gruppen von Paketen des Inhaltobjekts verteilt wurden.

21. Verfahren nach Anspruch 19 oder 20, wobei die Verfolgungsdatei eine Inhaltsreferenzkennung, CRID, die mit dem Inhaltsobjekt verknüpft ist, mit Netzwerkknoten korreliert, an denen mindestens eine Gruppe von Paketen des Inhaltsobjekts gespeichert ist.

22. Verfahren nach einem der Ansprüche 19 bis 21, ferner umfassend den Schritt des Erstellens eines Verfolgungsindex, der eine CRID mit Netzwerkknoten, die eine Verfolgungsdatei speichern, korreliert.

23. Verfahren nach einem der Ansprüche 13 bis 22, ferner umfassend den Schritt des Kombinierens von Gruppen von Paketen eines Inhaltsobjekts.

24. Verfahren nach einem der Ansprüche 13 bis 23, ferner umfassend:
als Reaktion darauf, dass ein dritter Netzwerkknoten die Wiedergabe des linearen Inhaltsobjekts angefordert hat, das Abrufen der Gruppen von Paketen von den ersten und zweiten Netzwerkknoten zur bestellten Wiedergabe an dem dritten Netzwerkknoten.

25. Computerprogrammprodukt, das computerlesbare Anweisungen umfasst, die, wenn sie auf einem universellen Computer ausgeführt werden, das Verfahren nach Anspruch 13 ausführen.

## Revendications

1. Système de délivrance de contenu numérique, comprenant :
une pluralité de noeuds de réseau, chacun d'entre eux étant adapté pour demander la reproduction commandée d'objets de contenu linéaire ;
un distributeur de contenu adapté pour :
diviser un objet de contenu linéaire en au moins deux groupes de paquets, dans lequel un premier groupe de paquets a lieu plus tôt en séquence qu'un deuxième groupe de paquets ;
identifier un premier noeud de réseau et un deuxième noeud de réseau à proximité d'un troisième noeud de réseau, dans lequel ledit troisième noeud de réseau est l'un des noeuds de réseau le plus susceptible d'extraire de manière subséquente ledit premier groupe de paquets et ledit deuxième groupe de paquets ;
distribuer ledit premier groupe de paquets audit premier noeud de réseau ; et
distribuer ledit deuxième groupe de paquets audit deuxième noeud de réseau, et
un extracteur de contenu adapté pour :
en réponse à une demande par ledit troisième noeud de réseau pour une reproduction de l'objet de contenu linéaire, rechercher le premier groupe de paquets et le deuxième groupe de paquets, identifier des emplacements du premier noeud de réseau et du deuxième noeud de réseau et récupérer le premier groupe de paquets et le deuxième groupe de paquets pour une reproduction commandée du premier objet de contenu sur le troisième noeud de réseau,
moyennant quoi le système de délivrance de contenu numérique permet au troisième noeud de réseau de commencer la reproduction de l'objet de contenu linéaire avant de recevoir le deuxième groupe de paquets.

2. Système selon la revendication 1, dans lequel le distributeur de contenu est en outre adapté pour :
désigner au moins l'un d'entre ledit premier groupe de paquets et ledit deuxième groupe de paquets comme étant libre d'être écrasé.

3. Système selon la revendication 1 ou 2, dans lequel le distributeur de contenu est en outre adapté pour :
distribuer un message de désignation, indiquant qu'au moins l'un d'entre ledit premier groupe de paquets et ledit deuxième groupe de paquets est libre d'être écrasé, à l'attention d'au moins un noeud correspondant desdits premier noeud de réseau et deuxième noeud de réseau.

4. Système selon la revendication 3, dans lequel le distributeur de contenu est en outre adapté pour :
recevoir une indication d'un nombre décroissant de demandes de reproduction de l'objet de contenu linéaire,
dans lequel le message de désignation est distribué en réponse à l'indication d'un nombre décroissant de demandes de reprodcution de l'objet de contenu linéaire.

5. Système selon l'une quelconque des revendications précédentes, dans lequel le distributeur de contenu est en outre adapté pour identifier des noeuds de réseau auxquels des paquets d'objet de contenu doivent être distribués.

6. Système selon l'une quelconque des revendications précédentes, dans lequel chaque noeud de réseau dans le système de délivrance de contenu numérique est associé à un niveau de confiance accessible par des noeuds de réseau, ledit distributeur de contenu ayant un niveau de confiance supérieur ou égal à celui des premier et deuxième noeuds de réseau.

7. Système selon l'une quelconque des revendications précédentes, dans lequel le distributeur de contenu est en outre adapté pour distribuer lesdits groupes de paquets au moyen d'une distribution propagée.

8. Système selon l'une quelconque des revendications précédentes, dans lequel le distributeur de contenu est en outre adapté pour créer, pour ledit objet de contenu, un fichier de suivi qui est accessible par des noeuds de réseau dans le système de délivrance de contenu numérique.

9. Système selon la revendication 8, dans lequel ledit fichier de suivi est stocké sur un noeud de réseau auquel un ou plusieurs groupes de paquets de l'objet de contenu ont été distribués.

10. Système selon la revendication 8 ou 9, dans lequel le fichier de suivi met en corrélation une identité de référence de contenu, CRID, laquelle est associée audit objet de contenu, avec des noeuds de réseau sur lesquels au moins un groupe de paquets de l'objet de contenu est stocké.

11. Système selon l'une quelconque des revendications 8 à 10, dans lequel le distributeur de contenu est en outre adapté pour créer un indice de suivi mettant en corrélation une CRID avec des noeuds de réseau stockant un fichier de suivi.

12. Système selon l'une quelconque des revendications précédentes, dans lequel le distributeur de contenu est en outre adapté pour occasionner une combinaison de groupes de paquets d'un objet de contenu.

13. Procédé de publication d'un objet de contenu linéaire dans un système de délivrance de contenu numérique comprenant une pluralité de noeuds de réseau, chacun d'entre eux étant adapté pour demander une reproduction commandée d'objets de contenu linéaire, le procédé comprenant les étapes suivantes :
la division, au niveau d'un distributeur de contenu, d'un objet de contenu linéaire en au moins deux groupes de paquets, dans lequel un premier groupe de paquets a lieu plus tôt en séquence qu'un deuxième groupe de paquets ;
l'identification d'un premier noeud de réseau et d'un deuxième noeud de réseau à proximité d'un troisième noeud de réseau, dans lequel ledit troisième noeud de réseau est l'un des noeuds de réseau le plus susceptible d'extraire de manière subséquente lesdits premier groupe de paquets et deuxième groupe de paquets ;
la distribution dudit premier groupe de paquets audit premier noeud de réseau ;
la distribution dudit deuxième groupe de paquets audit deuxième noeud de réseau ;
en réponse à une demande par ledit troisième noeud de réseau pour une reproduction de l'objet de contenu linéaire :
la recherche du premier groupe de paquets et du deuxième groupe de paquets ;
l'identification d'emplacements du premier noeud de réseau et du deuxième noeud de réseau ; et
la récupération du premier groupe de paquets et du deuxième groupe de paquets pour une reproduction commandée du premier objet de contenu sur le troisième noeud de réseau,
moyennant quoi le système de délivrance de contenu numérique permet au troisième noeud de réseau de commencer la reproduction de l'objet de contenu linéaire avant de recevoir le deuxième groupe de paquets.

14. Procédé selon la revendication 13, comprenant en outre :
la désignation d'au moins l'un dudit premier groupe de paquets et dudit deuxième groupe de paquets comme étant libre d'être écrasé.

15. Procédé selon la revendication 14, comprenant en outre :
la distribution d'un message de désignation, indiquant qu'au moins l'un dudit premier groupe de paquets et dudit deuxième groupe de paquets est libre d'être écrasé, à l'attention d'un noeud correspondant desdits premier noeud de réseau et deuxième noeud de réseau.

16. Procédé selon la revendication 15, adapté en outre pour :
recevoir une indication d'un nombre décroissant de demandes de reproduction de l'objet de contenu linéiaire,
dans lequel le message de désignation est distribué en réponse à l'indication d'un nombre décroissant de demandes de reproduction de l'objet de contenu linéaire.

17. Procédé selon l'une quelconque des revendications 13 à 16, comprenant par ailleurs l'étape d'identification, au niveau du distributeur de contenu, de noeuds de réseau auxquels des paquets d'objet de contenu doivents être distribués.

18. Procédé selon l'une quelconque des revendications 13 à 17, dans lequel ladite distribution du premier et/ou deuxième groupe de paquets est réalisée au moyen d'une distribution propagée.

19. Procédé selon l'une quelconque des revendications 13 à 18, comprenant en outre l'étape de création, pour ledit objet de contenu, d'un fichier de suivi qui est accessible par des noeuds de réseau dans le système de délivrance de contenu numérique.

20. Procédé selon la revendication 19, comprenant en outre l'étape de stockage dudit fichier de suivi sur un noeud de réseau auquel un ou plusieurs groupes de paquets de l'objet de contenu ont été distribués.

21. Procédé selon la revendication 19 ou 20, dans lequel le fichier de suivi met en corrélation une identité de référence de contenu, CRID, laquelle est associée audit objet de contenu, avec des noeuds de réseau sur lesquels au moins un groupe de paquets de l'objet de contenu est stocké.

22. Procédé selon l'une quelconque des revendications 19 à 21, comprenant en outre l'étape de création d'un indice de suivi mettant en corrélation une CRID avec des noeuds de réseau stockant un fichier de suivi.

23. Procédé selon l'une quelconque des revendications 13 à 22, comprenant en outre l'étape de combinaison de groupes de paquets d'un objet de contenu.

24. Procédé selon l'une quelconque des revendications 13 à 23, comprenant en outre :
la récupération, en réponse à un troisième noeud de réseau ayant demandé une reproduction de l'objet de contenu linéaire, desdits groupes de paquets des premier et deuxième noeuds de réseau pour la reproduction commandée sur le troisième noeud de réseau.

25. Produit de programme informatique comprenant des instructions lisibles par informatique lequel, lorsqu'il est exécuté sur un ordinateur d'usage général, met en oeuvre le procédé exposé dans la revendication 13.
